(19) Europäisches Patentamt
European Patent Office
Office européen des brevets

(11) **EP 1 806 663 A1**

(12) **EUROPEAN PATENT APPLICATION**
published in accordance with Art. 158(3) EPC

(43) Date of publication:
**11.07.2007 Bulletin 2007/28**

(21) Application number: **05782121.7**

(22) Date of filing: **12.09.2005**

(51) Int Cl.:
***G06F 17/30*** *(2006.01)*

(86) International application number:
**PCT/JP2005/016785**

(87) International publication number:
**WO 2006/030751 (23.03.2006 Gazette 2006/12)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **14.09.2004 JP 2004266199**
**10.06.2005 JP 2005171755**

(71) Applicant: **Intellectual Property Bank Corp.**
**Tokyo 105-0001 (JP)**

(72) Inventors:
- **MASUYAMA, Hiroaki**
  **Osaka 5600054 (JP)**
- **SATO, Haru-Tada**
  **Minato-ku,**
  **Tokyo 1050001 (JP)**
- **ASADA, Makoto**
  **Minato-ku,**
  **Tokyo 1050001 (JP)**
- **HASUKO, Kazumi**
  **Minato-ku,**
  **Tokyo 1050001 (JP)**
- **HOTTA, Hideaki**
  **Minato-ku,**
  **Tokyo 1050001 (JP)**

(74) Representative: **Style, Kelda Camilla Karen et al**
**Page White & Farrer**
**Bedford House**
**John Street**
**London, WC1N 2BF (GB)**

# (54) DEVICE FOR DRAWING DOCUMENT CORRELATION DIAGRAM WHERE DOCUMENTS ARE ARRANGED IN TIME SERIES

(57) A document correlation diagram drawing device includes extracting means (20, 30) for extracting content data and time data of document elements (E) each including one or more documents, dendrogram drawing means (50) for drawing a dendrogram showing a correlation between documents on the basis of the content data of the document elements, clustering means (70) for cutting the dendrogram in accordance with a predetermined rule and extracting clusters, and intra-cluster arranging means (90) for determining an intra-cluster arrangement of the document elements belonging to each cluster on the basis of the time data of the document elements. Accordingly, a dendrogram adequately showing the chronological development in each field can be automatically drawn.

FIG. 2

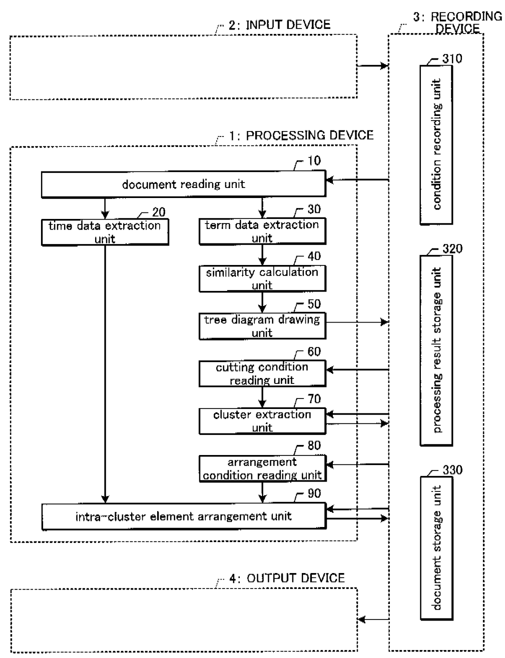


EP 1 806 663 A1

## Description

### TECHNICAL FIELD

The present invention relates to a technology for automatically drawing a document correlation diagram which shows correlations between documents and which reflects a time order of the documents and, more particularly, to a device, a method, and a program for drawing such a document correlation diagram.

### BACKGROUND ART

Technical documents such as patent documents and other documents are newly generated day by day and thus the number of documents becomes enormous. In order to show the correlations between the documents in an easy-to-understand format, it is desirable to clarify the chronological development for each related content. Hence, it is desirable to automatically draw a document correlation diagram in which the correlations in content between documents and the arrangement in the time order of the documents are combined.

Japanese Patent Laid Open Publication No. H11-53387, entitled "Document correlating method and system", discloses a method of correlating documents arranged in time series. More specifically, similarity between the documents based on word conformity between the documents is calculated and a similarity matrix is created based on this similarity by using time constraints. This similarity matrix is converted into an adjacency matrix where matrix elements having a similarity equal to or more than a predetermined threshold value are 1 and the remaining elements are 0. Based on the adjacency matrix, a directed graph constituting a document correlation diagram is created.

[Patent Document 1] Japanese Patent Laid Open Publication No. H11-53387, entitled "Document correlating method and system"

However, in the technology described in Japanese Patent Laid Open Publication No. H11-53387, a cumulative difference is produced when moving sequentially from a certain document to a similar document and then to another document similar to the similar document. There is the possibility, before long, to move to a completely different document. Further, there is also the possibility that a plurality of flows branching from a certain document will ultimately result in a single document and that the meaning of the branches will be unclear. Hence, in the technology described in Japanese Patent Laid Open Publication No. H11-53387, there is a problem in that the chronological development of each field cannot be suitably represented.

### DISCLOSURE OF THE INVENTION

An object of the invention is to provide a device, a method, and a program for drawing a document correlation diagram capable of suitably representing the chronological development of each field.

(1) In order to achieve the above object, according to an aspect of the invention, there is provided a document correlation diagram drawing device including: extraction means for extracting content data and time data of each of a plurality of document elements each including one or a plurality of documents; tree diagram drawing means for drawing a tree diagram showing correlations between the plurality of document elements on the basis of the content data of the document elements; clustering means for cutting the tree diagram on the basis of a predetermined rule and extracting clusters; and intra-cluster arrangement means for determining an intra-cluster arrangement of the document elements belonging to each cluster on the basis of the time data of the document elements.
According to the invention, by extracting the clusters using a tree diagram cutting operation and determining the intra-cluster arrangement on the basis of the time data, a tree diagram satisfactorily showing the chronological development for each field can be drawn.

(2) In the document correlation diagram drawing device, the predetermined rule on the basis of which the clustering means cuts the tree diagram is desirably derived by means of association rule analysis. By adopting the cutting rule derived by means of the association rule analysis, a (highly versatile) cutting rule applicable to a variety of tree diagrams can be used and a cutting operation using an ideal cutting value can be implemented with high reliability. Further, by increasing the number of teaching diagram cases, additional improvement in accuracy of the cutting rule can be easily attained.

(3) In the document correlation diagram drawing device, the predetermined rule is desirably derived on the basis of shape parameters of the tree diagram.
By adopting the cutting rule derived on the basis of the shape parameters of the tree diagram, a cutting rule with high reliability which is capable of determining a suitable cutting position based on the shape of the tree diagram can be used.
Furthermore, the cutting position can be determined by reading the shape parameters of the tree diagram to be analyzed and applying the association rule to the shape parameters. Hence, the determination of the cutting position can be completed with a small calculation load.
The number of times for cutting the tree diagram may be only once (fixed BC method; described later), and a parent cluster may be cut by re-deriving the cutting rule on the basis of the shape parameters of the parent cluster obtained by the first cutting operation to extract child clusters (variable BC method: described later). According to the variable BC method, even when a parent cluster with a large number of elements is generated, such a cluster can be further separated into child clusters.

(4) In the document correlation diagram drawing device, the predetermined rule may be derived on the basis of the number of vector dimensions of the document elements linked by each node of the tree diagram.
By adopting the cutting rule derived in consideration of the number of vector dimensions, more suitable branching can be obtained.
The number of vector dimensions of the document elements is desirably a value obtained by excluding the number of dimensions of vector components, for which the deviation between the plurality of document elements takes a value smaller than the value determined by a predetermined method, from the number of dimensions of the total vectors of the document elements. As a result, a more suitable cutting rule can be used.

(5) In the document correlation diagram drawing device, the clustering means desirably judges, for each node, whether the number of vector dimensions of the document elements linked by each node is equal to or more than a predetermined value and individually cuts the nodes having the number of vector dimensions equal to or more than the predetermined value on the basis of the judgment result. By judging the cutting criteria for each node and individually cutting the nodes on the basis of the judgment result, a more suitable branching operation can be performed.

(6) In the document correlation diagram drawing device, the clustering means desirably extracts parent clusters by cutting the tree diagram, creates a partial tree diagram showing the correlation between the document elements belonging to each parent cluster on the basis of the content data of the document elements belonging to each parent cluster, and extracts child clusters by cutting the created partial tree diagram on the basis of a predetermined rule.
After extracting the parent clusters, by extracting the child clusters from the partial tree diagram drawn by re-analyzing each parent cluster, error classification of the child clusters can be prevented and thus a suitable classification can be performed.

(7) In the document correlation diagram drawing device, the clustering means desirably removes a vector component, for which the deviation between the document elements belonging to each parent cluster takes a smaller value than the value determined by a predetermined method, from the document element vectors so as to create the partial tree diagram.
After extracting the parent cluster, by removing the vector component for which the deviation between the document elements belonging to each parent cluster takes a small value, the child clusters can be extracted from a viewpoint different from the viewpoint of extracting the parent clusters and a suitable classification can be performed.
The vector components of the document elements are, for example, an overall document IDF weighted TF value (TF*IDF(P) value: described later) for individual terms in the document. The judgment whether the deviation is small is performed by, for example, calculating the TF*IDF (P) value of the terms for all the document elements belonging to the parent cluster and judging whether the ratio of the standard deviation with respect to the average of the values between the document elements belonging to the parent cluster is within a predetermined range.

(8) In the document correlation diagram drawing device, the tree diagram drawing means desirably draws the tree diagram so that a link height between the document elements reflects the degree of similarity between the document elements; and the clustering means desirably extracts the clusters by cutting the tree diagram at two or more predetermined heights of the tree diagram.
By cutting the tree diagram at a plurality of cutting heights determined in advance, a complex calculation is not necessary for determining the cutting positions and a suitable branching operation can be easily performed.
With the connecting structure after the cutting, a branch structure is desirably determined on the basis of the number of branch lines cut at the cutting positions. As a result, it is possible to draw a document correlation diagram that reflects the hierarchical structure of the initial tree diagram while reasonably simplifying the hierarchical structure of the tree diagram. In addition, when the parent and child clusters are generated by cutting the tree diagram at the plurality of cutting positions, the child clusters can be generated without re-drawing the partial tree diagram of the document elements belonging to each parent cluster. Therefore, the parent and child clusters can be generated with a minimal calculation load.

(9) In the document correlation diagram drawing devices, the tree diagram drawing means desirably draws the tree diagram so that the link height between the document elements reflects the degree of similarity between the document elements; and the clustering means desirably extracts the clusters by cutting the tree diagram at a cutting position based on a function including, as a variable, one or both of the average value and the deviation value of the link heights between the document elements belonging to the tree diagram.
Since the cutting is performed on the basis of a function including, as a variable, one or both of the average value and the deviation value of the link heights, wide compatibility with different shapes of tree diagrams is also possible, complex calculation is not required, and a suitable branching can be easily performed.
The function including, as a variable, one or both of the average value and the deviation value of the link heights is, in particular, preferably a function including, as a variable, at least the average value and more preferably a function including, as variables, both the average value and the deviation value. For example, $<d>+\delta\sigma_d$ (where $-3\leq\delta\leq3$) is preferable using the average value $<d>$ and the standard deviation $\sigma_d$ of the link heights d. Incidentally, $m+\epsilon\sigma_d$ (where $-3\leq\epsilon\leq3$) may be considered by using the standard deviation $\sigma_d$ of the link heights d and the midpoint distance m (described later), for example, as the function including, as a variable, the deviation of the link heights d and not including, as a variable, the average value $<d>$ of the link heights d. Further, the deviation is not limited to the standard deviation $\sigma_d$ but may be an average deviation.

(10) In the document correlation diagram drawing devices, the tree diagram drawing means desirably draws the tree diagram so that the link height between the document elements reflects the degree of similarity between the document elements; and the clustering means desirably extracts parent clusters by cutting the tree diagram at a cutting position based on a function including, as a variable, one or both of the average value and the deviation value of the link heights between the document elements belonging to the tree diagram, and extracts child clusters by cutting each parent cluster at a cutting position based on a function including, as a variable, one or both of the average value and the deviation value of the link heights between the document elements belonging to each parent cluster.
The extraction of the parent clusters is performed on the basis of a function including, as a variable, one or both of the average value and the deviation value of the link heights between the document elements belonging to the tree diagram and the extraction of the child clusters is performed on the basis of a function including, as a variable, one or both of the average value and the deviation value of the link heights between the document elements belonging to each parent cluster. Therefore, even when the number of elements N is large ($N>20$, for example), suitable parent and child clusters can be obtained. Furthermore, since the extraction of clusters is performed on the basis of a function including, as a variable, one or both of the average value and the deviation value of the link heights between the document elements, even when the document elements belonging to the tree diagram have high similarities, wide compatibility with different shapes of tree diagrams is possible and suitable parent and child clusters can be obtained.
The function including, as a variable, one or both of the average value and the deviation value of the link heights is, in particular, preferably a function including, as a variable, at least the average value and more preferably a function including, as variables, both the average value and the deviation value. For example, $<d>+\delta\sigma_d$ (where

-3≤δ≤3) is preferable using the average value <d> and the standard deviation $\sigma_d$ of the link heights d. Incidentally, m+∈ $\sigma_d$ (where -3≤∈ ≤3) may be considered by using the standard deviation $\sigma_d$ of the link heights d and the midpoint distance m (described later), for example, as the function including, as a variable, the deviation of the link height d and not including, as a variable, the average value <d> of the link heights d. Further, the deviation is not limited to the standard deviation $\sigma_d$ but may be an average deviation.

(11) The document correlation diagram drawing device may further include distinctive indication adding means for adding an indication which distinguishes a document element with a specified attribute from other document elements on the basis of the content data of the document element.
As a result, it is possible to grasp the position of a document element with a specified attribute in terms of content and time with respect to other document elements.
Furthermore, the time axis is desirably displayed and the document elements are disposed in accordance with the time axis. As a result, it is possible to grasp the position of one's own company in terms of the development chain of the technical field.
In addition, as the content data used in the distinctive indication, data of an applicant of a patent document, for example, is used. As a result, it is possible to grasp where a patent document group of a certain applicant is positioned relative to those of other companies.
For example, when a relatively large number of similar documents are extracted on the basis of similarity and the similar document group is analyzed, it is possible to grasp the position of one's own company among the similar document group spanning relatively multifarious technical fields. Hence, in addition to the above effects, it is possible to discover similar technologies that one's own company has scarcely looked at, and the possibility of application to other technological fields of one's own company can be noticed. It is also possible to learn of the development in terms of content and time of other companies' technologies.
Furthermore, the similarities may be re-calculated with the aforementioned relatively large number of similar documents serving as the population and another similar document group of a relatively small number may be analyzed. In this case, a more detailed comparison is possible, in particular, on the competitive correlation with other companies in the further filtered technical field.

(12) In the document correlation diagram drawing device, the intra-cluster arrangement means desirably performs a comparison with respect to which of the linked document elements is older at each node in the tree diagram constituted by the document elements belonging to the cluster in the order from the lowermost node to the uppermost node by using the document element judged as being older at a lower node as a comparison target at an upper node, and records the comparison result; disposes the oldest element determined as the comparison result at the uppermost node on the head of the cluster; and draws branches from the oldest element by the number of document elements directly compared with the oldest element and connects the compared document elements to the branches so as to determine the arrangement.
As a result, when the intra-cluster arrangement is determined, a time-series arrangement can be reliably implemented and the intra-cluster branch structure can also be reflected to a certain extent.
If a document element directly compared with the oldest element (an opponent of the oldest element) has been compared with another document element at a lower node, the same process is desirably repeated with the opponent of the oldest element serving as an oldest element in each branch.

(13) In the document correlation diagram drawing device, the intra-cluster arrangement means desirably extracts the oldest element or elements in the cluster and disposes the oldest element or elements on the head of the cluster; forms time-series arrangements of the document elements other than the oldest element in each class used for defining the document elements; connects, among the time-series arrangements, a time-series arrangement, in which the oldest element exists in the same class, to the oldest element of the same class; and connects, among the time-series arrangements, a time-series arrangement, in which the oldest element does not exist in the same class, to a document element, selected from the cluster, of the highest degree of similarity to an oldest element within the time-series arrangement so as to determine the arrangement in the cluster.
Thus, even when contemporary elements are produced, the contemporary elements can be treated by adding the classification information when the element definition is class-based to determine the intra-cluster arrangement.

(14) The document correlation diagram drawing device desirably further include time slice classification means and time slice connection means, wherein the time slice classification means classifies the plurality of document elements into a plurality of time slices on the basis of the time data of the document elements; the tree diagram drawing means draws a tree diagram showing the correlation between the document elements belonging to each time slice; the clustering means extracts the clusters by cutting the tree diagram of each time slice on the basis of a predetermined rule; and the time slice connection means connects the clusters belonging to different time slices.

By firstly performing the cutting operation using the time slices in this manner, the correlation between the documents of the same period in different fields can be expressed as well as the correlation between the documents of the same field in different periods.

In the connections between the clusters rendered by the time slice connection means, the clusters with a high degree of similarity are desirably connected by calculating the degree of similarity between the clusters based on the distance between the groups, the distance between the oldest element and the shortest distance element in the temporally anterior group, or the like.

Further, the connections between the clusters rendered by the time slice connection means are desirably connections between the elements belonging to each cluster to be linked (between the oldest element in the temporally posterior group and the newest element in the temporally anterior group, between the oldest element in the temporally posterior group and the shortest distance element in the temporally anterior group, or the like).

(15) According to another aspect of the invention, there is provided a document correlation diagram drawing device including: extraction means for extracting content data and time data of each of a plurality of document elements each including one or a plurality of documents; time slice classification means for classifying the plurality of document elements into a plurality of time slices on the basis of the time data of the document elements; clustering means for extracting clusters from each time slice on the basis of the content data of the document elements belonging to each time slice; and time slice connection means for connecting the clusters belonging to different time slices.

Thus, a tree diagram suitably showing the chronological development for each field can be drawn by performing the cluster extraction and the time data-based classification.

In particular, since the time-slice cutting is initially performed, the correlation between the documents of the same period in different fields can be expressed as well as the correlation between the documents of the same field in different periods.

The extraction of clusters by the clustering means is desirably performed by means of a tree diagram cutting method but is not limited thereto. Cluster extraction using the known k-average method or the like may also be employed.

Further, the arrangement of the document elements in each cluster may be based on the time data of the document elements or may be a simple parallel arrangement, for example, which is not based on the time data.

In the connections between the clusters rendered by the time slice connection means, the clusters with a high degree of similarity are desirably connected by calculating the degree of similarity between the clusters based on the distance between the groups, the distance between the oldest element and the shortest distance element in the temporally anterior group, or the like.

Further, the connections between the clusters rendered by the time slice connection means are desirably connections between the elements belonging to the clusters to be linked (between the oldest element in the temporally posterior group and the newest element in the temporally anterior group, between the oldest element in the temporally posterior group and the shortest distance element in the temporally anterior group, or the like).

(16) Furthermore, according to other aspects of the invention, there are provided a document correlation diagram drawing method including the same steps as the method executed by the above-mentioned device and a document correlation diagram drawing program allowing a computer to execute the same processes as the processes executed by the above-mentioned device. The program may be recorded on a recording medium such as an FD, a CDROM, and a DVD and may be sent and received through a network.

According to the invention, it is possible to automatically draw a document correlation diagram suitably showing the chronological development of each field.

BRIEF DESCRIPTION OF THE DRAWINGS

Fig. 1 shows a hardware configuration of a document correlation diagram drawing device of a first embodiment of the invention;
Fig. 2 provides a detailed illustration of the configuration and function of the document correlation diagram drawing device particularly for a processing device 1 and a recording device 3;
Fig. 3 is a flowchart showing the operating procedure of the processing device 1 of the document correlation diagram drawing device;
Fig. 4 is an explanatory diagram of parameters used in the association rule analysis performed in a first embodiment (balance cutting method: BC method);
Fig. 5 is a flowchart that illustrates a cluster extraction process of the first embodiment;
Fig. 6 shows an example of a tree diagram arrangement in the cluster extraction process of the first embodiment;
Fig. 7 shows a specific example of the document correlation diagram drawn by a method of the first embodiment;
Fig. 8 is a flowchart that illustrates the cluster extraction process of a second embodiment (Codimensional Reduction method; CR method);
Fig. 9 shows an example of a tree diagram arrangement in the cluster extraction process of the second embodiment;
Fig. 10 shows a specific example of a document correlation diagram drawn by the method of the second embodiment;
Fig. 11 is a flowchart that illustrates the cluster extraction process of a third embodiment (cell division method; CD method);
Fig. 12 shows an example of a tree diagram arrangement in the cluster extraction process of the third embodiment;
Fig. 13 shows a specific example of the document correlation diagram drawn by a method of the third embodiment;
Fig. 14 shows another specific example of a document correlation diagram drawn by the method of the third embodiment;
Fig. 15 is a flowchart that illustrates the cluster extraction process of a fourth embodiment (stepwise cutting method; SC method);
Fig. 16 shows an example of a tree diagram arrangement in the cluster extraction process of the fourth embodiment;
Fig. 17 shows a specific example of a document correlation diagram (with standardization) drawn by a method of the fourth embodiment;
Fig. 18 shows a specific example of a document correlation diagram (without standardization) drawn by the method of the fourth embodiment;
Fig. 19 is a flowchart that illustrates the cluster extraction process of a fifth embodiment (Flexible Composite Method; FC method);
Fig. 20 shows a part of a tree diagram arrangement example in the cluster extraction process of the fifth embodiment;
Fig. 21 shows a specific example of a document correlation diagram (g is fixed) drawn by the fifth embodiment;
Fig. 22 shows a specific example of a document correlation diagram (g is unset) drawn by the method of the fifth embodiment;
Fig. 23 shows another specific example of a document correlation diagram drawn by the method of the fifth embodiment;
Fig. 24 shows a specific example of a document correlation diagram drawn by a method of a first modified example of the fifth embodiment;
Fig. 25 shows a process of drawing a document correlation diagram of a second modified example of the fifth embodiment;
Fig. 26 shows a specific example (3000 documents) of a document correlation diagram drawn by the method of the second modified example of the fifth embodiment;
Fig. 27 shows a specific example (300 documents) of a document correlation diagram drawn by the method of the second modified example of the fifth embodiment;
Fig. 28 shows a part of another display example of the document correlation diagram in Fig. 26;
Fig. 29 shows a part of yet another display example of the document correlation diagram in,Fig. 26;
Fig. 30 is a flowchart that illustrates an intra-cluster arrangement process of a sixth embodiment (pole and line arrangement; PLA);
Fig. 31 shows an example of a tree diagram arrangement in the intra-cluster arrangement process of the sixth embodiment;
Fig. 32 is a flowchart that illustrates the intra-cluster arrangement process of a seventh embodiment (group time ordering; GTO);
Fig. 33 shows a part of a tree diagram arrangement example in the intra-cluster arrangement process of the seventh embodiment;

Fig. 34 illustrates, in further detail, the configuration and function of the document correlation diagram drawing device of an eighth embodiment (time slice analysis; TSA);
Fig. 35 is a flowchart that illustrates the document correlation diagram drawing process of the eighth embodiment;
Fig. 36 shows an example of the tree diagram arrangement in the document correlation diagram drawing process of the eighth embodiment;
Fig. 37 shows a first specific example of the document correlation diagram drawn by the method of the eighth embodiment and the process of drawing the same;
Fig. 38 shows a second specific example of the document correlation diagram drawn by the method of the eighth embodiment and the process of drawing the same;
Fig. 39 shows a third specific example of the document correlation diagram drawn by the method of the eighth embodiment and the process of drawing the same; and
Fig. 40 shows a fourth specific example of the document correlation diagram drawn by the method of the eighth embodiment and the process of drawing the same.

DESCRIPTION OF REFERENCE MARKS

1 processing device
2 input device
3 recording device
4 output device
20 time data extraction unit (extraction means)
25 time slice classification unit (time slice classification means)
30 term data extraction unit (extraction means)
50 tree diagram drawing unit (tree diagram drawing means)
70 cluster extraction unit (cluster extraction means)
75 time slice connection unit (time slice connection means)
90 intra-cluster element arrangement unit (intra-cluster element arrangement means)
E document element
$\alpha$ cutting height
c node (link point)
n slice number
G group

BEST MODE FOR CARRYING OUT THE INVENTION

Embodiments of the invention will be described in detail hereinafter with reference to the drawings.

1. Explanation of Terminology

The terminology used in this specification will be described below.
Document element E or $E_1$ - $E_N$: Individual elements constituting an analysis target document set and serving as an analysis unit of the invention. The respective document elements include one or a plurality of documents. A document element group indicates a plurality of document elements.
Degree of similarity: Similarity or dissimilarity between a document element and a document element, between a document element and a document element group, or between a document element group and a document element group to be compared. This is calculated by expressing each of the compared document elements or document element groups in a vector, and by using functions of the product between vector components such as the cosine or the Tanimoto correlation between vectors (an example of similarity) or using functions of the difference between vector components such as the distance between vectors (an example of dissimilarity).
Tree diagram: A diagram in which the respective document elements constituting the analysis target document set are linked in a tree shape.
Dendrogram: A tree diagram drawn by hierarchical cluster analysis. Briefly explaining as to the drawing principle, firstly a linked body is drawn by combining document elements for which the dissimilarity is minimum (similarity is maximum) on the basis of the dissimilarity (similarity) between the respective document elements constituting the analysis target document set. The process of generating new linked bodies by combining a linked body with another document element or combining a linked body with another linked body is repeated in order starting with the least dissimilar document elements or linked bodies. Thus, the dendrogram is represented as a hierarchical structure.
Terms: Words taken from all or a part of a document. There are no special constraints on the methods for taking the words and conventionally known methods are acceptable.
In the case of Japanese language documents, for example, a method which adopts commercially available morphological analysis software, removes the particles and conjunctions, and extracts significant words or a method which holds a database of a thesaurus of terms beforehand and utilizes the terms obtained from the database is also acceptable.
In order to simplify the description below, symbols will be defined.
d: The height of the link position (link distance) of a document element and a document element, a document element group and a document element group, or a document element and a document element group in the tree diagram. When the similarity is defined as the $\cos\theta$ between document vectors (or document group vectors), $d=a-b\cos\theta$ ($a=b=1$, for example) is preferable.
$\alpha$: The height of the cutting position of the tree diagram.
$\alpha^*$: The cutting height of the tree diagram calculated by using $\langle d \rangle + \delta\sigma_d$ (where $-3 \le \delta \le 3$). Here, $\langle d \rangle$ is the average value of all the link heights d in the tree diagram and $\sigma_d$ is the standard deviation of all the link heights d in the tree diagram.
N: The number of document elements of the analysis target.
t: Time data for a document element. In the case of a patent document, for example, this can be any of the application date, the publication date, the registration date and the priority date. If the application numbers, publication numbers or the like of patent documents are in the order of application, publication or the like, the application numbers, publication numbers or the like can also be the time data. When a document element include a plurality of documents, an average value, a median value or the like of the time data of the respective documents constituting the document element is determined and taken as the time data of the document element.
TF(E): The appearance frequency (Term Frequency) in document element E of a term of the document element E.
DF(P): The document frequency of a term of document element E in overall documents P which serves as population. The document frequency refers to the number of hit documents when retrieval using a certain term is conducted from a plurality of documents. As for the overall documents P which serves as population, if the analysis is performed with respect to patent documents, for example, approximately 4,000,000 of all the patent publications or registered utility models published in the past ten years in Japan are used.
TF*IDF(P): The product of TF(E) and the logarithm of "the inverse of DF(P) $\times$ the total number of the overall documents which serves as population"; computed for each term in the document. Incidentally, when the document element E includes a plurality of documents, this is equivalent to GF(E)*IDF(P).
GF(E): The appearance frequency (Global Frequency) in document element E of a term of the respective documents constituting the document element E when the document element E includes a plurality of documents.
DF(E): The document frequency in document element E of a term of the respective documents constituting the document element E when the document element E includes a plurality of documents;
GFIDF(E): GF(E)/DF(E) when the document element E includes a plurality of documents; computed for each term of the documents.

2. Configuration of Document Correlation Diagram drawing device

Fig. 1 shows a hardware configuration of a document correlation diagram drawing device of an embodiment of the invention. As shown in Fig. 1, the document correlation diagram drawing device of this embodiment includes a processing device 1 having a CPU (central processing unit) and a memory (recording device), an input device 2 which is input means such as a keyboard (manual input device), a recording device 3 which is recording means for storing document data, conditions, and the process results of the processing device 1 and so forth, and an output device 4 which is output means for displaying or printing the created document correlation diagram.
Fig. 2 provides a detailed illustration of the configuration and functions of the document correlation diagram drawing device, in particular for the processing device 1 and the recording device 3.
The processing device 1 includes a document reading unit 10, a time data extraction unit 20, a term data extraction unit 30, a similarity calculation unit 40, a tree diagram drawing unit 50, a cutting condition reading unit 60, a cluster extraction unit 70, an arrangement condition reading unit 80, and an intra-cluster element arrangement unit 90.
The recording device 3 includes a condition recording unit 310, a process result storage unit 320, and a document storage unit 330 and so forth. The document storage unit 330 includes an external database and an internal database. 'External database' signifies a document database such as the PATOLIS database serviced by Patolis Corp. and the IPDL serviced by the Japanese Patent Office, for example. Alternatively, 'internal database' includes a database that stores, at one's own expense, data of a patent JP-ROM or the like, for example, which is being sold, a device for reading from media such as an FD (flexible disk) for storing documents, a CD (Compact Disk) ROM, an MO (Magneto-Optical disk), a DVD (Digital Video Disk), a device such as an OCR device (optical character reading device) that reads documents output to paper or the like or which have been written by hand and a device for converting data that have been read into electronic data such as text.

In Figs. 1 and 2, as the communication means for exchanging signals and data between the processing device 1, input device 2, recording device 3, and output device 4, these devices may be directly connected by means of a USB (Universal Serial Bus) cable or the like, data may be sent and received via a network such as a LAN (Local Area Network), or data may be exchanged via a medium such as an FD, CDROM, MO, or DVD that stores documents. Alternatively, a part or several of the above methods may be combined.

2-1. Details of Input Device 2

Next, the configuration and functions of the document correlation diagram drawing device will be described in detail by using Fig. 2.

The input device 2 accepts inputs such as document elements reading conditions, tree diagram drawing conditions, conditions for extracting clusters obtained by tree diagram cutting, and intra-cluster element arrangement conditions. These input conditions are sent to and stored in a condition recording unit 310 of the recording device 3.

2-2. Details of Processing Device 1

The document reading unit 10 reads a plurality of document elements constituting an analysis target from the document storage unit 330 of the recording device 3 in accordance with reading conditions input by the input device 2. The data of the document elements thus read are sent directly to the time data extraction unit 20 and term data extraction unit 30 and used in the process performed by the time data extraction unit 20 and term data extraction unit 30 or the data are sent to the process result storage unit 320 of the recording device 3 and stored therein.

Incidentally, the data sent from the document reading unit 10 to the time data extraction unit 20 and term data extraction unit 30 or to the process result storage unit 320 may be all data including time data and content data of the document elements thus read. Further, the data may also only be the bibliographical data (the application number or publication number or the like in the case of a patent document, for example) for specifying each of the document elements. In the latter case, the data of the respective document elements may be read once again from the document storage unit 330 on the basis of the bibliographical data when required in the subsequent process.

The time data extraction unit 20 extracts time data of the respective elements from the document element group read by the document reading unit 10. The extracted time data are sent directly to the intra-cluster element arrangement unit 90 and used in the process of the intra-cluster element arrangement unit 90 or these data are sent to and stored in the process result storage unit 320 of the recording device 3.

The term data extraction unit 30 extracts term data which are the content data of the respective document elements from the document element group read by the document reading unit 10. The term data extracted from the respective document elements are sent directly to the similarity calculation unit 40 and used in the process of the similarity calculation unit 40 or these data are sent to and stored in the process result storage unit 320 of the recording device 3.

The similarity calculation unit 40 calculates the similarity (or dissimilarity) between document elements based on the term data of the respective document elements extracted by the term data extraction unit 30. The calculation of the similarity is executed by retrieving a similarity calculation module for the similarity calculation from the condition recording unit 310 based on the conditions input by the input device 2. The calculated similarity is sent directly to the tree diagram drawing unit 50 and used in the process of the tree diagram drawing unit 50 or sent to and stored in the process result storage unit 320 of the recording device 3.

The tree diagram drawing unit 50 draws a tree diagram for the analysis target document elements on the basis of the similarity calculated by the similarity calculation unit 40 in accordance with the tree diagram drawing conditions input by the input device 2. The created tree diagram is sent to the process result storage unit 320 of the recording device 3 and stored therein. The tree diagram storage format can take the form of data of the coordinate values of the respective document elements disposed on a two-dimensional coordinate plane and the coordinate values of the start points and end points of individual lines linking these document elements, or data indicating combinations of the links of the respective document elements and the positions of the links, for example.

The cutting condition reading unit 60 reads the tree diagram cutting conditions input by the input device 2 and recorded in the condition recording unit 310 of the recording device 3. The cutting conditions thus read are then sent to the cluster extraction unit 70.

The cluster extraction unit 70 reads the tree diagram drawn by the tree diagram drawing unit 50 from the process result storage unit 320 of the recording device 3, cuts the tree diagram on the basis of cutting conditions read by the cutting condition reading unit 60, and extracts clusters. Data related to the extracted clusters is sent to and stored in the process result storage unit 320 of the recording device 3. The data of the clusters include information specifying the document elements belonging to each of the clusters and information on the links between the clusters, for example.

The arrangement condition reading unit 80 reads document element arrangement conditions in the clusters that have been input by the input device 2 and recorded in the condition recording unit 310 of the recording device 3. The arrangement conditions thus read are sent to the intra-cluster element arrangement unit 90.

The intra-cluster element arrangement unit 90 reads data of the clusters extracted by the cluster extraction unit 70 from the process result storage unit 320 of the recording device 3 and determines the arrangement of the document elements in the respective clusters on the basis of the document element arrangement conditions read by the arrangement condition reading unit 80. By determining the arrangement in the clusters, the document correlation diagram of the invention is completed. This document correlation diagram is sent to and stored in the process result storage unit 320 of the recording device 3 and output by the output device 4 if necessary.

2-3. Details of Recording Device 3

In the recording device 3 of Fig. 2, the condition recording unit 310 records information such as the conditions obtained by the input device 2 and sends the necessary data on the basis of a request of the processing device 1. The process result storage unit 320 stores the process results of the respective constituent elements of the processing device 1 and sends the necessary data on the basis of a request of the processing device 1. The document storage unit 330 stores and supplies the required document data obtained from the external database or internal database on the basis of the request from the input device 2 or the processing device 1.

2-4. Details of Output Device 4

The output device 4 in Fig. 2 outputs the document correlation diagram drawn by the intra-cluster element arrangement unit 90 of the processing device 1 and stored in the process result storage unit 320 of the recording device 3. Output formats include, for example, a display on a display device, printing on a print medium such as paper, or transmission to a computer device on a network via communication means.

3. Operation of Document Correlation Diagram-Drawing Device

3-1. Operation of Document Correlation Diagram Drawing Device

Fig. 3 is a flowchart showing the operating procedure of the processing device 1 of the document correlation diagram drawing device.

First, the document reading unit 10 reads a plurality of document elements constituting the analysis target from the document storage unit 330 of the recording device 3 in accordance with reading conditions input by the input device 2 (step S10). The document elements constituting the analysis target may, for example, be a document group selected in order of descending similarity (rising dissimilarity) with respect to a certain patent document, among the overall patent documents or may be a document group selected by means of a search according to a certain theme such as a specified keyword (international patent classification, technical term, applicant, inventor, and so forth). The document elements may also be selected by means of another method.

The time data extraction unit 20 then extracts time data of the respective elements from the document element group read in document reading step S10 (step S20).

The term data extraction unit 30 then extracts term data which are content data for the respective document elements from the document element group read in document reading step S10 (step S30). The term data of the document element can, for example, be represented by a multidimensional vector that takes, as each component, a function value of an appearance frequency in the document element of each of the terms extracted from the document element E (term frequency TF(E) - when the document element E include a plurality of documents, global frequency GP(E)). Incidentally, the content data of the document elements is not limited to term data. Data such as the international patent classification (IPC), the applicant, and the inventor can also be used.

The similarity calculation unit 40 then calculates the similarity (or dissimilarity) between document elements on the basis of the term data of the respective document elements extracted in the term data extraction step S30 (step S4D).

Similarity calculation using the vector space method as a specific example of similarity calculation will be described as follows. Now, let the individual document elements constituting the analysis target document set and each of which is an analysis unit be $E_1$ to $E_N$. As the result of the calculation with respect to these document elements $E_1$ to $E_N$, let the terms taken from the document element $E_1$ be 'red', 'blue', and 'yellow'. Further, let the terms taken from the document element $E_2$ be 'red' and 'white'. In this case, the term frequency $TF(E_1)$ in document element $E_1$, the term frequency $TF(E_2)$ in document element $E_2$, and the document frequency DF(P) in the overall documents P which serves as population (suppose that there are a total of 400 documents P) for each term are as follows:

Table 1

| | |
|---|---|
| Term and TF($E_1$) | Red(1), Blue(2), Yellow(4) |
| Term and TF($E_2$) | Red(2), White(1) |
| Term and DF(P) | Red(30), Blue(20), Yellow(45), White(13) |

The vector representation of the respective document elements is calculated by calculating TF*IDF(P) for the terms of each document. The results for the document element vectors $E_1$ and $E_2$ are as follows.

Table 2

| | Red | Blue | Yellow | White |
|---|---|---|---|---|
| $E_1$ | (1×ln(400/30)) | (2xln(400/20)) | (4×ln(400/45)) | 0 |
| $E_2$ | (2×ln(400/30)) | 0 | 0 | (1×ln(400/13)) |

If a function of the cosine (or distance) between these vectors $E_1$ and $E_2$ is taken, the similarity (or dissimilarity) between the document element vectors $E_1$ and $E_2$ is obtained. Incidentally, this signifies the fact that, as the value of the cosine (similarity) between the vectors increases, the degree of similarity rises and signifies the fact that, as the value of the distance (dissimilarity) between the vectors decreases, the degree of similarity rises.

As the component of the vector that represents each document element, the TF*IDF(P) of the terms, for example, is preferably used when the document elements E each include one document (micro element). Further, when each document element E includes a plurality of documents (macro elements), as the component of the document group vector representing the respective document elements, GFIDF(E) or GF(E)*IDF(P) is preferably used, for example. Another indicator such as a function value of the above values may also be used for the component of the document element vector.

Further, the method is not limited to the vector space method and the similarity may be defined by using another method.

The tree diagram drawing unit 50 then draws a tree diagram for the document elements which is the analysis target on the basis of the similarity calculated in the similarity calculation step S40 in accordance with the tree diagram drawing conditions input by the input device 2 (step S50). As the tree diagram, a dendrogram that reflects the dissimilarity (or similarity) between the document elements with the height of the link position (link distance) is preferably drawn. For example, let the link height d between the document elements be $d=1-\cos\theta$ ($\cos\theta$ is the cosine between the document element vectors or the cosine between the standardized document element vectors, for example). As a specific method of drawing the dendrogram, the known Ward method or the like is used.

The cutting condition reading unit 60 then reads the tree diagram cutting conditions that have been input by the input device 2 and recorded in the condition recording unit 310 of the recording device 3 (step S60).

The cluster extraction unit 70 then cuts the tree diagram drawn in the tree diagram drawing step S50 on the basis of the cutting conditions read in cutting condition reading step S60 and extracts clusters (step S70).

Thereafter, the arrangement condition reading unit 80 reads the document element arrangement conditions in the clusters input by the input device 2 and recorded in the condition recording unit 310 of the recording device 3 (step S80).

Thereafter, the intra-cluster element arrangement unit 90 determines the arrangement of the document elements in the clusters extracted in the cluster extraction step S70 on the basis of the document element arrangement conditions read in the arrangement condition reading step S80 (step S90). By determining the arrangement in the clusters, the document correlation diagram of the invention is completed. Incidentally, the arrangement conditions may be common to all the clusters. Accordingly, if step S80 is executed once for a certain cluster, this step does not have to be executed again for another cluster.

3-2. Effect of Document Correlation Diagram Drawing Device

According to this embodiment, a document correlation diagram that suitably represents the chronological development for each field can be drawn automatically. Hence, in the case of a patent document, it will be easy to draw a document correlation diagram useful in the discovery of an invention that has been the origin for the technology divergence, of basic patents and of related fields.

Furthermore, it is possible to show the fact that a certain technology has been branched from an unexpected technology or has been used for another technology 'together with the required time'. Therefore, it is possible to provide the hints for product development. Further, it is also possible to perform a trial calculation of the development costs from the ratio between the time period required until a new invention is conceived and the scale of the number of application cases.

Further, by drawing a document correlation diagram that targets a patent document group in a set (within the company, within another company, and within the industry), the patent structure in the set can be arranged and understood and put to use in a patent strategy.

Furthermore, by drawing a document correlation diagram that targets a patent document group extracted for respective industrial products, it is possible to analyze which product has appeared in connection with which technology. Further, by drawing a document correlation diagram that targets a patent document group extracted for respective inventors, it is also possible to analyze whose technology has been handed down to whom.

## 4. Cluster Extraction Examples

various drawing methods for the document correlation diagram using the document correlation diagram drawing device will be described specifically next. First, the first to fifth embodiments which are related to the process of cutting a tree diagram and extracting clusters (mainly corresponds to step S70 in Fig. 3) and then the sixth to eighth embodiments related to the process of determining the arrangement on the basis of time data (mainly corresponds to step S90 in Fig. 3 and so forth). The first to fifth embodiments related to the cluster extraction process and the sixth to eighth embodiments related to the time-series arrangement process can be optionally combined with one another.

Incidentally, names such as the 'balance cutting method (BC method)' and 'Codimensional Reduction method (CR method) which are assigned to the first to fifth embodiments and the sixth to eighth embodiments respectively are provided expediently in order to describe the invention.

### 4-1. First Embodiment (Balance cutting method; BC method)

The balance cutting method uses an association rule in the determination of the cutting position of the tree diagram. That is, a large number of existing teaching diagrams (tree diagrams for each of which an ideal cutting position is already known for drawing a document correlation diagram in which arrangement is based on time data) are analyzed in order to find a rule for selecting an ideal cutting position (association rule) as a conditional equation with respect to various tree diagram parameters. This analysis is known as an association rule analysis. The association rule thus found is applied to the analysis target tree diagram to determine the cutting position.

### 4-1-1. Description of Association rule Analysis

Let the probability that two events A and B will occur independently be P(A) and P(B). When the event B (consequence event) occurs after the event A (premise event) has occurred, the probability (conditional probability) is abbreviated as P(B|A), where P(A) is the 'premise probability', P(B) is the 'prior probability', and P(B|A) is the 'posterior probability'.

A set of two events selected according to the following standards (1) to (3) is called the 'association rule' A $\rightarrow$ B and signifies the regularity that 'if event A occurs, event B will occur (with a probability equal to or more than a certain value).

(1) the premise probability P(A) is high;
(2) the prior probability P(B) is low and the posterior probability P(B|A) is high; and
(3) hence, the premise probability P(A) and posterior probability P(B|A) are both high.

The fact that the probability is 'high' signifies the fact that a value equal to or more than a certain threshold value is taken. For example, the threshold value for the posterior probability P(B|A) is known as the 'confidence' and is set at about 60 to 70%, for example. Further, for example, the threshold value for the simultaneous probability (P(AnB) = P(A)P(B|A)) is known as 'support' and is set at about 60%, for example.

The algorithm for calculating the association rule is known. However, 4-1-2 and 4-1-3 will be described below for cases where this algorithm is applied to the derivation of an association rule for determining the tree diagram cutting position of the invention.

### 4-1-2. Reading of Parameters

Fig. 4 is an explanatory diagram of the parameters used in the association rule analysis performed in the first embodiment. In order to derive the association rule, the parameters of the teaching diagrams are first read. For example, the following parameters are read from the geometrical shapes of the teaching diagrams. Incidentally, when the association rule is applied to the analysis target tree diagram, the same parameters must also be read for the analysis target tree diagram.

Midpoint distance m: Let the height of the two-body link (initial link) be $h_0$ and, as to the upper level link than the two-body link, the height difference $\Delta h_i$ between the upper level link and the lower level link be $\Delta h_i = h_i - h_{(i-1)}$, where the suffix i is the link level (a number obtained by letting the initial link be 0 and adding 1 for each level upward). When there are p number of $\Delta h_i$ values in the whole tree diagram, which satisfies $\Delta h_1/h_0 \geq 1$ or $\Delta h_j/\Delta h_{(j-1)} \geq 2$ (where j is a number equal to or more than 2 among the link levels i), the midpoint distance is defined as the average value $m = (l/p) \times \Sigma m_k$ of midpoint values $m_k$ (k=1, 2, ..., p) of the upper-end and lower-end that determine the respective $\Delta h_i$.

Base $<h_0>$: The average value of the heights $h_0$ of the two-body links. When there are q number of two-body links in the whole tree diagram,

$$<h_0> = (1/q) \times \Sigma h_0.$$

Final link height H: Final link distance
Tree diagram area S (not shown): Final link height H $\times$ the total number of elements N
Cluster area s (not shown): Sum of initial link heights of all elements

Cutting height candidates $\alpha_0$, $\alpha_1$, and $\alpha_2$ (not shown) :

$$\alpha_0 = m$$

$$\alpha_1 = m - <h_0>/2$$

$$\alpha_2 = (\Sigma m_k + \Sigma h_0)/(p+q)$$

Incidentally, as the parameters used in the association rule analysis, various parameters other than those mentioned above such as a function that includes, as a variable, one or both of the average value and the deviation of the link height d, for example, can also be used. For example, instead of the midpoint distance m, the link height average value $<d>$ can also be used and, instead of the base $<h_0>$, $<d>-\sigma_d$ or $<d>-2\sigma_d$ can also be used by using the average value $<d>$ and the standard deviation $\sigma_d$ of the link height.
Further, as the cutting height candidate, $\alpha_3=<d>$ or $\alpha_3=<d>+0.5\sigma_d$ may also be added.

4-1-3. Example of Association Rule Derivation

As an example of the derivation of the association rule, an example derived based on 28 teaching diagrams will now be described.
Here, since the number of teaching diagrams is relatively small, support (the threshold value for the simultaneous probability $P(A \cap B) = P(A)P(B|A)$) is not considered. Instead, 'the number of occurrences of the consequence event B after the occurrence of premise event A /the number of occurrences of the event B prior to filtering by the occurrence of the premise event A' is termed 'keeping rate' and $P(B|A)-P(B))/P(B)$ is termed 'growth rate' of the probability, and the foregoing are used in the judgment. The keeping rate and the growth rate can also express the smallness of the decrease in the posterior probability with respect to the prior probability.
As the priority of the judgment, as a general rule, the confidence (the threshold value = 65% for the posterior probability P(BIA)) is firstly used, the keeping rate (60%) is secondly used, and the growth rate (60%) is thirdly used.

(i) Detection of Trivial Solution
Among the three cutting height candidates $\alpha_0$, $\alpha_1$ and $\alpha_2$, $\alpha_0$ gave the best value most frequently and 13 cases of the total of 28 teaching diagrams fell under the best value.
When cases where $\alpha_0$ gave an optimum solution (the best value or the next best value) were included, 20 cases of the total of 28 teaching diagrams fell under the optimum solution. Therefore, $\alpha_0$ was taken as the first cutting height candidate.

(ii) Threshold value detection of trivial solution (detection of premise condition)

When the cutting height candidates are applied to teaching diagrams with the midpoint distance m<0.9 (there were 12 cases in the 28 teaching diagrams), $\alpha_0$ gave the optimum solution for all the 12 teaching diagrams (100%) (confidence was 100%).

Hence, the following conditional Equation was derived:

$$m<0.9 \rightarrow \alpha=\alpha_0.$$

(iii) Rule detection under remaining premise conditions

Analysis was performed on the remaining teaching diagrams among the teaching diagrams for which m≥0.9 (16 teaching diagrams). The fact that the midpoint distance m is large means that the height of the tree diagram is high. Therefore, the heights of the total of 28 teaching diagrams were checked and the following rule was found:

$$s/S \geq 0.345 \text{ (a total of 18 cases)} \rightarrow <h_0>/m \geq 0.5 \text{ (17 cases of the total) [Equation 1]}$$

Here, the 'cluster area s / tree diagram area S' is defined as the cluster density and the 'base $<h_0>$ / midpoint distance m' is defined as the base ratio. That is, the rule 'a high cluster density→ a high base ratio' was obtained with a probability of 94%.

(iii-a) Cases where s/S≥0.345 & $<h_0>/m\geq0.5$

Therefore, for the 17 teaching diagrams, the probabilities of an optimum solution before filtering (the 17 teaching diagrams) and after filtering with the condition m≥0.9 (there were 11 teaching diagrams) are compared as follows:

Table 3

| | Prior probability | Posterior probability |
|---|---|---|
| $\alpha_0$ | 10 teaching diagrams /17 (59%) | → 5 teaching diagrams /11 (45%) |
| $\alpha_1$ | 3 teaching diagrams /17 (18%) | → 4 teaching diagrams /11 (36%) |
| $\alpha_2$ | 12 teaching diagrams /17 (71%) | → 9 teaching diagrams /11 (82%) |

The cutting height candidate for which the posterior probability was high and the fluctuations in the number of teaching diagrams was small was $\alpha_2$ (confidence 82%, keeping rate 75%). Hence, the following conditional equation was derived.

$$m\geq0.9 \ \& \ s/S\geq0.345 \ \& \ <h_0>/m\geq0.5 \rightarrow \alpha=\alpha_2$$

The condition s/S and condition $<h_0>/m$ were crossed in order to avoid an erroneous judgment.

(iii-b) Cases where m/H<0.55

Next, although a case where m≥0.9 and s/S<0.345 or $<h_0>/m<0.5$ should be considered, the number of teaching diagrams was 5 which was a small number. Therefore, the teaching diagrams were re-assessed with a different condition branching and the 16 teaching diagrams for which m≥0.9 were re-analyzed. The object of the re-analysis is to derive a conditional equation for teaching diagrams of low density or low height. Hence, condition branching that takes the height and density may be considered.

As to the height, the 'midpoint distance m / final link height H' is defined as high-rise degree and can be classified as m/H≥0.55 (a high-rise type) and as m/H<0.55 (a lower group type).

As for the density, there is a strong correlation between the cluster density s/S and the base ratio $<h_0>/m$

according to Equation 1. Therefore, a conditional equation corresponding to the magnitude of the base ratio $<h_0>/m$ was first sought. Among the 28 teaching diagrams, the probability of an optimum solution before filtering (28 teaching diagrams) and after filtering with the condition $m \geq 0.9$ (16 teaching diagrams) are compared as follows:

In the case of $m/H \geq 0.55$ (the high-rise type):
Where the base ratio was $<h_0>/m<0.4$, the prior probability was zero;
Where the base ratio was $<h_0>/m \geq 0.4$, a large change between the prior and posterior probabilities was not observed and, consequently, a significant rule was not derived.

In the case of $m/H<0.55$ (lower group type):
First, when the base ratio was $<h_0>/m<0.4$, the following results were obtained:

Table 4

| | Prior probability | Posterior probability |
|---|---|---|
| $\alpha_0$ | 8 teaching diagrams /8(100%) | → 3 teaching diagrams /3(100%) |
| $\alpha_1$ | 5 teaching diagrams /8 (63%) | → 1 teaching diagrams /3 (33%) |
| $\alpha_2$ | 3 teaching diagrams /8 (38%) | → 0 teaching diagrams /3 (0%) |

Hence, $\alpha_0$ can be adopted (confidence 100%) and the following conditional equation can be derived.

$$m \geq 0.9 \ \& \ m/H<0.55 \ \& \ <h_0>/m<0.4 \rightarrow \alpha=\alpha_0$$

On the other hand, when the base ratio was $<h_0>/m \geq 0.4$, the following results were obtained:

Table 5

| | Prior probability | Posterior probability |
|---|---|---|
| $\alpha_0$ | 6 teaching diagrams /8 (75%) | → 0 teaching diagrams /3 (0%) |
| $\alpha_1$ | 2 teaching diagrams /8 (25%) | → 2 teaching diagrams /3 (67%) |
| $\alpha_2$ | 5 teaching diagrams /8 (63%) | → 3 teaching diagrams /3(100%) |

Although the posterior probability increases for $\alpha_1$ and $\alpha_2$, when the keeping rate and the growth rate are compared, $\alpha_1$ can be adopted (confidence 67%, keeping rate 100%, growth rate 168%), and the following conditional equation can be derived.

$$m \geq 0.9 \ \& \ m/H<0.55 \ \& \ <h_0>/m \geq 0.4 \rightarrow \alpha=\alpha_1$$

(iii-c) Cases where $m/H \geq 0.55$
Thereafter, an analysis was performed for cases where $m \geq 0.9$ and $m/H \geq 0.55$ (high-rise type) that had not been determined in (iii-b).
Here, in accordance with the cluster density s/S, the probability of an optimum solution prior to filtering and after filtering with the condition $m \geq 0.9$ was compared.
First, when the cluster density was $s/S<0.4$, the following results were obtained.

Table 6

| | Prior probability | Posterior probability |
|---|---|---|
| $\alpha_0$ | 3 teaching diagrams /4 (75%) | → 2 teaching diagrams /3 (67%) |
| $\alpha_1$ | 1 teaching diagrams /4 (25%) | → 1 teaching diagrams /3 (33%) |
| $\alpha_2$ | 2 teaching diagrams /4 (50%) | → 2 teaching diagrams /3 (67%) |

The cutting height candidates with a high posterior probability (confidence) were $\alpha_0$ and $\alpha_2$. However, there was not a significant difference between them. Therefore, $\alpha_0$ which had a high prior probability can be adopted, and the following conditional equation can be derived.

$$m \geq 0.9 \ \& \ m/H \geq 0.55 \ \& \ s/S < 0.4 \rightarrow \alpha = \alpha_0$$

Thereafter, when the cluster density was s/S≥0.4, the following results were obtained:

Table 7

| | Prior probability | Posterior probability |
|---|---|---|
| $\alpha_0$ | 3 teaching diagrams /8 (38%) | → 2 teaching diagrams /7 (29%) |
| $\alpha_1$ | 3 teaching diagrams /8 (38%) | → 2 teaching diagrams /7 (29%) |
| $\alpha_2$ | 7 teaching diagrams /8 (88%) | → 6 teaching diagrams /7 (86%) |

Therefore, $\alpha_2$ which has a high posterior probability can be adopted (confidence 86% and keeping rate 86%) and the following conditional equation can be derived.

$$m \geq 0.9 \ \& \ m/H \geq 0.55 \ \& \ s/S \geq 0.4 \rightarrow \alpha = \alpha_2$$

Incidentally, when an analysis in accordance with the cluster density s/S was also performed for cases where m≥0.9 &m/H<0.55 (lower group type),
Where the cluster density was s/S<0.4, a large change in the prior and posterior probabilities was not observed;
Where the cluster density was s/S≥0.4, the posterior probability was zero and, consequently, a significant rule cannot be derived.
(iv) Summary
In summary of the above, the following equations can be derived as rules for selecting the optimum cutting height $\alpha$.

$$\alpha = F_\theta \ (m, \ 0.9; \ \alpha_0, \ F_\theta \ (\langle h_0 \rangle/m, \ 0.5; \ A, \ B))$$

$$B = F_\theta \ (s/S, \ 0.345; \ A, \ \alpha_0)$$

$$A = F_\theta \ (m/H, \ 0.4; \ F_\theta \ (\langle h_0 \rangle/m, \ 0.4; \ \alpha_0, \ \alpha_1), \ F_\theta \ (s/S, \ 0.4; \ \alpha_0, \ \alpha_2))$$

Where, $F_\theta$ (x, $\gamma$; y, z) = $\theta$(x<$\gamma$)y + $\theta$(x≥$\gamma$)z
Incidentally, $\theta$(X) is a function that returns 1 when proposition X is true and otherwise returns 0. That is, $F_\theta$ (x, $\gamma$; y, z) is a function that returns y when x<$\gamma$ and z when x≥$\gamma$.
The association rule thus derived is stored in the condition recording unit 310 of the recording device 3 in accordance with the inputs and so forth from the input device 2. Incidentally, the association rule depends on the teaching diagrams. Therefore, if the teaching diagrams are updated in accordance with, for example, the number of elements of the analysis target tree diagram so that association rule analysis is performed once again, an association rule that differs from the former association rule can be obtained.

4-1-4. Cluster Extraction Procedure

Next, a specific procedure that cuts a tree diagram by using the cutting position determined using the association rule derived by means of the above method and extracts clusters will be described.
Fig. 5 is a flowchart that illustrates the cluster extraction process of the first embodiment (balance cutting method; BC method). This flowchart shows the procedure of the first embodiment in more detail than Fig. 3. In the same steps as Fig. 3, 100 is added to the step numbers of Fig. 3 and the last two digits have the same step numbers as those of Fig. 3; hence, a description that repeats the description of Fig. 3 may be omitted.

Fig. 6 shows an example of a tree diagram arrangement in the cluster extraction process of the first embodiment which complements Fig. 5. $E_1$ to $E_{11}$ represent document elements and, here, for the sake of expediency, a smaller suffix number is attached to an older document element with an earlier time t.

First, the document reading unit 10 of the processing device 1 reads a plurality of document elements which are the analysis target from the document storage unit 330 of the recording device 3 (step S110).

Thereafter, the time data extraction unit 20 of the processing device 1 extracts time data from the respective document elements of the document set which is the analysis target (step S120).

Thereafter, the term data extraction unit 30 of the processing device 1 extracts term data from the respective document elements of the document set which is the analysis target (step S130). Thereupon, as will be described later, the term data of the oldest element (oldest document element) $E_1$ in the document set is unnecessary. Hence, only term data other than that of the oldest element is preferably extracted based on the time data extracted in step S120.

Subsequently, the similarity calculation unit 40 of the processing device I calculates the similarity between the respective document elements (step S140). Here also, only the similarity between the elements other than the oldest document element is calculated as mentioned above.

Thereafter, the tree diagram drawing unit 50 of the processing device 1 draws a tree diagram which includes respective document elements of a document set which is the analysis target (step S150: Fig. 6A). Thereupon, the oldest element $E_1$ is disposed in the head of the tree diagram irrespective of similarities to the other elements.

Thereafter, the cutting condition reading unit 60 of the processing device 1 performs reading of the cutting conditions (step S160). Here, the tree diagram parameter reading conditions and the association rule derived in the association rule analysis are read.

The cluster extraction unit 70 then performs cluster extraction. First, the parameters of the tree diagram are read in accordance with the parameter reading conditions thus read (step S171). Thereafter, the cluster extraction unit 70 applies the above read association rule to these parameters and determines the cutting height $\alpha$ of the tree diagram (step S172: Fig. 6B). The tree diagram is cut in accordance with the cutting height thus determined and clusters are extracted (step S173). Here, branch lines of the same number as the number of extracted clusters are drawn from the header element $E_1$ (See Fig. 6C).

The following process is then performed for each extracted cluster.

First, the number of document elements of the respective clusters is counted (step S174). With respect to each cluster exceeding three document elements, the oldest element $E_7$, of the cluster is removed and disposed in the head of the cluster and a partial tree diagram of the remaining intra-cluster elements $E_8$ to $E_{11}$ is drawn (step S175: Fig. 6C). The partial tree diagram drawn here has substantially the same structure as that of the part corresponding to the clusters in the tree diagram drawn first in step S150 other than the fact that the oldest element $E_7$ of the cluster has been removed. However, as the oldest element $E_7$ of the cluster has been removed, the distance between the element groups in the cluster shall change. Hence, if an analysis based on the content data of the remaining intra-cluster elements $E_8$ to $E_{11}$ is performed once again, there is also the possibility of a structure slightly different from the tree diagram drawn in step S150. For example, when a tree diagram is drawn by using the distance between centers or the average of all the distances as the distance (dissimilarity) between a document element and a document element group or the distance (dissimilarity) between a document element group and a document element group, the distance between element $E_9$ and element $E_9$ in Fig. 6C differs from the distance between elements $E_7$ and $E_8$ and element $E_9$ in Fig. 6B. Therefore, this part can adopt a different structure.

Regarding the clusters in which the partial tree diagram has been drawn, the process returns to step S171, whereupon the parameters of the partial tree diagram are read and, in step S172, the cutting height $\alpha$ is determined (Fig. 6D).

The parameters of the partial tree diagram will have different values from the parameters of the tree diagram first drawn in step S150. Therefore, the cutting height $\alpha$ will change even when the same association rule is applied. Cutting at the new cutting height is executed in step S173 and child clusters are extracted. Incidentally, as an association rule applied to the partial tree diagram, another association rule is preferably employed rather than re-using the association rule applied to the first tree diagram. This association rule is preferably an association rule derived by performing the association rule analysis based on teaching diagrams with the same number of elements as the number of document elements contained in the (partial) tree diagram which is the application target.

On the other hand, among the extracted clusters, with respect to each cluster for which the number of document elements is three or less, the intra-cluster element arrangement unit 90 determines the arrangement of the document elements in the clusters based on the time data of the respective document elements in accordance with the arrangement conditions read by the arrangement condition reading unit 80 (step S180) (step S190: Fig. 6E). The arrangement conditions in this case are preferably arranged in a row in order of age based on the time data, for example. However, other arrangements such as the arrangements of the sixth to eighth embodiments which will be described later are also possible.

In the above-described method, a different cutting height $\alpha$ is applied at each time the process returns to step S171. Therefore, this method is termed a 'variable BC method'. In contrast, as indicated by the broken line in Fig. 5, it is possible to perform the arrangement based on time data by moving to step S180 immediately after step S173 without counting the number of intra-cluster document elements. This is termed the 'fixed BC method'.

Fig. 7 shows a specific example of a document correlation diagram drawn by means of the method of the first embodiment. The respective Laid Open publications of seventeen Japanese patent applications related to refined sake extracted by means of a keyword search are analyzed as document elements and the patent application number and the title of the invention are added for the respective document elements to the document correlation diagram. In this example, the number of the document elements was no more than the threshold value (3) in every cluster generated by the first cut. Therefore, the same output result was achieved for the variable BC method and the fixed BC method.

4-1-5. Effect of First Embodiment

According to the first embodiment, by extracting clusters using tree diagram cutting and determining the intra-cluster arrangement on the basis of time data, a tree diagram that suitably represents the chronological development for each field can be drawn.

In particular, since the cutting rule of the tree diagram is derived by means of the association rule analysis, a (highly versatile) cutting rule that can be applied to a variety of tree diagrams can be employed and cutting with an ideal cutting value can be executed highly reliably. Furthermore, by increasing the number of teaching diagram cases, additional improvements in the cutting rule accuracy can be easily achieved.

Furthermore, since the association rule is derived on the basis of the shape parameters of the teaching diagrams, a highly reliable cutting rule capable of determining a suitable cutting position based on the shape of the tree diagram can be used.

In addition, since the cutting position can be determined by reading the shape parameters of the analysis target tree diagram and applying the association rule to the shape parameters, a determination of the cutting position can be completed with a small calculation load.

4-2. Second Embodiment (Codimensional Reduction method; CR method)

With the Codimensional Reduction method, an association rule is used in the determination of the cutting position of the tree diagram as per the first embodiment (Balance Cutting method; BC method). In the first embodiment, parameters that were obtained from the geometric shape of the tree diagram were used and the link height between the elements was used as the cutting position. However, in the second embodiment, the cutting position is determined by using a dimension showing a difference between the document element vectors.

A basic description of the association rule analysis was already performed in the first embodiment and is therefore omitted here. First, the differences with respect to the first embodiment will be described for the parameters used in the association rule analysis of the second embodiment.

4-2-1. Description of Parameters

When a node (link point) c is provided in a tree diagram, the link level is represented by means of an integer i (c). Let the initial pair link have a link level i(c)=0 and the link of one level above this link have a link level of i(c)=1. Incidentally, the link levels i(c) are shown for each of the nodes $c_1$ to $c_7$ in Fig. 9A (explained later).

For a certain node c of link level i(c), let the remaining dimension obtained by subtracting the number of terms for which the term frequency TF(E) takes the same value between the document elements from the number of terms (dimension) $D_c$ of the sum of sets of the terms in the document elements linked by the node c (all the document elements belonging to a partial tree diagram which has node c at the top thereof) be R(i;c) (hereinafter called codimension).

Incidentally, $D_c$ takes a value no more than the number of terms (dimension) D of the sum of sets of the terms in all the elements of the document correlation diagram. On the other hand, the term frequencies TF(E) of terms not contained in the document elements linked by node c (0 are included in the respective document elements E) can be considered as all taking the same value 0 in the document elements linked by node c. In this case, the codimension R may be defined as the dimension obtained by subtracting the number of those terms which take the same term frequency (including 0) between the document elements linked by the node c from the number of terms (dimension) D of the sum of sets of the terms in all the elements in the tree diagram.

The size of the dimension $D_c$ or D of the sum of sets of the terms is closely related to the size of the variation between the document elements belonging to the whole tree diagram or to the partial tree diagram below this node. However, even when the dimension $D_c$ or D of the sum of sets of the terms increases, the fact that there is a large number of terms with a common term frequency TF(E) (the codimension R is small) signifies that the difference between the document elements is not particularly large. Conversely, when the dimension $D_c$ or D of the sum of sets of the terms increases, the fact that there is a small number of terms with a common term frequency TF(E) (the codimension R is large) signifies that the difference between the document elements is large. The second embodiment determines the tree diagram cutting position by utilizing this property. If the parameters used in the first embodiment (balance cutting method; BC method) are geometric parameters related to the shape of the tree diagram, the codimension is said to be a non-geometric parameter.

In the second embodiment, nodes c for which the codimension R exceeds a certain value (critical dimension $D_\alpha$) are all cut. As the parameters for finding this critical dimension, geometric parameters such as the midpoint distance m, base $<h_0>$, height H, and cluster density s/S used in the first embodiment are also employed.

Incidentally, as the parameters used in the association rule analysis, various parameters other than those mentioned above such as a function that includes, as a variable, one or both of the average value and the deviation of the link height d, for example, can also be used. For example, instead of the midpoint distance m, the link height average value $<d>$ can also be used and, instead of the base $<h_0>$, $<d>-\sigma_d$ or $<d>-2\sigma_d$ can also be used by using the average value $<d>$ and the standard deviation $\sigma_d$ of the link height.

4-2-2. Example of Association Rule Derivation

The method of calculating the association rule for deriving the critical dimension $D_\alpha$ is the same as that of the first embodiment. That is, the ideal critical dimension $D_\alpha$ is found for a multiplicity of teaching diagrams beforehand. Furthermore, the correlation between the geometric parameters of the teaching diagrams and the ideal critical dimension $D_\alpha$ is analyzed. The rule for deriving the critical dimension $D_\alpha$ in which the teaching diagram cutting position appears as much as possible is found as a conditional equation of various parameters.

An example of the association rule thus found is as shown below. A description of the process to derive the association rule is omitted here.

$$D_\alpha = D \times (s/S) \times (m/<h_0>) \times$$
$$[\theta(s/S \le 0.2)\{\theta(m \le 0.5H) + (1/2)\theta(m > 0.5H)\} + (1/2)\theta(s/S > 0.2)]$$

where $\theta(X)$ is a function that returns 1 when proposition X is true and otherwise returns 0.

This association rule is stored in the condition recording unit 310 of the recording device 3 in accordance with inputs and so forth from the input device 2.

4-2-3. Cluster Extraction Procedure

The procedure for cutting the tree diagram by using the critical dimension determined using the derived association rule and extracting clusters will be described next. In the second embodiment, all of the codimensions R(i;c) of the respective nodes c of the tree diagram which is the analysis target are calculated. Further, all of the nodes c for which the codimension R(i;c) exceeds the critical dimension $D_\alpha$ are cut.

Fig. 8 is a flowchart that illustrates the cluster extraction process of the second embodiment (Codimensional Reduction method; CR method). This flowchart shows the procedure of the second embodiment in more detail than Fig. 3. In the same steps as Fig. 3, 200 is added to the step numbers of Fig. 3 and the last two digits have the same step numbers as those of Fig. 3; hence, a description that repeats the description of Fig. 3 may be omitted.

Fig. 9 shows an example of a tree diagram arrangement in the cluster extraction process of the second embodiment which complements Fig. 8. $E_1$ to $E_9$ represent document elements and, here, for the sake of expediency, a smaller suffix number is attached to an older document element with an earlier time t.

First, the document reading unit 10 of the processing device 1 reads a plurality of document elements which are the analysis target from the document storage unit 330 of the recording device 3 (step S210).

Thereafter, the time data extraction unit 20 of the processing device 1 extracts time data from the respective document elements of the document set which is the analysis target (step S220).

Thereafter, the term data extraction unit 30 of the processing device 1 extracts term data from the respective document elements of the document set which is the analysis target (step S230). Thereupon, as will be described later, the term data of the oldest element (oldest document element) $E_1$ in the document set is unnecessary. Hence, only term data other than that of the oldest element is preferably extracted based on the time data extracted in step S220.

Subsequently, the similarity calculation unit 40 of the processing device 1 calculates the similarity between the respective document elements (step S240) . Here also, only the similarity between the elements other than the oldest document element is calculated as mentioned above.

Thereafter, the tree diagram drawing unit 50 of the processing device 1 draws a tree diagram which includes respective document elements of a document set which is the analysis target (step S250: Fig. 9A). Thereupon, the oldest element $E_1$ is disposed in the head of the tree diagram irrespective of similarities to the other elements.

Thereafter, the cutting condition reading unit 60 of the processing device 1 performs reading of the cutting conditions (step S260). Here, the tree diagram parameter reading conditions and the association rule derived in the association rule analysis are read.

The cluster extraction unit 70 then performs cluster extraction. First, the parameters of the tree diagram are read in accordance with the parameter reading conditions thus read (step S271). Thereafter, the cluster extraction unit 70 applies the above read association rule to these parameters and determines the critical dimension $D_\alpha$ for judging the cutting position of the tree diagram (step 5272).

The following process is then performed in order starting with the node for which the link level i=0 (initial pair). First, the codimension R(i;c) of the process target node c is calculated (step S273). The codimension R(i;c) and the critical dimension $D_\alpha$ are compared (step S274). If $R(i;c)>D_\alpha$, the node is cut (step S275), whereupon the process moves to step S276. If $R(i;c)\leq D_\alpha$, cutting is not performed, and the process moves directly to step S276.

In step S276, it is judged whether the processing of all the nodes of the current link level i is completed. If the processing of all the nodes of the current link level i is not completed (step S276: NO), the process returns to step S273 and the next node c is processed. If the process of the current link level i is all complete (step S276: YES), it is judged whether processing of all the nodes of all the link levels is complete (step S277).

If the processing of all the link levels is not completed (step S277: NO), in order to move on to the next link level, the i value is made i:=i+1 (step S278) and, by returning to step S273, the processing of node c of the next link level is carried out. If all the processing of all the link levels is completed (step S277: YES), the process by the cluster extraction unit 70 is terminated and the process moves to step S280.

Fig. 9B shows an example of the result of a comparison between the codimension R and critical dimension $D_\alpha$ for each of the nodes $C_1$ to $C_7$. In this example, it was judged that the codimension R is equal to or less than the critical dimension $D_\alpha$ for nodes $c_1$ to $c_5$ and it was judged that the codimension R exceeds the critical dimension $D_\alpha$ for nodes $c_6$ and $C_7$. Hence, nodes $C_6$ and $C_7$ were cut and clusters were extracted in step S275. In this example, irrespective of the fact that node $C_5$ had a higher link height than node $C_6$ (the dissimilarity between the linked document elements is higher), node $C_5$ was not cut since the codimension of node $C_5$ was no more than the critical dimension $D_\alpha$. As shown in this example, the cutting position of the second embodiment is not directly related to the link height in the tree diagram.

In the second embodiment, a comparison between the codimension R and the critical dimension $D_\alpha$ is made in order starting from the lower node (i=0). When a certain lower node c is provided, document elements linked by an upper node which is located upstream of the lower node contain all of the document elements E linked by the lower node c. Hence, the upper node has a larger codimension R than the codimension R of the lower node c. Therefore, as per the example in Fig. 9B, for example, when it is judged that the codimension $R(2;c_6)$ of the lower node $c_6$ exceeds the critical dimension $D_\alpha$, the calculation of the codimension $R(3;c_7)$ of the upper node $C_7$ which is located upstream of the lower node $C_6$ and the comparison with the critical dimension $D_\alpha$ can be omitted.

Thereafter, the arrangement condition reading unit 80 reads the intra-cluster arrangement conditions (step S280). In accordance with the arrangement conditions, the intra-cluster element arrangement unit 90 determines the arrangement of the intra-cluster document elements on the basis of time data of the respective document elements (step S290: Fig. 9C). The arrangement conditions in this case are preferably arranged in a row in order of age on the basis of the time data, for example. However, other arrangements such as the arrangements of the sixth to eighth embodiments described later are also possible.

Incidentally, in this example, terms having the same term frequencies TF(E) were subtracted from the dimension of the sum of sets of the terms in order to determine the codimension R but other terms may be subtracted. For example, subtracting the terms for which the deviation of the term frequency TF(E) is smaller than a value found by a predetermined method (terms and so forth for which the standard deviation of the term frequency TF(E) is no more than a predetermined value) is possible. Further, when the document elements E each include a plurality of documents, the global frequency GF(E) is preferable instead of the term frequency TF(E), In addition, when a frequency other than the term frequency TF(E) or the global frequency GF(E) is used as the vector component amount of the document elements, subtracting terms for which the difference of the vector component amount is smaller than the value determined by the predetermined method is preferable.

Fig. 10 shows a specific example of the document correlation diagram drawn by the method of the second embodiment. The same Laid Open publications as those of Fig.7 of the first embodiment are analyzed as document elements and the title of the invention and the patent application number have been added to the respective document elements in the document correlation diagram. In this example, unlike Fig. 7, clusters for only 1 document element were not generated. In the second embodiment, in order to generate a cluster for only 1 document element, the codimension R must reach the critical dimension $D_\alpha$ for about 2 or 3 document elements. However, it is thought that the codimension R did not reach the critical dimension $D_\alpha$ since the dimension of the sum of sets of the terms was small for about 2 or 3 document elements. Thus, since each cluster had a plurality of document elements lined up in time order, the document correlation diagram in which the chronological flow was easily discernable was obtained.

4-2-4. Effect of Second Embodiment

With the second embodiment, by extracting clusters using tree diagram cutting and determining the intra-cluster arrangement on the basis of time data, a tree diagram that suitably represents the chronological development for each field can be drawn.
In particular, since the cutting rule of the tree diagram is derived by means of the association rule analysis, a (highly versatile) cutting rule that can be applied to a variety of tree diagrams can be employed and cutting with an ideal cutting value can be executed highly reliably. Furthermore, by increasing the number of teaching diagram cases, additional improvements in the cutting rule accuracy can be easily achieved.
Furthermore, since the number of vector dimensions is also considered to derive the cutting rule, suitable branching can be obtained.
In addition, since a judgment of the cutting condition is performed for each node and each node is individually cut on the basis of the judgment result, more suitable branching can be obtained.

4-3. Third Embodiment (Cell Division method; CD method)

With the Cell Division method, in order to further divide the respective parent clusters into child clusters after extracting parent clusters by cutting the tree diagram with a cutting height $\alpha$ determined using a certain method, a tree diagram of the appropriate part is re-drawn by using only the document elements belonging to each of the parent clusters. When this partial tree diagram is drawn, each term for which the deviation of the component of the document element vector in the parent cluster takes a smaller value than the value decided by means of a predetermined method is removed for analysis.

4-3-1. Cluster Extraction Procedure

Fig. 11 is a flowchart that illustrates the cluster extraction process of the third embodiment (Cell Division method; CD method). This flowchart shows the procedure of the third embodiment in more detail than Fig. 3. In the same steps as Fig. 3, 300 is added to the step numbers of Fig. 3 and the last two digits have the same step numbers as those of Fig. 3; hence, a description that repeats the description of Fig. 3 may be omitted.
Fig. 12 shows an example of a tree diagram arrangement in the cluster extraction process of the third embodiment which complements Fig. 11. $E_1$ to $E_{10}$ represent document elements and, here, for the sake of expediency, a smaller suffix number is attached to an older document element with an earlier time t.
First, the document reading unit 10 of the processing device 1 reads a plurality of document elements which are the analysis target from the document storage unit 330 of the recording device 3 (step S310).
Thereafter, the time data extraction unit 20 of the processing device 1 extracts time data from the respective document elements of the document set which is the analysis target (step S320).
Thereafter, the term data extraction unit 30 of the processing device 1 extracts term data from the respective document elements of the document set which is the analysis target (step S330). Thereupon, as will be described later, the term data of the oldest element (oldest document element) $E_1$ in the document set is unnecessary. Hence, only term data other than that of the oldest element is preferably extracted based on the time data extracted in step S320.
Subsequently, the similarity calculation unit 40 of the processing device 1 calculates the similarity between the respective document elements (step S340). Here also, only the similarity between the elements other than the oldest document element $E_1$ is calculated as mentioned above.
Thereafter, the tree diagram drawing unit 50 of the processing device 1 draws a tree diagram which includes respective document elements of a document set which is the analysis target (step S350: Fig. 12A). Thereupon, the oldest element $E_1$ is disposed in the head of the tree diagram irrespective of similarities to the other elements.
Thereafter, the cutting condition reading unit 60 of the processing device 1 performs reading of the cutting conditions (step S360). Here, the cutting height $\alpha$ and the subsequently described deviation judgment threshold value and so forth are read.
The cluster extraction unit 70 then performs cluster extraction. First, the tree diagram is cut with the cutting height $\alpha$=a (where the link height d=a-bcos$\theta$) (step S371: Fig. 12B). When cluster division is not produced for $\alpha$=a (step S372), cutting is performed for $\alpha^*=\langle d\rangle+\delta\sigma_d$ (where $-3\leq\delta\leq 3$, $0\leq\delta\leq 2$ is particularly preferable and $\delta$=1 is most preferable) (step S373). Once the tree diagram has been cut, the oldest elements $E_2$ and $E_7$ in the respective clusters are disposed in the head of each relevant cluster (step S374; Fig. 12C). The following process is performed for the document elements other than the respective oldest elements of each cluster.

First, a process of removing each term for which the deviation between intra-cluster elements other than the oldest elements takes a smaller value than the value determined by a predetermined method is carried out (step S375). Assume for example, in a cluster having the document element $E_2$ at its head in Fig. 12, the terms of the document elements $E_3$, $E_4$, $E_5$ and $E_6$ and the component values of the respective document element vectors calculated for the respective terms are each shown in the following table:

Table 8

| (Terms of the respective document elements and the vector component values) | | | | | | |
|---|---|---|---|---|---|---|
| Term | $E_3$ | $E_4$ | $E_5$ | $E_6$ | Average | Standard deviation |
| $w_a$ | 30 | 20 | 20 | 30 | 25 | 5 |
| $w_b$ | 90 | 90 | 80 | 80 | 85 | 5 |
| $w_c$ | 10 | 10 | 20 | 20 | 15 | 5 |
| $w_d$ | 70 | 70 | 100 | 100 | 85 | 15 |
| $w_e$ | 12 | 10 | 12 | 10 | 11 | 1 |
| $w_f$ | 30 | 40 | 40 | 30 | 35 | 5 |

If the deviation judgment threshold value is 10% defined by the ratio of the standard deviation with respect to the average in the cluster, for example, the terms $w_b$ and $w_e$ are judged to have small deviation values and removed.

Thereafter, the drawing of a partial tree diagram including intra-cluster elements other than the oldest element is performed for each cluster (step S376: Fig. 12D). In the example of Table 8, in other words, a partial tree diagram is drawn by using the remaining terms $w_a$, $w_c$, $w_d$, and $w_f$. Hence, intra-cluster branching different from the branching in the tree diagram drawn in step S350 is obtained. In particular, since the term for which the deviation takes a small value has been removed, the differences of the remaining terms are emphasized. Therefore, even the similarities are evaluated for the same document elements, the similarity evaluated when the partial tree diagram is drawn in step S376 is smaller (non-similarity is larger) than the similarity evaluated when the tree diagram is drawn in step S350.

Here, the number of intra-cluster elements excluding the oldest element is acquired for each cluster and compared with a predetermined threshold value (3, for example) (step S377). As per the document elements $E_3$ to $E_6$ of Fig. 12D, when the number of document elements excluding the oldest element $E_2$ exceeds the threshold value (step S377: NO), the process returns to step S371, whereupon a tree diagram cutting is performed and child clusters are extracted. The cutting height $\alpha$ (or $\alpha^*$) at this time is as mentioned above in step S371 (or step S373). However, since the term for which the deviation takes a small value has been removed and the similarity is evaluated as being small, re-cutting of the tree diagram is possible with the same cutting height $\alpha$ (or $\alpha^*$). Incidentally, when cutting is performed at the cutting height $\alpha^*$ of step S373 during the extraction of the child clusters, $\alpha^*$ may be updated each time in accordance with the height d of the respective link positions of the cut parent clusters (variable method) or the initial value of $\alpha^*$ may be used as is (fixed method).

As per the document elements $E_8$ to $E_{10}$ in Fig. 12D, when the number of document elements excluding the oldest element $E_7$ in the cluster is less than the threshold value (step S377: YES), cutting is finally performed with a cutting height $\alpha$=a with respect to the relevant clusters (step S378: Fig. 12E). The process moves to step S380 even when cluster division is not actually produced in step S378.

In step S380, the arrangement condition reading unit 80 reads the intra-cluster arrangement conditions. In accordance with the arrangement conditions, the intra-cluster element arrangement unit 90 determines the arrangement of the intra-cluster document elements on the basis of time data of the respective document elements (step S390: Fig. 12F) .

For example, in step S378, when cutting is performed with a cutting height $\alpha=a_x$ of Fig. 12E and cluster division is not produced, a serial chain arrangement in order of the time data of the document elements $E_7$ to $E_{10}$ of the clusters results (Fig. 12F).

Further, in step S378, when cutting has been performed with the cutting height $\alpha=a_y$ of Fig. 12E, for example, branching is performed from the document element $E_7$ into serial chains in order of the time data of document elements $E_8$, $E_9$ and $E_{10}$ (not shown).

Furthermore, in step S378, when cutting has been performed with the cutting height $\alpha=a_z$ of Fig. 12E, for example, branching takes place from the document element $E_7$ into three branches for the document elements $E_8$, $E_9$ and $E_{10}$ (not shown).

The intra-cluster arrangement conditions are preferably arranged in a row in order of age on the basis of the time data, for example. However, other arrangements such as the arrangements of the sixth to eighth embodiments described later are also possible.

Incidentally, although an example in which the ratio of the standard deviation with respect to the average was 10% for the deviation judgment threshold value was described, this is a suitable example in a case where each of the document elements includes one document. The judgment threshold value when each of the document elements includes one document is preferably at least 0% and no more than 10%.

On the other hand, when each of the document elements includes a plurality of documents, if the ratio of the standard deviation with respect to the average of the intra-cluster document elements is no more than 60% or 70%, the deviation is preferably considered as a small value.

Fig. 13 shows a specific example of a document correlation diagram drawn by the method of the third embodiment. The same Laid Open publications as those of Fig. 7 of the first embodiment are made the document elements, analysis is performed using the TF*IDF(P) as the component value of the document element vectors and the a=1 as the cutting height $\alpha$, and the title of the invention and the patent application number are added for the respective document elements to the document correlation diagram. In this example, one of the partial tree diagrams created in step S376 was cut further to form a two-step branching.

Fig. 14 shows another specific example of the document correlation diagram drawn by the method of the third embodiment. For the sixteen main fields of approximately 4000 Japanese patent Laid Open publications each of which the applicant is a certain manufacturer of household chemicals, document groups belonging to the respective fields were selected by means of a keyword search and the document groups of the respective fields were each made one document element (macro element). In accordance with the third embodiment, the oldest element was removed and disposed in the head of the cluster, whereupon a tree diagram of the remaining fifteen elements was created and the tree diagram was cut to obtain the branch structure shown in Fig. 14. The average value of the application dates was used as the time data t of the respective document elements, GFIDF(E) was used as the component values of the document element vectors, a=1 was used as the cutting height $\alpha$, and 70% was adopted as the deviation judgment threshold value. Keywords characterizing the sixteen fields were then added to the document correlation diagram.

4-3-2. Effect of the third embodiment

According to the third embodiment, by extracting clusters using tree diagram cutting and determining the intra-cluster arrangement on the basis of time data, a tree diagram that suitably represents the chronological development for each field can be drawn.

In particular, since the child clusters are extracted from the partial tree diagram created by re-analyzing the respective parent clusters after extracting the parent clusters, the erroneous classification of child clusters can be eliminated and a suitable classification can be obtained.

Furthermore, following the parent cluster extraction, the vector components for which the deviation between the document elements belonging to the respective parent clusters takes a smaller value than the value determined by means of a predetermined method are removed. Therefore, extraction of the child clusters can be performed from a different viewpoint from the parent cluster extraction viewpoint. For example, when a plurality of document elements related to coloring materials are classified, the document elements are broadly classified into a group employing a low boiling point medium and a group employing a high boiling point medium in accordance with the difference in the solvent during extraction of the parent clusters. During extraction of the child clusters, the terms related to the solvent having small deviations in the respective parent clusters are removed. Therefore, the difference in the pigment is emphasized, for example, and the classification is made into a group employing an organic pigment and a group employing an inorganic pigment. When terms of small deviations have not been removed in the respective parent clusters, there is the risk that the more detailed classification related to the solvent and the pigment-related classification will be antagonistic and suitable child clusters will not be obtained. However, in the third embodiment, by emphasizing the difference in the clusters, a suitable classification of the child clusters can be obtained.

4-4. Fourth Embodiment (Stepwise Cutting Method; SC method)

With the Stepwise Cutting Method, tree diagrams are cut at two or more cutting heights $\alpha_i$ and $\alpha_{ii}$ (fixed values) and parent clusters and child clusters are extracted.

4-4-1. Cluster Extraction Procedure

Fig. 15 is a flowchart illustrating the cluster extraction process of the fourth embodiment (Stepwise Cutting Method: SC method). This flowchart shows the procedure of the fourth embodiment in more detail than Fig. 3. In the same steps as Fig. 3, 400 is added to the step numbers of Fig. 3 and the last two digits have the same step numbers as those of Fig. 3; hence, a description that repeats the description of Fig. 3 may be omitted.
Fig. 16 shows an example of a tree diagram arrangement in the cluster extraction process of the fourth embodiment which complements Fig. 15. $E_1$ to $E_{14}$ represent document elements and, here, for the sake of expediency, a smaller suffix number is attached to an older document element with an earlier time t.

First, the document reading unit 10 of the processing device 1 reads a plurality of document elements which are the analysis target from the document storage unit 330 of the recording device 3 (step S410).

Thereafter, the time data extraction unit 20 of the processing device 1 extracts time data from the respective document elements of the document set which is the analysis target (step S420).

Thereafter, the term data extraction unit 30 of the processing device 1 extracts term data from the respective document elements of the document set which is the analysis target (step S430). Thereupon, as will be described later, the term data of the oldest element (oldest document element) $E_1$ in the document set is unnecessary. Hence, only term data other than that of the oldest element is preferably extracted based on the time data extracted in step S420.

Subsequently, the similarity calculation unit 40 of the processing device 1 calculates the similarity between the respective document elements (step S440). Here also, only the similarity between the elements other than the oldest document element is calculated as mentioned above.

Thereafter, the tree diagram drawing unit 50 of the processing device 1 draws a tree diagram which includes respective document elements of a document set which is the analysis target (step S450: Fig. 16A) . Thereupon, the oldest element $E_1$ is disposed in the head of the tree diagram irrespective of similarities to the other elements.

Thereafter, the cutting condition reading unit 60 of the processing device 1 performs reading of the cutting conditions (step S460). Here, the cutting heights $\alpha_i$ and $\alpha_{ii}$ (where $\alpha_i > \alpha_{ii}$) or a method of calculating the same is read. For example, $\alpha_i$=a and $\alpha_{ii}$=a-0.2b (where the link height d=a-bcosθ) are acceptable. Further, using $\alpha^*=\langle d\rangle+\delta\sigma_d$ (where $-3\leq\delta\leq3$ and particularly preferably $0\leq\delta\leq2$), for example, $\alpha_i=\langle d\rangle+\sigma_d$ and $\alpha_{ii}=\langle d\rangle$ are acceptable. Further, when the cutting heights at three points are $\alpha_i$, $\alpha_{ii}$, and $\alpha_{iii}$ (where $\alpha_i > \alpha_{ii} > \alpha_{iii}$), if the similarity is defined by means of a correlation coefficient, for example, representative points for the similarity such that $\alpha_i$=a+b (reverse correlation), $\alpha_{ii}$=a (no correlation) and $\alpha_{iii}$=a-0.3b (strong correlation threshold value) are acceptable.

The cluster extraction unit 70 then performs cluster extraction. First, the tree diagram is cut with a cutting height $\alpha=\alpha_i$ (step S471; Fig. 16B). Thereafter, the number of branch lines (first branches) cut using the cutting lines is read and branch lines in the quantity corresponding to the number of the first branches are drawn directly from the oldest element $E_1$ removed in step S450 (step S472: Fig. 16C). The number of the first branches corresponds to the number of parent clusters.

Thereafter, the same tree diagram is cut using the cutting height $\alpha=\alpha_{ii}$ (step S473: Fig. 16D). Further, the number of branch lines cut using this cutting height (second branches) is read for each parent cluster and branch lines in the quantity corresponding to the number of the second branches are drawn directly from the lines of the respective parent cluster (step S474) .The number obtained by totaling the number of the second branches for all of the parent clusters corresponds to the total number of child clusters. The extraction of clusters is thus complete.

After the clusters are extracted in this way, the arrangement condition reading unit 80 reads the intra-cluster arrangement conditions (step S480). In accordance with the arrangement conditions, the intra-cluster element arrangement unit 90 determines the arrangement of the intra-cluster document elements on the basis of time data of the respective document elements (step S490: Fig. 16E). The arrangement conditions in this case are preferably arranged in a row in order of age on the basis of the time data, for example. However, other arrangements such as the arrangements of the sixth to eighth embodiments described later are also possible.

As mentioned above, branch lines in the quantity corresponding to the first branches are drawn directly from the oldest element in step S472. Hence, even in cases where the parent cluster [1] and parent clusters [2] and [3] are located on mutually different levels as shown in the tree diagram of Fig. 16B, for example, the hierarchical structure above the cutting height $\alpha_i$ can be treated uniformly as shown in Fig. 16C. Hence, the tree diagram can be simplified. Further, as mentioned above, in step S474, branch lines in the quantity corresponding to the second branches of the respective parent clusters are drawn directly from the lines of the respective parent clusters. Hence, as shown in the tree diagram of Fig. 16D, for example, even when the child clusters [11] and [12] and the child cluster [13] that branch from parent cluster [1] are located on mutually different levels, the hierarchical structure between the cutting heights $\alpha_i$ and $\alpha_{ii}$ can be treated uniformly as shown in Fig. 16E. The tree diagram can thus be simplified.

Furthermore, even when the child clusters [11], [12] and [13] that branch from the parent cluster [1] and the child clusters [31] and [32] that branch from the parent cluster [3] are linked at different heights as shown in Fig. 16D, for example, these clusters may be linked at the same height as shown in Fig. 16E. Hence, the difference between the link heights within the range from the cutting heights $\alpha_i$ to $\alpha_{ii}$ can be treated uniformly in order to simplify the tree diagram.

Further, while the tree diagram can be simplified to an extent in this manner, the number of the first branches with the cutting height $\alpha_i$ and the number of the second branches with the cutting height $\alpha_{ii}$ can be maintained. Hence, a document correlation diagram that reflects the hierarchical structure of the initial tree diagram while simplifying the hierarchical structure of the tree diagram to an extent can be drawn.

Figs. 17 and 18 show specific examples of document correlation diagrams drawn by means of the method of the fourth embodiment. The same Laid Open publications as those in Fig. 7 of the first embodiment were analyzed as document elements and the patent application number and the title of the invention were added for the respective document elements to the document correlation diagram. In the fourth embodiment, a process such as the extraction of the oldest element before the child cluster generation was not performed. Therefore, the oldest element of the parent cluster was not disposed between the oldest element of the whole tree diagram and the child clusters and only the tree diagram structure is displayed. Incidentally, Fig. 17 was obtained by cutting the tree diagram drawn using a non-standardized similarity (cosine) and Fig. 18 was obtained by cutting the tree diagram drawn using a standardized similarity (correlation coefficient).

4-4-2. Effect of Fourth Embodiment

According to the fourth embodiment, by extracting clusters using tree diagram cutting and determining the intra-cluster arrangement on the basis of the time data, a document correlation diagram that suitably represents the chronological development for each field can be drawn automatically.
In particular, when cutting is performed using constants such as $\alpha_1$=a and $\alpha_{ii}$=a-0.2b, for example, since cutting is performed at a plurality of predetermined cutting heights, complex calculation is not required to determine the cutting position and a suitable branching can be obtained.
In addition, when cutting is performed using a function $\alpha^{*}=<d>+\delta\sigma_{d}$ that includes, as variables, any or both of the average value and the deviation value of the link height d such that $\alpha_{i}=<d>+\sigma_{d}$, $a_{ii}=<d>$, for example, wide compatibility with different shapes of tree diagrams is also possible, complex calculation is not required to determine the cutting position, and a suitable branching can be obtained.

Further, by determining the branching structure on the basis of the number of branch lines cut in each of a plurality of cutting positions, the hierarchical structure of the tree diagram can be simplified to an extent. Hence, a document correlation diagram that reflects the hierarchical structure of the initial tree diagram while simplifying the hierarchical structure of the tree diagram to an extent can be drawn.
In addition, when generating parent and child clusters by performing cutting in a plurality of cutting positions, child clusters can be generated without re-drawing the partial tree diagram of the document elements belonging to the parent cluster. Hence, parent and child clusters can be generated using a small calculation load.

4-5. Fifth Embodiment (Flexible Composite Method; FC method)

In the Flexible Composite Method, in the process of executing tree diagram cutting a plurality of times, a new cutting height $\alpha$ is set each time cutting is performed. For example, in cases where the cutting height $\alpha$ is calculated using $\alpha^{*}=<d>+\delta\sigma_{d}$ (where $-3\leq\delta\leq3$, $0\leq\delta\leq2$ is particularly preferable and $\delta=1$ is most preferable), in the first cutting, $\alpha^{*}$, which is calculated on the basis of the data of all the document elements belonging to the tree diagram is used and, in the second cutting, $\alpha^{*}$, which is calculated based on only the data of the document elements belonging to the parent clusters thus cut is used.

4-5.1 Cluster Extraction Procedure

Fig. 19 is a flowchart that illustrates the cluster extraction process of the fifth embodiment (Flexible Composite Method; FC method). This flowchart shows the procedure of the fifth embodiment in more detail than Fig. 3. In the same steps as Fig. 3, 500 is added to the step numbers of Fig. 3 and the last two digits have the same step numbers as those of Fig. 3; hence, a description that repeats the description of Fig. 3 may be omitted.
Fig. 20 shows a part of a tree diagram arrangement example in the cluster extraction process of the fifth embodiment which complements Fig. 19. $E_1$ to $E_N$ represent document elements and, here, for the sake of expediency, a smaller suffix number is attached to an older document element with an earlier time t.

First, the document reading unit 10 of the processing device 1 reads a plurality of document elements which are the analysis target from the document storage unit 330 of the recording device 3 (step S510).

Thereafter, the time data extraction unit 20 of the processing device 1 extracts time data from the respective document elements of the document set which is the analysis target (step S520).

Thereafter, the term data extraction unit 30 of the processing device 1 extracts term data from the respective document elements of the document set which is the analysis target (step S530). Thereupon, as will be described later, the term data of the oldest element (oldest document element) $E_1$ in the document set is unnecessary. Hence, only term data other than that of the oldest element is preferably extracted based on the time data extracted in step S520.

Subsequently, the similarity calculation unit 40 of the processing device 1 calculates the similarity between the respective document elements (step S540). Here also, only the similarity between the elements other than the oldest

document element $E_1$ is calculated as mentioned above.

Thereafter, the tree diagram drawing unit 50 of the processing device 1 draws a tree diagram which includes respective document elements of a document set which is the analysis target (step S550: Fig. 20A). Thereupon, the oldest element $E_1$ is disposed in the head of the tree diagram irrespective of similarities to the other elements.

Thereafter, the cutting condition reading unit 60 of the processing device 1 reads the cutting conditions (step 5560). Here, the method of calculating the cutting height $\alpha$, the upper limit value g for the number of cuts (number of levels) and so forth are read.

The cutting height $\alpha$ is calculated according to $\alpha^*=<d>+\sigma_d$ by using $\alpha^*=<d>+\delta\sigma_d$. Further, in cases where there is a large number of analysis-target document elements, for example, the cutting height $\alpha$ may be calculated by using $\alpha^*=<d>+2\sigma_d$.

The number of cuts upper limit value g may be $g = [\ln N+\ln 10 + 0.5]_G$, for example, by using the total number N of document elements which are the analysis target. Alternatively, when a division of all the document elements into $\nu$ clusters is repeated, the upper limit value g may be the number of divisions +1 (solution for $\nu^{(g-1)}\leq N/U<\nu^g$) for which the number of elements of one cluster is equal to or less than U, namely, $g = l+[\ln(N/U)\div\ln\nu]_G$. However, $[\ ]_G$ above is a Gaussian integer symbol that signifies the value obtained by discarding after the decimal point in the bracket. Alternatively, by using the number of document elements N, the following values for g are possible:

If $10<N\leq 20$, g=1, if $20<N\leq 300$, g=2 and, if $300<N\leq 1000$, g=3, and if $1000<N$, g=4.

The cluster extraction unit 70 then performs cluster extraction. First, the cutting height $\alpha^*_{[2-N]}=<d>+\sigma_d$ is calculated by using the height d of the respective link positions of the elements $E_2$ to $E_N$, excluding the oldest element $E_1$ in the tree diagram (step S571). Thereafter, a judgment is made as to whether the calculated cutting height $\alpha^*_{[2-N]}$ is smaller than the maximum value Max(d) of the link height d of the elements $E_2$ to $E_N$ (step S572) and, when the calculated cutting height $\alpha^*_{[2-N]}$ is indeed smaller than the maximum value Max(d), the tree diagram is cut with this cutting height $\alpha^*_{[2-N]}$ (step S573: Fig. 20B). The following process is performed for each cluster.

When the number of document elements exceeds a predetermined threshold value (Here, the threshold value is four; Preferably, the predetermined threshold value is four or more and no more than $10\times[\ln N/\ln 10]_G$) for each cluster (step S574: NO), it is judged as to whether the number of cuts of the cluster has reached the upper limit value g and, when the number has not reached the upper limit value g (step S575: NO), the oldest element $E_2$ is removed from the cluster and disposed in the head of the cluster and a partial tree diagram of the remaining intra-cluster elements $E_3$ to $E_7$ is drawn (step S576: Fig. 20C). The partial tree diagram drawn at this time has substantially the same structure as the part corresponding to the cluster in the tree diagram that was first drawn in step S550 except for the fact that the oldest element $E_2$ of the cluster has been removed. However, as the oldest element $E_2$ of the cluster has been removed, the distance between the elements in the cluster changes. Hence, if the analysis is performed once again on the basis of the content data of the remaining intra-cluster elements $E_3$ to $E_7$, there is also the possibility of a structure that differs slightly from the tree diagram drawn in step 5550. For example, when a tree diagram is drawn by using the distance between centers or the average of all the distances as the distance (dissimilarity) between a document element and a document element group or the distance (dissimilarity) between a document element group and a document element group, the distance between element $E_3$ and elements $E_4$ and $E_5$ in Fig. 20C differs from the distance between elements $E_2$ and $E_3$ and elements $E_4$ and $E_5$ in Fig. 20B. Therefore, this part can adopt a different structure.

After drawing a partial tree diagram of intra-cluster elements, the process returns to step S571, whereupon the height d of the respective link positions of the elements $E_3$ to $E_7$ except for the oldest element $E_2$ among the intra-cluster elements is used to calculate the cutting height $\alpha^*_{[3-7]}=<d>+\sigma_d$. Thereafter, it is judged whether the calculated cutting height $\alpha^*_{[3-7]}$ is smaller than a maximum value Max (d) for the link heights d of the elements $E_3$ to $E_7$ (step S572) and, when the cutting height $\alpha^*_{[3-7]}$ is indeed smaller than the maximum value Max (d), the cluster is cut with the cutting height $\alpha^*_{[3-7]}$ (step S573: See Fig. 20C).

The clusters for which the number of document elements is below the predetermined threshold value (which is four here) (step S574: YES) are then subjected to child cluster extraction by means of another cluster extraction method such as the cell division method (CD method) of the third embodiment (step S577) irrespective of the number of cuts to extract the clusters.

The clusters for which the number of cuts has reached the upper limit value g (step S575: YES) are then subjected to child cluster extraction by means of another cluster extraction method such as the cell division method (CD method) of the third embodiment (step S577) irrespective of the number of elements in the cluster.

Incidentally, further extraction methods that may also be performed in step S577 is the balance cutting method (BC method) of the first embodiment, the Codimension Reduction method (CR method) of the second embodiment, or the stepwise cutting method (SC method) of the fourth embodiment.

In step S572, when the cutting height $\alpha^*_{[2-N]}$ or $\alpha^*_{[3-7]}$ is equal to or more than the maximum value for the link height d of the elements $E_2$ to $E_N$ or $E_3$ to $E_7$ ($\alpha^*\geq$Max(d)), cluster division is not realized. Therefore, the tree diagram cutting process is omitted and the judgment of the number of intra-cluster elements (except for the oldest elements $E_1$ or $E_2$) is performed immediately in step S574. Further, if the number of intra-cluster elements exceeds the predetermined threshold value, a judgment of the number of cuts is performed in step S575 (here, since the cutting process has been omitted and the number of cuts does not increase, the judgment on the number of cuts may be omitted) and the next oldest element $E_2$ or $E_3$ is excluded in step S576.

Thus, even when the cluster division is not implemented, the oldest element is excluded one by one (step S576) and, if the number of intra-cluster elements is less than the threshold value (step S574), the process moves to step S577.

Finally, if the clusters are extracted in this manner, the arrangement condition reading unit 80 reads the intra-cluster arrangement conditions (step S580). In accordance with the arrangement conditions, the intra-cluster element arrangement unit 90 determines the arrangement of the document elements in the cluster on the basis of the time data of the respective document elements (step S590: Fig. 20D). The arrangement conditions in this case are preferably in a row in order of age on the basis of time data, for example. However, other arrangements such as the arrangements of the sixth to eighth embodiments are also possible.

The upper limit value g of the number of cuts was set in the above description. However, a method in which the upper limit value g is not set can also be adopted. In this case, step S575 is omitted and if step S574 is NO, the process moves directly to step S576, whereupon the extraction of child clusters is performed with no restrictions on the number of cuts. Incidentally, in step S574, a NO judgment is desirably made if the number of document elements exceeds 9, for example, and a YES judgment is desirably made for clusters in which the number of document elements is 9 or less.

Figs. 21 and 22 show specific examples of document correlation diagrams drawn by the method of the fifth embodiment. Sixty Laid Open Publications of Japanese patent and utility model applications related to a method for preventing ground liquefaction extracted by means of a keyword search were analyzed as document elements and only a portion (thirty-five) of the obtained document correlation diagram is illustrated for the sake of expediency. The patent application numbers for each of the document elements (where those numbers with (U) at the end are utility model application numbers) were added to the illustrated document correlation diagram and the title of the invention (device) were also added to the upper document elements. Whereas it is thought that there should preferably be less than twenty elements in the first to fourth embodiments, in the fifth embodiment, it is possible to obtain parent and child clusters even when there is a large number of analysis target elements as shown in the example.

Incidentally, Fig. 21 is the result of setting the number of cuts upper limit value g such that g=2 and setting the threshold value for the number of intra-cluster document elements such that the threshold value = 4. Fig. 22 is the result of making the number of cuts limitless and setting the threshold value for the number of intra-cluster document elements such that the threshold value = 9. The extraction of the child clusters by means of other methods (step S577) was omitted.

In Fig. 21, the number of elements of the parent cluster having application number H03-320020 at its head (number of elements: 5) was more than the threshold value 4. Therefore, the parent cluster was divided into child clusters in the second cut. Further, the child cluster having application number S63-033662 (U) at its head (number of elements: 10) was generated by means of the second cut. Therefore, there was no further cutting and division.

Meanwhile, in Fig. 22, the number of elements of the parent cluster having application number H03-320020 at its head (number of elements: 5) was no more than the threshold value 9. Therefore, the second cut was not performed. Further, the child cluster having application number S63-033662 (U) at its head (number of elements: 10) was subject to a third cut and was divided into grandchild clusters.

Fig. 23 shows another specific example of a document correlation diagram drawn by the method of the fifth embodiment. For the document elements (macro elements) of the same sixteen fields as those of Fig. 14 of the third embodiment, the oldest element was excluded and disposed in the head and the drawing of the tree diagram and cutting of the tree diagram were performed using the remaining fifteen elements in accordance with the fifth embodiment. The excluding of the oldest element and the drawing and cutting of the tree diagram were repeated until the number of intra-cluster elements was below the upper limit thereof (four). Each cluster for which the number of intra-cluster elements is no more than the upper limit is subjected to further cluster generation by means of the method of the third embodiment (Cell Division method; CD method), whereby the branch structure shown in Fig. 23 was obtained. The average value of the application date was used as the time data t of the respective document elements, the GFIDF(E) was used as the component value of the document element vectors, a=1 was used as the cutting height $\alpha$ after the number of intra-cluster elements had fallen below the upper limit, and 70% was adopted as the deviation judgment threshold value. Keywords characterizing the sixteen fields were added to the document correlation diagram.

4-5-2. First Modified Example

In steps S550 and S576, the oldest element was removed when drawing the tree diagram and partial tree diagram. However, it is also possible to carry out this drawing without removing the oldest element. The tree diagram was then cut g times as mentioned above. By obtaining clusters in this manner, categorization of the document elements is possible. In this case, by performing suitable labeling on the basis of the content data of the document elements belonging to each of the obtained categories, macro analysis of the document elements can be performed in a straightforward manner.

Fig. 24 shows a specific example of a document correlation diagram that was drawn by means of the method of the first modified example of the fifth embodiment. The procedure with which the document correlation diagram was drawn is as follows. First, a tree diagram was drawn without removing the oldest element for approximately 4000 Japanese patent Laid Open publications for which the applicant is a certain household chemical manufacturer and the tree diagram was cut g times by means of the method of the first modified example. A tree diagram in which 27 clusters that were obtained in this way were newly made document elements (macro elements) was drawn, the oldest element was extracted by means of the method of the fifth embodiment, and tree diagram cutting was performed. Extraction of the oldest element and tree diagram cutting were repeated until the number of intra-cluster elements was no more than the upper limit thereof (four) and the branch structure shown in Fig. 24 was obtained. The respective macro elements were labeled on the basis of the content data of the documents belonging to the macro elements. As a result, even in the case of an analysis-target document set including a large number of documents, analysis is automatically performed at the macro level and an understanding of the general flow of technology can be easily attained.

4-5-3. Second Modified Example

A document correlation diagram drawn by means of the method of a second modified example will be described next. This document correlation diagram was obtained by first drawing a document correlation diagram for patent document groups which are held by a certain applicant company X and shows how patent document groups belonging to specified technical fields of the patent document groups of the applicant company X are related to patent document groups of other companies.
Fig. 25 shows the process of drawing a document correlation diagram of the second modified example of the fifth embodiment. Figs. 26 and 27 show a specific example of a document correlation diagram drawn by the method of the second modified example of the fifth embodiment. Figs. 28 and 29 show a part of another display example of the document correlation diagram of the second modified example of the fifth embodiment.
The procedure for drawing these document correlation diagrams is as follows.
First, a tree diagram was drawn without removing the oldest publication of all the Japanese patent publications (for both Laid Open and registration) for which the applicant is a certain company X which is a chemical manufacturer. As a result of cutting the tree diagram g times by means of the method of the first modified example, five clusters were obtained.
A tree diagram was then re-drawn without removing the oldest publication for each document in 'functional raw material-related' patent document group constituting one of the five clusters. As a result of cutting the tree diagram g times by means of the method of the first modified example, the 'functional raw material-related' patent document groups among the Japanese patent publications for which the applicant is company X were categorized into a total of thirteen clusters ranged from document group 'EX01' to document group 'EX13' (document group code 'EX01' and so on was expediently assigned).
A tree diagram in which these 13 clusters were newly made document elements (macro elements) was drawn, the oldest element was extracted by means of the method of the fifth embodiment, and tree diagram cutting was performed. Extraction of the oldest element and tree diagram cutting were repeated until the number of intra-cluster elements was below the upper limit (four) and the branching structure shown in Fig. 25 was obtained.
Based on the content data (term data) of 'silicon xxx fabrication method-related' patent document group 'EX05' which is one of the thirteen clusters, 3000 documents similar to this patent document group were extracted from the overall documents P including patent documents of other companies.
A tree diagram was created for the 3000 patent documents extracted from the overall documents P without removing the oldest element. As a result of cutting the tree diagram g times by means of the method according to the first modified example, a total of twenty-one clusters of document group 'E101' to document group 'E121' were formed (document group symbol 'E121' and so on was expediently assigned).
A tree diagram in which the obtained twenty-one clusters were newly made document elements (macro elements) was drawn, the oldest element was extracted by means of the method of the fifth embodiment, and tree diagram cutting was carried out. The extraction of the oldest element and the tree diagram cutting were repeated until the number of intra-cluster elements was below the upper limit thereof (four), whereby the branch structure shown in Fig. 26 was obtained.
Meanwhile, based on the content data (term data) of a 'silicon xxx fabrication method-related' patent document group which is one of the thirteen clusters, 300 documents similar to this patent document group were extracted from the 3000 documents extracted from the overall documents P as mentioned above.
A tree diagram was created for the 300 patent documents extracted from the 3000 patent documents without removing the oldest element. As a result of cutting the tree diagram g times by means of the method according to the first modified example, a total of nineteen clusters of document group 'E201' to document group 'E219' were formed (document group symbol 'E201' and so on was expediently assigned).
A tree diagram in which the obtained nineteen clusters were newly made document elements (macro elements) was drawn, the oldest element was extracted by means of the method of the fifth embodiment, and tree diagram cutting was carried out. The extraction of the oldest element and the tree diagram cutting were repeated until the number of intra-cluster elements was below the upper limit thereof (nine), whereby the branch structure shown in Fig. 27 was obtained.

Among the document elements of Figs. 26 and 27, a highlighted display was applied to those document elements in which the number of patent documents for which the applicant is company X occupies the top positions (within top five here) in order to distinguish these document elements from the other document elements and the document element in which the number of patent documents for which the applicant is company X occupies the top position was more strongly highlighted. Such a highlighted display may be achieved by means of the thickness of the frame as shown in Figs. 26 and 27 or may be implemented by means of color keying or patterning. Further, such a highlighting display is not limited to show whether documents of a certain applicant (one's own company or another company) occupies an upper position and may instead be determined by whether at least one document of a certain applicant is included or may be determined according to another criterion.

Further, the average value of the application dates of the respective document elements (here, the last two digits of the Christian year) was added to Figs. 26 and 27 as the value of the vertical axis. In addition, although only the symbol 'E20l' and so on was displayed as the name of the respective document elements for the sake of an expedient description in Figs. 26 and 27, labeling that indicates the characteristics of the content of the document elements is desirably performed on the basis of the content data of the documents belonging to each of document elements.

In the second embodiment, the document elements having a specified attribute among the respective document elements of the document correlation diagram such as, for example, document elements including patent documents of a specified applicant or document elements including patent document group for which the specified applicant occupies a significant share is displayed in a form distinct from the other document elements. As a result, it is possible to visually grasp the position in terms of content and time of document elements with a specified attribute such as, for example, patent groups belonging to a certain field of the specified applicant in relation to those of other companies. If one's own company is selected as the specified applicant, it is possible to find out the position in the industry as a whole for each part belonging to a certain field of one's own technology. By also displaying a time axis and placing the respective document elements in accordance with the time axis, the position of the company's own technology in the chain of development of the technical field can be grasped.

For example, when the similarities are calculated as per Fig. 26 and similar documents of a relatively large number (the top 3000 documents in terms of similarity here) are analyzed, similar documents spanning relatively multifarious technical fields are extracted and it is possible to grasp the position of one's own company among these similar documents. Hence, in addition to the above effects, it is possible to discover similar technologies that one's own company has scarcely looked at, and the possibility of application to other fields of one's own technology can be noticed. It is also possible to learn of the development in terms of content and time of other companies' technologies.

Furthermore, when the similarities are re-calculated with these 3000 documents serving as the population as per Fig. 27 and similar documents of a relatively small number (the top 300 documents in terms of similarity here) are analyzed, a more detailed comparison is possible on the competitive correlation with other companies in particular in the further filtered technical field.

Figs. 28 and 29 show parts of other display examples of the document correlation diagram of Fig. 26. In these examples, in addition to labeling based on content data such as 'silicon xxx powder related' being performed for each document element, the number of documents belonging to the document elements and the applicant ranking (company name and number of documents) are displayed to achieve a more detailed display. By adding a detailed display in this manner, a more detailed analysis is made possible.

The content of the detailed display is not limited to that described above and may include the international patent classification (IPC) of the patent documents, the application date (an average value or range or the like), keywords or the like and ranking based on the foregoing is also possible. Furthermore, a detailed display may be made at the same time for all the document elements as per Figs. 28 and 29. A document correlation diagram that does not initially include a detailed display may be displayed in an image display position and, when the cursor is moved to one document element, a detailed display related to the document element may be additionally output. The detailed display method may involve enlarging the fields where the document elements appear as per Fig. 28 or may involve displaying the elements as pop-ups outside these fields as per Fig. 29. Further, the display is not limited to Fig. 26 and the same detailed display may be rendered for Fig. 27 or other document correlation diagrams.

4-5-4. Effect of Fifth Embodiment

According to the fifth embodiment, by extracting clusters using tree diagram cutting and determining the intra-cluster arrangement on the basis of time data, a tree diagram that suitably represents the chronological development for each field can be drawn.

In particular, the extraction of parent clusters is performed on the basis of a function that includes, as a variable, one or both of the average value and the deviation of the link height of the document elements belonging to the tree diagram and the extraction of child clusters is performed on the basis of a function that includes, as a variable, one or both of the average value and the deviation value of the link height of the document elements belonging to the respective parent clusters. Hence, suitable parent and child clusters can be obtained even when the number of elements N is large.
In addition, the extraction of clusters is performed on the basis of a function that includes, as a variable, one or both of the average value and the deviation value of the link height of the document elements. Therefore, even in cases where the similarities of the document elements belonging to the tree diagram are high and so forth, wide compatibility with different shapes of tree diagrams is possible and suitable parent and child clusters can be obtained.

5. Examples of Time-series Arrangement

The sixth to eighth embodiments which relate to the time-series arrangement process will be described next.

5-1. Sixth Embodiment (Pole and Line Arrangement: PLA)

In the Pole and Line Arrangement, with respect to small clusters on the order of several document elements, the arrangement in the cluster is determined on the basis of the time data and the tree diagram arrangement data.

5-1-1. Arrangement Determination Procedure

Fig. 30 is a flowchart that illustrates the intra-cluster arrangement process of the sixth embodiment (pole and line arrangement; PLA). This flowchart is based on the premise that clusters are extracted by means of the process up to step S70 (cluster extraction) of Fig. 3 and the procedure of the sixth embodiment is shown in more detail for the step S80 (arrangement condition reading) and the step S90 (intra-cluster element arrangement) in Fig. 3. In the same steps as Fig. 3, 600 is added to the step numbers of Fig. 3 and the last two digits have the same step numbers as those of Fig. 3; hence, a detailed description may be omitted.
Fig. 31 shows an example of a tree diagram arrangement in the intra-cluster arrangement process of the sixth embodiment which complements Fig. 30. $E_1$ to $E_{20}$ represent document elements and, here, for the sake of expediency, a smaller suffix number is attached to an older document element with an earlier time t. Fig. 31A shows the respective tree diagram structures of five clusters extracted by the process up to step S70 in Fig. 3.
Once clusters are extracted in the first embodiment (Balance Cutting method: BC method), the second embodiment (Codimension Reduction method: CR method), the third embodiment (Cell Division method: CD method), or the fourth embodiment (Stepwise Cutting method: SC method) and so forth, first, the arrangement condition reading unit 80 performs reading of intra-cluster arrangement conditions (step S680). In accordance with these arrangement conditions, the intra-cluster element arrangement unit 90 determines the arrangement of the document elements in the clusters on the basis of the time data of the respective document elements in the clusters and the tree diagram arrangement data.
More specifically, first the cluster part of the tree diagram is regarded as a knockout tournament diagram and the winner of each stage (with the smaller time t) is determined (Fig. 31B). That is, it is judged as to which document element has a smaller time data t in order starting with the lower nodes (connection points) (with low link heights) and the results are recorded (step S691). This judgment is performed from the lowermost node (two-body link) to the uppermost node of the cluster (step S692). Thereupon, the winner at the lower node (document element for which time data t is smaller) is made a competitor at a higher node (the target of a time data t comparison) (step S693).
The winner (oldest document element) is determined if the judgments are completed to the uppermost node. Then, the winner is disposed in the head of the cluster (step S694).
In addition, branches from the winner are drawn in a quantity corresponding to the number of opponents in direct competition with the winner that have been defeated (the number of document elements compared directly with the oldest document element and for which the time data t is judged to be larger) (step S695: Fig. 31C). The following process is performed for each branch.
Thereafter, the defeated opponent is disposed in the head of each branch as the winner in each branch (step S696: Fig. 31D).
In addition, the number of defeated opponents in direct competition with the winner in each branch is counted (step S697). If the number of defeated opponents is 0, the processing in this branch is terminated. If the number of defeated opponents is 1 or more, further branches from the winner of the branch are newly drawn in a quantity corresponding to the number of opponents (step S698: Fig. 31D) and the process returns to step S696.
By repeating the process of steps S696 to S698, the intra-cluster arrangement is determined (Fig. 31E).

5-1-2 Effect of Sixth Embodiment

According to the sixth embodiment, by extracting clusters using tree diagram cutting and determining the intra-cluster arrangement on the basis of time data, a tree diagram that suitably represents the chronological development for each field can be drawn.
In particular, when the intra-cluster arrangement is determined, an arrangement in the time order can be reliably implemented and the intra-cluster branch structure can also be reflected to a certain extent.

5-2. Seventh Embodiment (Group Time Ordering; GTO)

Group Time Ordering is a method useful in cases where an element definition for document elements including a plurality of documents is carried out on the basis of classification information and large time units. When the element definition is performed on the basis of a large time unit (where a fixed number of years is taken as the unit, for example), contemporary elements are sometimes produced and, when the time series arrangement is considered, a problem can be occur. However, this problem is solved by determining the arrangement by adding classification information.

5-2-1. Arrangement Determination Procedure

Fig. 32 is a flowchart that illustrates the intra-cluster arrangement process of the seventh embodiment (group time ordering; GTO). This flowchart is based on the premise that clusters are extracted by means of the process up to step S70 (cluster extraction) of Fig. 3 and the procedure of the seventh embodiment is shown in more detail for the part of step S80 in Fig. 3 (arrangement condition reading) and step S90 (intra-cluster element arrangement). In the same steps as Fig. 3, 700 is added to the step numbers of Fig. 3 and the last two digits have the same step numbers as those of Fig. 3; hence, a detailed description may be omitted.
Fig. 33 shows a part of a tree diagram arrangement example in the intra-cluster arrangement process of the seventh embodiment which complements Fig. 32. Each of $E_{A1}$ and $E_{B1}$ and so forth represents a document element including a plurality of documents and, here, for the sake of expediency, the alphabet part of the suffix is the classification (international patent classification (IPC) or the like) and the Arabic numeral represents the time t (the smaller the numeral, the older the element).
If the tree diagram is cut and clusters are extracted (Fig. 33A) with a cutting height $\alpha$=a (where the link height d=a-bcos$\theta$) and $\alpha^*=\langle d\rangle+\delta\sigma_d$ (where $-3\leq\delta\leq3$, $0\leq\delta\leq2$ is particularly preferable and $\delta=1$ is most preferable) or at a cutting height derived by means of an association rule analysis or the like, first the arrangement condition reading unit 80 reads the arrangement conditions in the clusters (step S780). The intra-cluster element arrangement unit 90 determines the arrangement of the document elements in the clusters on the basis of the time data of the respective document elements and the tree diagram arrangement data in the clusters in accordance with the arrangement conditions.
More specifically, the oldest intra-cluster element is first disposed in the head of the cluster (step S791). When there are a plurality of oldest elements ($E_{A1}$ and $E_{B1}$ in Fig. 33B), the arrangement is made to a parallel connection.
Thereafter, for the remaining elements excluding the oldest element, a time series chain of each class is configured (step S792: Fig. 33B). Further, for each time series chain configured in step S792, an element of the same class is sought from the oldest elements extracted in step S791 (step S793).
Among the time series chains, for the time series chain with which the oldest element of the same class exists, a connection is formed with the oldest element of the same class (step S794). In other words, in the example of Fig. 33, for the time series chain including document elements $E_{A2}$ and $E_{A3}$ and the time series chain including document elements $E_{B2}$ and $E_{B3}$, a connection is formed with the oldest elements $E_{A1}$ and $E_{B1}$ of the same class.
Among the time series chains, for the time series chain with which the oldest element of the same class does not exist, an element having the highest degree of similarity to the oldest element in the time series chain is extracted from within the cluster. Further, a connection is formed through branching from the element having the highest degree of similarity and connecting to the oldest element in the time series chain for which the same class element did not exist (step S795: Fig. 33C). Fig. 33 shows a situation where the intra-cluster element with the highest degree of similarity to document element $E_{C2}$ was document element $E_{B2}$ and thus the document element $E_{C2}$ was linked to the document element $E_{B2}$.
An intra-cluster arrangement is determined as detailed above.

5-2-2. Effect of Seventh Embodiment

According to the seventh embodiment, by extracting clusters using tree diagram cutting and determining the intra-cluster arrangement on the basis of time data, a tree diagram that suitably represents the chronological development for each field can be drawn.
In particular, even when the contemporary elements are produced due to the element definition on the basis of a large time unit, the contemporary elements can be arranged by determining the intra-cluster arrangement by adding the classification information in cases where the element definition is also class-based.

5-3. Eighth Embodiment (Time Slice Analysis)

Time Slice analysis is a method that classifies a plurality of document elements of the analysis target on the basis of time data and then performs cluster analysis in each time-based class. This method differs from that of the sixth and seventh embodiments in that time data-based analysis is performed prior to the cluster extraction based on the content data. After the classification based on time data and the cluster analysis in each time-based class have ended, a document correlation diagram is completed by forming connections between the elements belonging to different time-based classes.

5-3-1. Configuration of Document Correlation Diagram Drawing Device

Fig. 34 illustrates, in more detail than Fig. 2, the configuration and function of the document correlation diagram drawing device of an eighth embodiment (time slice analysis; TSA). The same symbols have been assigned to the same parts of Fig. 2 and description to the same parts will be omitted here.
The document correlation diagram drawing device of the eighth embodiment includes, in addition to the respective configuration of the document correlation diagram drawing device illustrated in Fig. 2, a time slice classification unit 25 and a time slice connection unit 75.
The time slice classification unit 25 acquires time data for the respective document elements extracted by the time data extraction unit 20 from the process result storage unit 320 or directly from the time data extraction unit 20 and classifies the document set which is the analysis target into time slices of a fixed interval on the basis of these time data. The result of classification is sent directly to the similarity calculation unit 40 and is used in the processing thereof or is sent to and stored in the process result storage unit 320. The similarity calculation unit 40 calculates the similarity of the document elements in the respective time slices, the tree diagram drawing unit 50 creates a tree diagram for the respective time slices, and the cluster extraction unit 70 extracts clusters from the respective time slices.
The time slice connection unit 75 acquires cluster information extracted by the cluster extraction unit 70 from the process result storage unit 320 or directly from the cluster extraction unit 70 and, based on the cluster information, forms connections between the clusters belonging to the different time slices. The generated connection data are sent directly to the intra-cluster element arrangement unit 90 and used in the processing thereof or sent to and stored in the process result storage unit 320. In addition to placing the intra-cluster elements, the intra-cluster element arrangement unit 90 also references connection data of the time slice connection unit 75 to complete the document correlation diagram.

5-3-2. Document Correlation Diagram Drawing Procedure

Fig. 35 is a flowchart that illustrates the document correlation diagram drawing process of the eighth embodiment. The flowchart illustrates the procedure of the eighth embodiment in more detail than Fig. 3. In the same steps as Fig. 3, 800 is added to the step numbers of Fig. 3 and the last two digits have the same step numbers as those of Fig. 3; hence, a description that repeats the description of Fig. 3 may be omitted.
Fig. 36 shows an example of a tree diagram arrangement in the document correlation diagram drawing process of the eighth embodiment which complements Fig. 35.
First, the document reading unit 10 reads a plurality of document elements which are the analysis target from the document storage unit 330 of the recording device 3 in accordance with the reading conditions input by the input device 2 (step S810).
Thereafter, the time data extraction unit 20 extracts time data for the respective elements from the document element group read in the document reading step S810 (step S820).
Once the time data for the respective elements have been extracted, the document elements are classified on the basis of these time data (step S825). This process is performed by the time slice classification unit 25. More specifically, suppose that the time axis is sliced at fixed intervals (Δt = one year, for example) and a set of document elements having time data t where nstsn+1 (n=0, 1, 2, ...) is ‘n-slice’. Here, for t, the point of origin is moved by an amount equivalent to the forward threshold value of 0-slice.
Time data-based classification may be based on a variable interval rather than a fixed time interval. For example, time cutting may be performed by cutting when a fixed number is reached by accumulating the document elements in the time order. In other words, when there are one hundred analysis target elements, for example, and these elements are placed in the time order to become $E_1$, $E_2$, ..., $E_{100}$, in order starting with the oldest, let $E_1$ to $E_{20}$ be 0-slice and $E_{21}$ to $E_{40}$ be 1-slice and so forth for every twenty elements, for example. As a result, uneven distribution of the number of elements between the time slices can be prevented.

Thereafter, groups G are formed for each slice. More specifically, clusters are extracted from each slice as will be mentioned later.

First, the term data extraction unit 30 extracts term data (step S830) and the similarity calculation unit 40 calculates the similarity (or dissimilarity) between the document elements in each slice (step S840). Further, for each slice, the tree diagram drawing unit 50 draws a tree diagram (step S850). In addition, the cutting condition reading unit 60 reads the tree diagram cutting conditions (step S860) and the cluster extraction unit 70 extracts clusters from each slice (step S870).

The clusters extracted by the respective n-slices are hereinafter called groups G. Each group G holds the slice number n and the group number j and is denoted by G(n,j) (Fig. 36A). Group G sometimes also includes a plurality of document elements and sometimes includes one document element. A group consisting of only one document element is hereinafter called a self-evident group.

As the cutting height $\alpha$ of the tree diagram, for example, $\alpha^*=<d>+\delta\sigma_d$ (where $-3\leq\delta\leq3$, $-3\leq\delta\leq0$ is particularly preferable and $-2\leq\delta\leq-1$ is more preferable) is used. The reason for the $\delta$ value is made $-3\leq\delta$ is because, when $\delta$ is smaller than -3, empirically most groups become self-evident groups and, when $\delta$ is smaller than -3, there is no change in the result of the 'self-evident group'. Since a self-evident group is not in itself a poor result, a $\delta$ value smaller than -3 is not prevented.

As the cutting height $\alpha$ of the tree diagram, the cutting height differs for each time slice when a function that includes, as a variable, one or both of the average value and the deviation value of the link height d of the respective time slices as per $\alpha^*$ above. In particular, in the case of time slices with a small number of intra-slice elements (no more than 3, for example), the effect exerted by one element on the fluctuations in the average value and the deviation value of the link height d of the intra-slice elements is large. Therefore, there is also the possibility that the difference in the cutting height with respect to that of another time slice will be excessively large. Hence, when there is a time slice with a small number of intra-slice elements (three or less, for example), the similarity is defined by means of a correlation coefficient, for example, a tree diagram is drawn as the link height $d=a-b\cos\theta$ and the cutting height $\alpha$ is preferably in the range $a-b\leq\alpha\leq a-0.5b$.

The cluster extraction preferably performed by means of the tree diagram cutting described in steps S830 to S870. However, cluster extraction may also be performed by means of another method. For example, cluster extraction that employs the known k- average method may be performed, for example.

Further, the arc division method, which involves forming connections between the analysis target document elements and eliminating lines of larger dissimilarity than the cutting radius $\rho$ to extract clusters, may be used, for example. To explain a specific example of the arc division method, assuming that there are M analysis target elements ($E_1$, $E_2$, ..., $E_M$), a distance matrix (M rows by M columns) a component of which is the distance r between the analysis target elements is drawn. Thereafter, the cutting radius $\rho^*=<r>+\delta\sigma_r$ (where $-3\leq\delta\leq3$, particularly preferably $-3\leq\delta\leq0$, and $-2\leq\delta\leq-1$ is more preferable) is determined using the standard deviation $\sigma_r$ and the average value $<r>$ of the distance r between elements. Thereafter, an adjacency matrix (M rows by M columns) for which the component exceeding the threshold value $\rho^*$ of the component r of the distance matrix is 0 is drawn. Finally, clusters are generated by means of a non-zero component of adjacent vectors ($r_1$', $r_2$' , ..., $r_m$') including the column component of the adjacency matrix.

For example, when the adjoining vector related to the document element $E_1$ is (0, 0.5, 0.6, 0, ..., 0) (each component is calculated on the basis of the distance r from each of the document elements $E_1$, $E_2$, $E_3$, $E_4$, ..., $E_M$ and the omitted components are all 0), the document element $E_1$ is in the same cluster as the document elements $E_2$ and $E_3$.

Incidentally, the reason for the $\delta$ value in calculating the cutting radius $\rho^*$ is made $-3\leq\delta$ is because, as in the case of $\alpha^*$, when $\delta$ is smaller than -3, empirically most groups become self-evident groups and, when $\delta$ is smaller than -3, there is no change in the result of the self-evident groups. However, a value smaller than -3 is not prevented.

The method of forming groups G may be a method other than the cluster analysis above. For example, when the document elements have already been classified by the patent classification, enterprise names or the like, group definitions may be made by using the patent classification, enterprise names or the like. In this case, since the element definition and the group definition coincide, one group is established for one document element that includes a plurality of documents (which is also a self-evident group).

Once the groups G have been formed by whichever method such as cluster extraction for each n slice, connections between groups belonging to the 0 slice are then determined (step S872). For example, the respective clusters obtained by means of the tree diagram cutting are connected by means of the tree diagram connection structure above the cutting position (Fig. 36B).

Connections between slices are then made. This process is performed by the time slice connection unit 75.

More specifically, a document element with the highest similarity (hereinbelow, the shortest distance element) to the oldest element in the group G(n,j) that belongs to each n-slice ($n\neq0$) is selected from the elements in the groups $G(\tau,j)$ which are temporally anterior such that $\tau<n$. The oldest element in the group G(n,j) and the shortest distance element therefrom selected from the temporally anterior groups $G(\tau,j)$ are connected (step S875: Fig. 36C). Incidentally, when a plurality of shortest distance elements exist, the oldest of these elements is selected and connected to the oldest element in the group G(n,j).

Alternatively, the group G(n,j) belonging to each n-slice ($n \neq 0$) and the group with the highest similarity between groups (with the shortest distance between groups) may be selected from the groups $G(\tau,j)$ which is temporally anterior such that $\tau<n$. In this case, the oldest element of group G(n,j) and the newest element of the selected temporally anterior group $G(\tau,j)$ are connected. The distance between groups can be defined from the distance between centers or the average of all the distances or the like by using the dissimilarity (distance) between the elements belonging to the groups being compared. In the case of a self-evident group including one group which is one document element, the distance between groups coincides with the dissimilarity between the elements (distance between the elements).

Finally, the arrangement condition reading unit 80 reads the document element arrangement conditions in the respective groups (step S880) and the intra-cluster element arrangement unit 90 determines the arrangement of the document elements in the respective groups (step S890) and the document correlation diagram is completed. Incidentally, although the document elements are disposed in parallel in the respective groups in Fig. 36C, another arrangement such as a time-series arrangement within each group is also possible.

Fig. 37 shows a first specific example of the document correlation diagram drawn by the method of the eighth embodiment and the process of drawing the same. The same Laid Open publications as those of Fig. 7 of the first embodiment were taken as the document elements and the application dates of the respective document elements were taken as the time data t. The document elements were classified into time slices for which n=0 to 6 for each year. A tree diagram was drawn for each time slice and the respective tree diagrams were cut using the cutting height $\alpha^*=\langle d\rangle-\sigma_d$ to form groups (Fig. 37A). Fig. 37A shows only an aspect of tree diagram cutting for the time slice n=2 and, as a result of the tree diagram cutting with respect to the other time slices, all the groups were self-evident groups of only one element and, hence, an illustration of the tree diagram cutting was omitted. The oldest element of each group was connected to the shortest distance element of a temporally anterior group, and in each group, elements were connected in a time series. A specified application number was added for each document element to the document correlation diagram (Fig. 37B).

Fig. 38 shows a second specific example of the document correlation diagram drawn by the method of the eighth embodiment and the process of drawing the same. For document elements (macro elements) in the same sixteen fields as those of Fig. 14 of the third embodiment, by the method of the eighth embodiment, the average value of the application dates of the documents constituting each of the document elements was taken as the time data t of each of the document elements, and the document elements were classified to the time slices for which n=0 to 4 for each year. A tree diagram was drawn for each time slice and the tree diagram was cut using the cutting height $\alpha^*=\langle d\rangle-\sigma_d$ to form groups (Fig. 38A). The oldest element of each group was connected to the shortest distance element of the temporally anterior group, and in each group, elements were connected in a time series.

Keywords characterizing the sixteen fields were added to the document correlation diagram (Fig. 38B).

Fig. 39 shows a third specific example of the document correlation diagram drawn by the method of the eighth embodiment and the process of drawing the same according to. The same Laid Open publications as those of Fig. 7 of the first embodiment were taken as the document elements and the application dates of the respective document elements were taken as the time data t. The document elements were classified into time slices for which n=0 to 6 for each year (which is similar to Fig. 37). A distance matrix having as each component the distance r between elements was drawn in accordance with the arc division method for each of the time slices. The distance matrix was then converted into an adjacency matrix by means of the cutting radius $\rho^*=\langle r\rangle-\sigma_r$ (Fig. 39A) and was subjected to cluster analysis to form groups. Incidentally, the time slice with two elements or less was not subjected to the arc division method; the time slice for which the distance between the elements defined by the correlation coefficient exceeded 0.5 was made to have two groups and an illustration in Fig. 39A was omitted. Thereafter, the oldest element of each group was connected to the shortest distance element of the temporally anterior group, and in each group, elements were connected in a time series. A specified application number was added for each document element to the document correlation diagram (Fig. 39B).

Fig. 40 shows a fourth specific example of the document correlation diagram drawn by the method of the eighth embodiment and the process of drawing the same. For document elements (macro elements) of the same sixteen fields as those of Fig. 14 of the third embodiment, the average value of the application dates of the documents constituting each of the document elements was taken as the time data t of each of the document elements, and the document elements were classified to the time slices for which n=0 to 4 for each year (which is similar to Fig. 38). A distance matrix having as each component the distance r between elements was drawn in accordance with the arc division method for each of the time slices. The distance matrix was then converted into an adjacency matrix by means of the cutting radius $\rho^*=\langle r\rangle-\sigma_r$ (Fig. 40A) and was subjected to cluster analysis to form groups. Incidentally, the time slice with two elements or less was not subjected to the arc division method; the time slice for which the distance between the elements defined by the correlation coefficient exceeded 0.5 was made to have two groups and an illustration in Fig. 40A was omitted. Thereafter, the oldest element of each group was connected to the shortest distance element of the temporally anterior group, and in each group, elements were connected in a time series. Keywords characterizing the sixteen fields were then added to the document correlation diagram (Fig. 40B).

5-3-3. Effect of Eighth Embodiment

According to the eighth embodiment, a tree diagram suitably showing the chronological development for each of the fields can be drawn by performing cluster extraction and time data-based classification.
In particular, since the time data-based classification is firstly performed, the correlation between documents of the same period in different fields can be expressed as well as the correlation between documents of the same field in different periods.

## Claims

1. A document correlation diagram drawing device, comprising:

    extraction means for extracting content data and time data of each of a plurality of document elements each including one or a plurality of documents;
    tree diagram drawing means for drawing a tree diagram showing correlations between the plurality of document elements on the basis of the content data of the document elements;
    clustering means for cutting the tree diagram on the basis of a predetermined rule and extracting clusters; and
    intra-cluster arrangement means for determining an intra-cluster arrangement of the document elements belonging to each cluster on the basis of the time data of the document elements.

2. The document correlation diagram drawing device according to claim 1, wherein the predetermined rule on the basis of which the clustering means cuts the tree diagram is derived by means of association rule analysis.

3. The document correlation diagram drawing device according to claim 2, wherein the predetermined rule is derived on the basis of shape parameters of the tree diagram.

4. The document correlation diagram drawing device according to claim 1 or 2, wherein the predetermined rule is derived on the basis of the number of vector dimensions of the document elements linked by each node of the tree diagram.

5. The document correlation diagram drawing device according to claim 4, wherein the clustering means judges, for each node, whether the number of vector dimensions of the document elements linked by each node is equal to or more than a predetermined value and individually cuts the nodes having the number of vector dimensions equal to or more than the predetermined value on the basis of the judgment results.

6. The document correlation diagram drawing device according to claim 1, wherein the clustering means extracts parent clusters by cutting the tree diagram, creates a partial tree diagram showing the correlation between the document elements belonging to each parent cluster on the basis of the content data of the document elements belonging to each parent cluster, and extracts child clusters by cutting the created partial tree diagram on the basis of a predetermined rule.

7. The document correlation diagram drawing device according to claim 6, wherein the clustering means removes a vector component, for which the deviation between the document elements belonging to each parent cluster takes a smaller value than the value determined by a predetermined method, from the document element vectors so as to create the partial tree diagram.

8. The document correlation diagram drawing device according to claim 1, wherein the tree diagram drawing means draws the tree diagram so that a link height between the document elements reflects the degree of similarity between the document elements, and
wherein the clustering means extracts the clusters by cutting the tree diagram at two or more predetermined heights of the tree diagram.

9. The document correlation diagram drawing device according to any one of claims 1 to 8, wherein the tree diagram drawing means draws the tree diagram so that the link height between the document elements reflects the degree of similarity between the document elements, and

wherein the clustering means extracts the clusters by cutting the tree diagram at a cutting position based on a function including, as a variable, one or both of the average value and the deviation value of the link heights between the document elements belonging to the tree diagram.

**10.** The document correlation diagram drawing device according to any one of claims 1 to 7, wherein the tree diagram drawing means draws the tree diagram so that the link height between the document elements reflects the degree of similarity between the document elements, and
wherein the clustering means extracts parent clusters by cutting the tree diagram at a cutting position based on a function including, as a variable, one or both of the average value and the deviation value of the link heights between the document elements belonging to the tree diagram and extracts child clusters by cutting each parent cluster at a cutting position based on a function including, as a variable, one or both of the average value and the deviation value of the link heights between the document elements belonging to each parent cluster.

**11.** The document correlation diagram drawing device according to any one of claims 1 to 10, further comprising distinctive indication adding means for adding an indication which distinguishes a document element with a specified attribute from other document elements on the basis of the content data of the document element.

**12.** The document correlation diagram drawing device according to any one of claims 1 to 11, wherein the intra-cluster arrangement means
performs a comparison with respect to which of the linked document elements is older at each node in the tree diagram configured by the document elements belonging to the cluster in the order from the lowermost node to the uppermost node by using the document element judged as being older at a lower node as a comparison target at an upper node, and records the comparison result,
disposes the oldest element determined as the comparison result at the uppermost node on the head of the cluster, and
draws branches from the oldest element by the number of document elements directly compared with the oldest element and connects the compared document elements to the branches so as to determine the arrangement.

**13.** The document correlation diagram drawing device according to any one of claims 1 to 11, wherein the intra-cluster arrangement means
extracts the oldest element or elements in the cluster and disposes the oldest element or elements on the head of the cluster,
forms time-series arrangements of the document elements other than the oldest element in each class used for defining the document elements,
connects, among the time-series arrangements, a time-series arrangement, in which the oldest element exists in the same class, to the oldest element of the same class, and connects, among the time-series arrangements, a time-series arrangement, in which the oldest element does not exist in the same class, to a document element, selected from the cluster, of the highest degree of similarity to an oldest element within the time-series arrangement so as to determine the arrangement in the cluster.

**14.** The document correlation diagram drawing device according to any one of claims 1 to 11, further comprising time slice classification means and time slice connection means,
wherein the time slice classification means classifies the plurality of document elements into a plurality of time slices on the basis of the time data of the document elements,
wherein the tree diagram drawing means draws a tree diagram showing the correlation between the document elements belonging to each time slice,
wherein the clustering means extracts the clusters by cutting the tree diagram of each time slice on the basis of a predetermined rule, and
wherein the time slice connection means connects the clusters belonging to different time slices.

**15.** A document correlation diagram drawing device, comprising:

extraction means for extracting content data and time data of each of a plurality of document elements each including one or a plurality of documents;
time slice classification means for classifying the plurality of document elements into a plurality of time slices on the basis of the time data of the document elements;
clustering means for extracting clusters from the time slices on the basis of the content data of the document elements belonging to each time slice; and

time slice connection means for connecting the clusters belonging to different time slices.

**16.** A document correlation diagram drawing method, comprising:

an extraction step of extracting content data and time data of each of a plurality of document elements each including one or a plurality of documents;
a tree diagram drawing step of drawing a tree diagram showing correlations between the plurality of document elements on the basis of the content data of the document elements;
a clustering step of cutting the tree diagram on the basis of a predetermined rule and extracting clusters; and
an intra-cluster arrangement step of determining an intra-cluster arrangement of the document elements belonging to each cluster on the basis of the time data of the document elements.

**17.** A document correlation diagram drawing program allowing a computer to execute:

an extraction step of extracting content data and time data of each of a plurality of document elements each including one or a plurality of documents;
a tree diagram drawing step of drawing a tree diagram showing correlations between the plurality of document elements on the basis of the content data of the document elements;
a clustering step of cutting the tree diagram on the basis of a predetermined rule and extracting clusters; and
an intra-cluster arrangement step of determining an intra-cluster arrangement of the document elements belonging to each cluster on the basis of the time data of the document elements.

FIG. 1

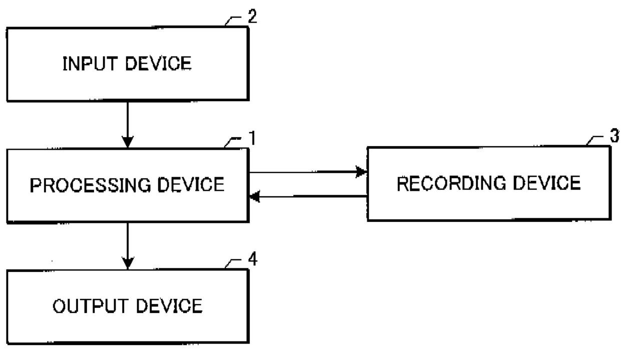
INPUT DEVICE
2
PROCESSING DEVICE
1
RECORDING DEVICE
3
OUTPUT DEVICE
4

FIG. 2

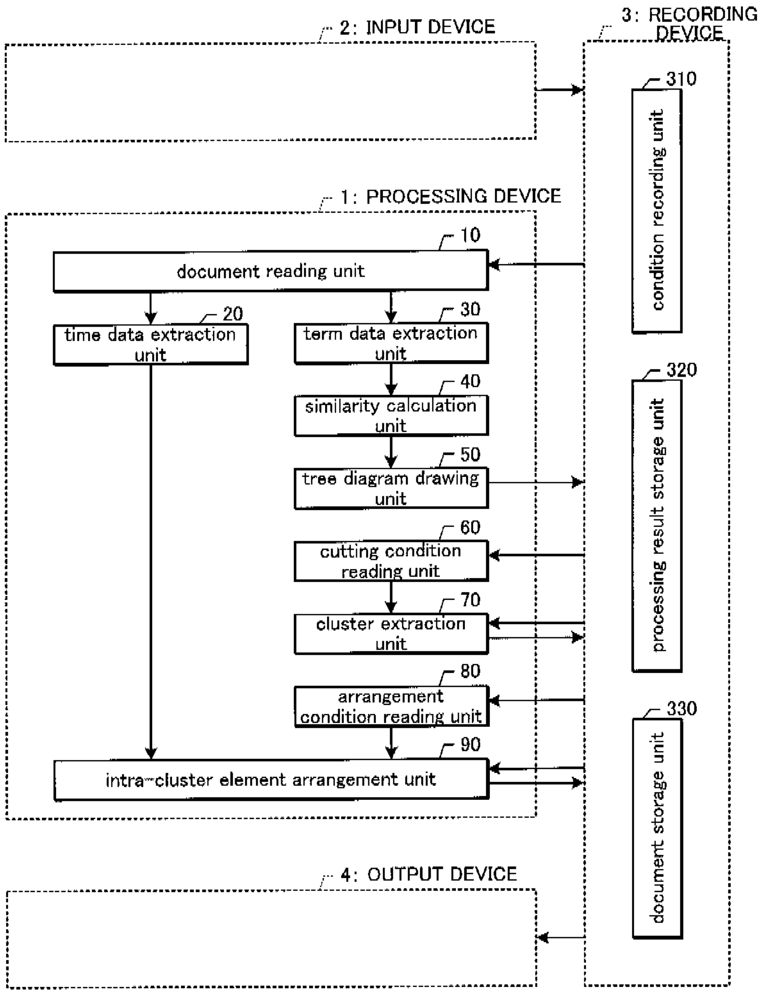
2: INPUT DEVICE
3: RECORDING DEVICE
1: PROCESSING DEVICE
10
document reading unit
20
time data extraction unit
30
term data extraction unit
40
similarity calculation unit
50
tree diagram drawing unit
60
cutting condition reading unit
70
cluster extraction unit
80
arrangement condition reading unit
90
intra-cluster element arrangement unit
310
condition recording unit
320
processing result storage unit
330
document storage unit
4: OUTPUT DEVICE

FIG. 3

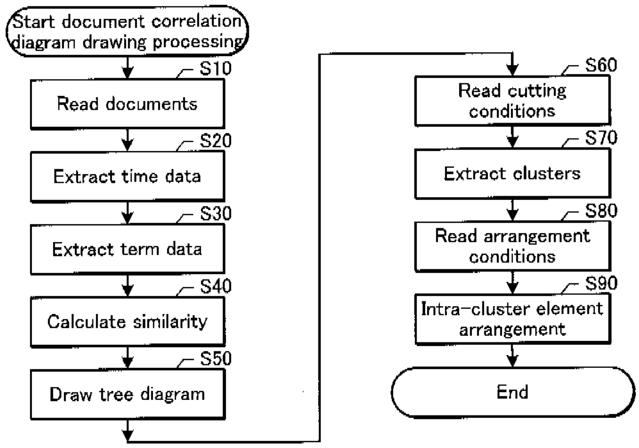
Start document correlation diagram drawing processing
S10
Read documents
S20
Extract time data
S30
Extract term data
S40
Calculate similarity
S50
Draw tree diagram
S60
Read cutting conditions
S70
Extract clusters
S80
Read arrangement conditions
S90
Intra-cluster element arrangement
End

FIG. 4

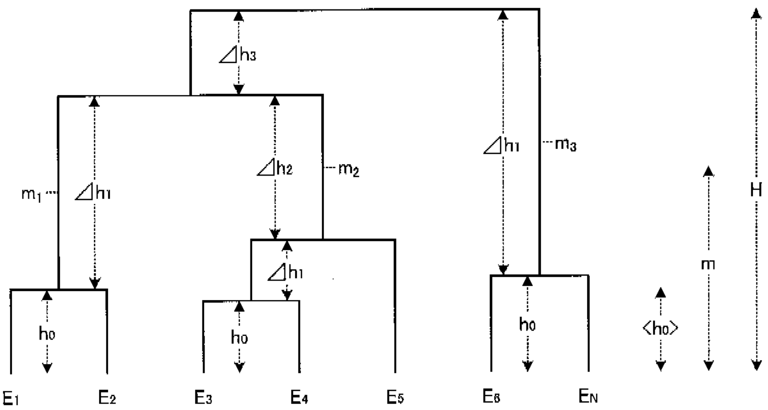
⊿h3
⊿h1
m3
⊿h2
m2
m1
⊿h1
H
m
⊿h1
h0
h0
h0
<h0>
E1
E2
E3
E4
E5
E6
EN

FIG. 5

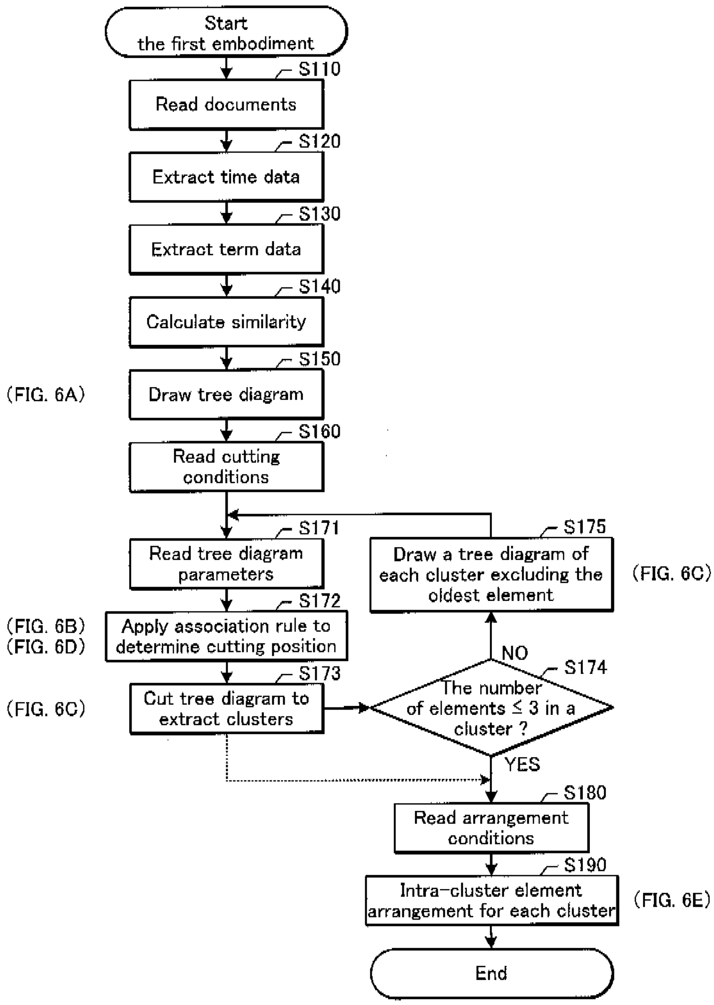
Start
the first embodiment
S110
Read documents
S120
Extract time data
S130
Extract term data
S140
Calculate similarity
S150
(FIG. 6A)
Draw tree diagram
S160
Read cutting conditions
S171
Read tree diagram parameters
S172
(FIG. 6B)
(FIG. 6D)
Apply association rule to determine cutting position
S173
(FIG. 6C)
Cut tree diagram to extract clusters
S174
The number of elements ≤ 3 in a cluster ?
NO
S175
Draw a tree diagram of each cluster excluding the oldest element
(FIG. 6C)
YES
S180
Read arrangement conditions
S190
Intra-cluster element arrangement for each cluster
(FIG. 6E)
End

FIG. 6A

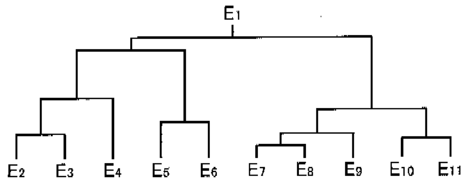


FIG. 6B

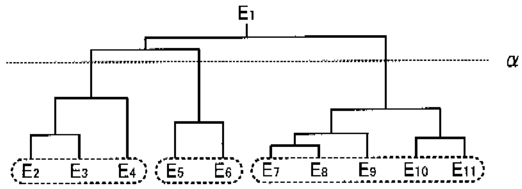


FIG. 6C

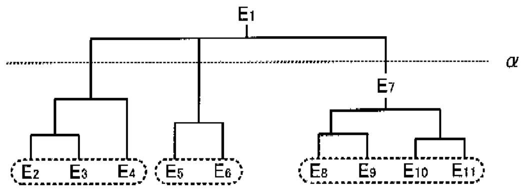


FIG. 6D

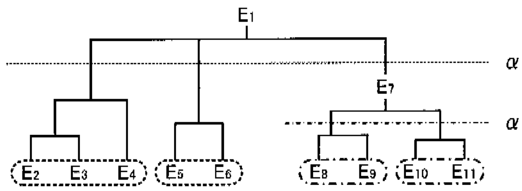


FIG. 6E

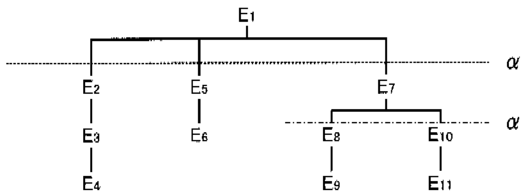

FIG. 7

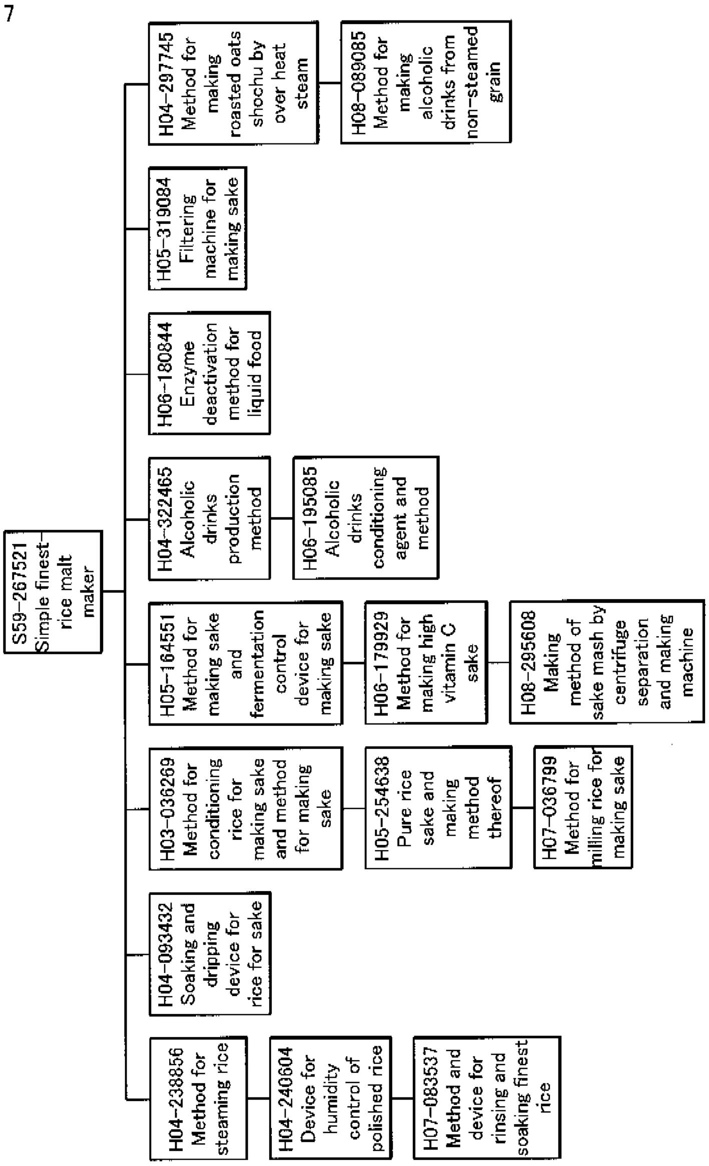
S59-267521 Simple finest-rice malt maker
H04-238856 Method for steaming rice
H04-240604 Device for humidity control of polished rice
H07-083537 Method and device for rinsing and soaking finest rice
H04-093432 Soaking and dripping device for rice for sake
H03-036269 Method for conditioning rice for making sake and method for making sake
H05-254638 Pure rice sake and making method thereof
H07-036799 Method for milling rice for making sake
H05-164551 Method for making sake and fermentation control device for making sake
H06-179929 Method for making high vitamin C sake
H08-295608 Making method of sake mash by centrifuge separation and making machine
H04-322465 Alcoholic drinks production method
H06-195085 Alcoholic drinks conditioning agent and method
H06-180844 Enzyme deactivation method for liquid food
H05-319084 Filtering machine for making sake
H04-297745 Method for making roasted oats shochu by over heat steam
H08-089085 Method for making alcoholic drinks from non-steamed grain

FIG. 8

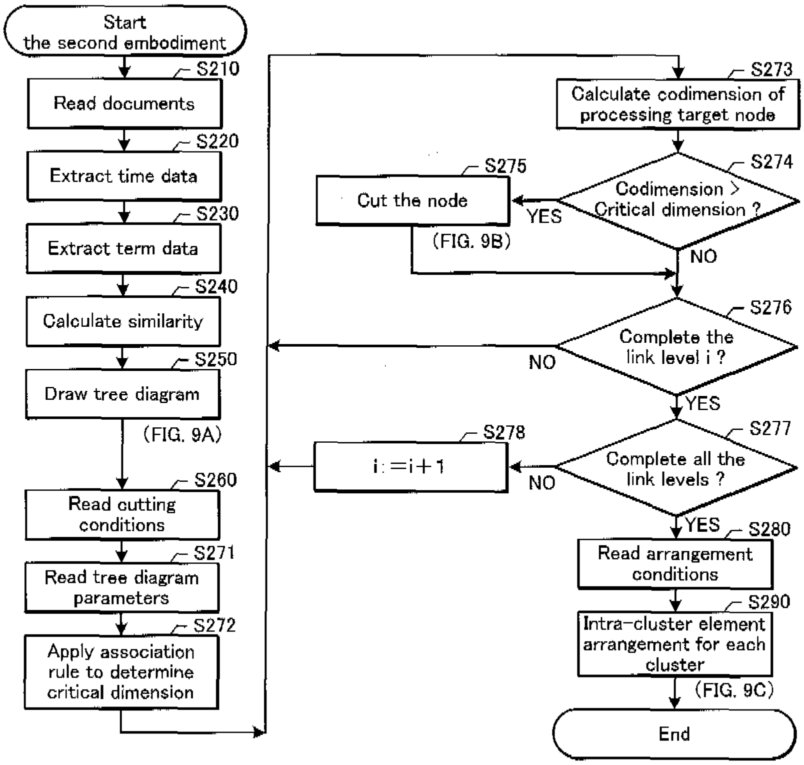
Start
the second embodiment
S210
Read documents
S220
Extract time data
S230
Extract term data
S240
Calculate similarity
S250
Draw tree diagram
(FIG. 9A)
S260
Read cutting conditions
S271
Read tree diagram parameters
S272
Apply association rule to determine critical dimension
S273
Calculate codimension of processing target node
S274
Codimension > Critical dimension ?
YES
S275
Cut the node
(FIG. 9B)
NO
S276
Complete the link level i ?
NO
YES
S277
Complete all the link levels ?
NO
S278
i:=i+1
YES
S280
Read arrangement conditions
S290
Intra-cluster element arrangement for each cluster
(FIG. 9C)
End

FIG. 9A

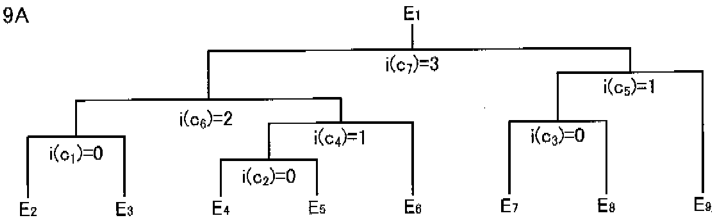


FIG. 9B

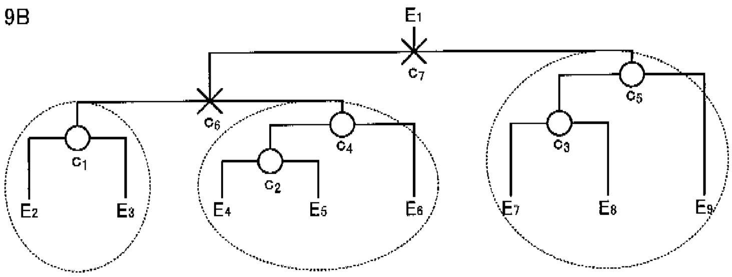


FIG. 9C

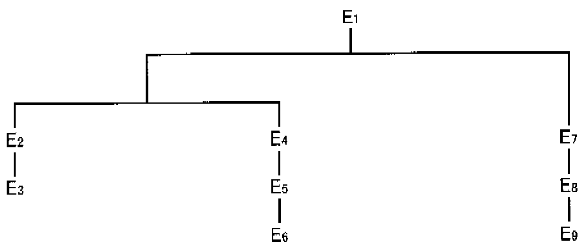

FIG. 10

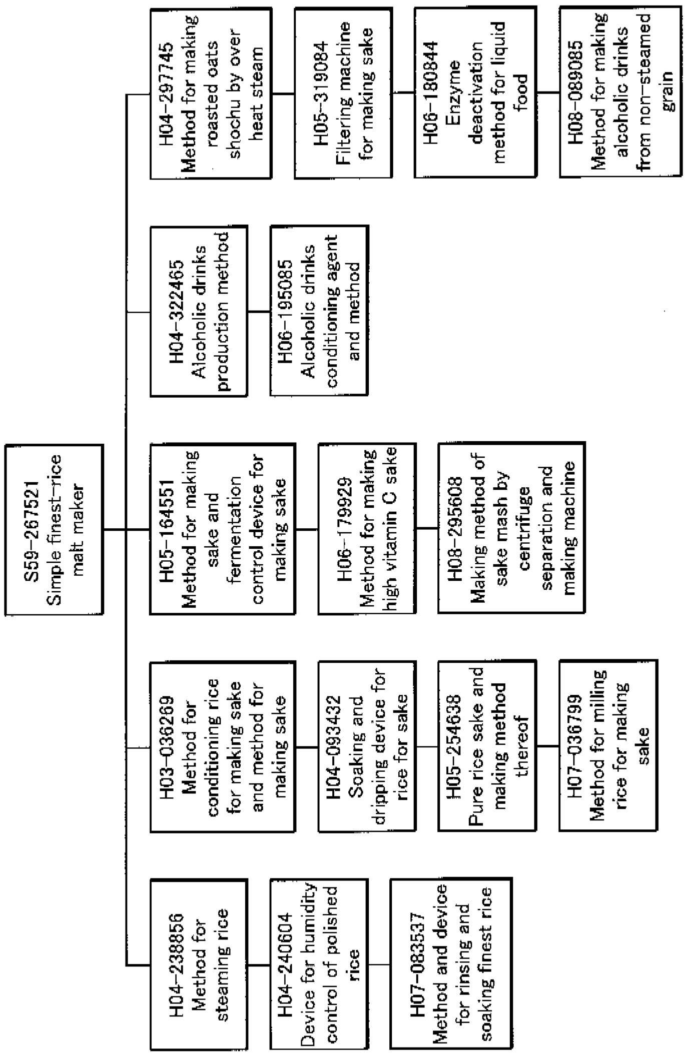
S59-267521 Simple finest-rice malt maker
H04-297745 Method for making roasted oats shochu by over heat steam
H05-319084 Filtering machine for making sake
H06-180844 Enzyme deactivation method for liquid food
H08-089085 Method for making alcoholic drinks from non-steamed grain
H04-322465 Alcoholic drinks production method
H06-195085 Alcoholic drinks conditioning agent and method
H05-164551 Method for making sake and fermentation control device for making sake
H06-179929 Method for making high vitamin C sake
H08-295608 Making method of sake mash by centrifuge separation and making machine
H03-036269 Method for conditioning rice for making sake and method for making sake
H04-093432 Soaking and dripping device for rice for sake
H05-254638 Pure rice sake and making method thereof
H07-036799 Method for milling rice for making sake
H04-238856 Method for steaming rice
H04-240604 Device for humidity control of polished rice
H07-083537 Method and device for rinsing and soaking finest rice

FIG. 11

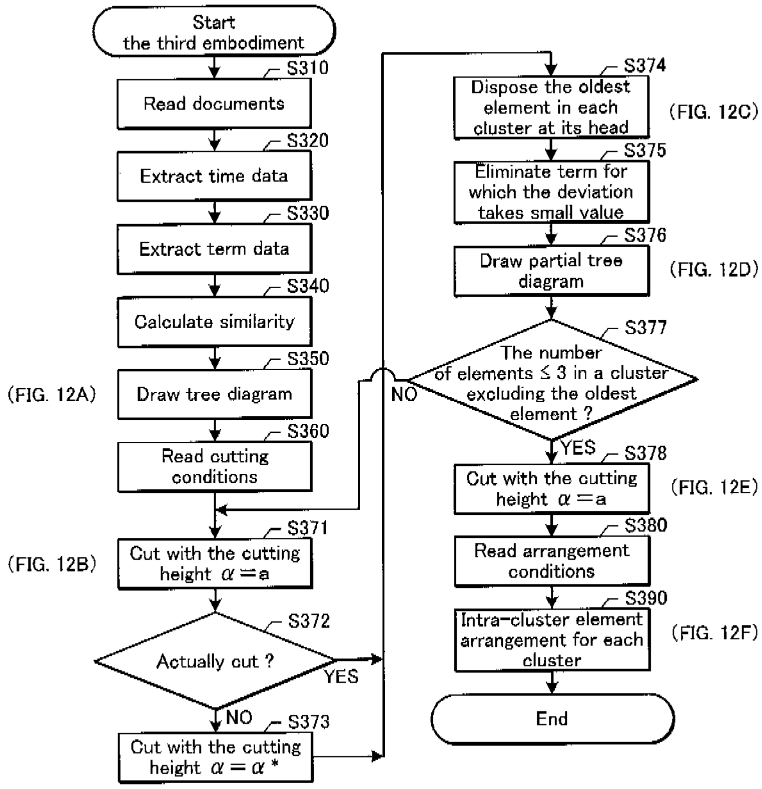
Start
the third embodiment
S310
Read documents
S320
Extract time data
S330
Extract term data
S340
Calculate similarity
S350
(FIG. 12A)
Draw tree diagram
S360
Read cutting conditions
S371
(FIG. 12B)
Cut with the cutting height α = a
S372
Actually cut ?
YES
NO
S373
Cut with the cutting height α = α *
S374
Dispose the oldest element in each cluster at its head
(FIG. 12C)
S375
Eliminate term for which the deviation takes small value
S376
Draw partial tree diagram
(FIG. 12D)
S377
The number of elements ≤ 3 in a cluster excluding the oldest element ?
NO
YES
S378
Cut with the cutting height α = a
(FIG. 12E)
S380
Read arrangement conditions
S390
Intra-cluster element arrangement for each cluster
(FIG. 12F)
End

FIG. 12A

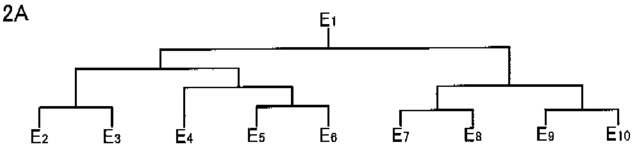


FIG. 12B

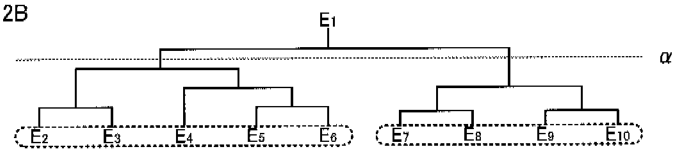


FIG. 12C

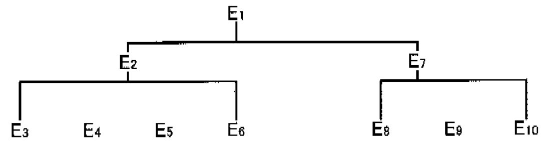


FIG. 12D

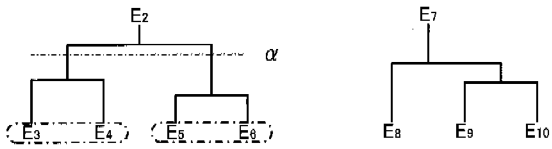


FIG. 12E

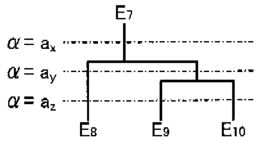


FIG. 12F

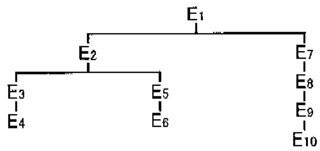

FIG. 13

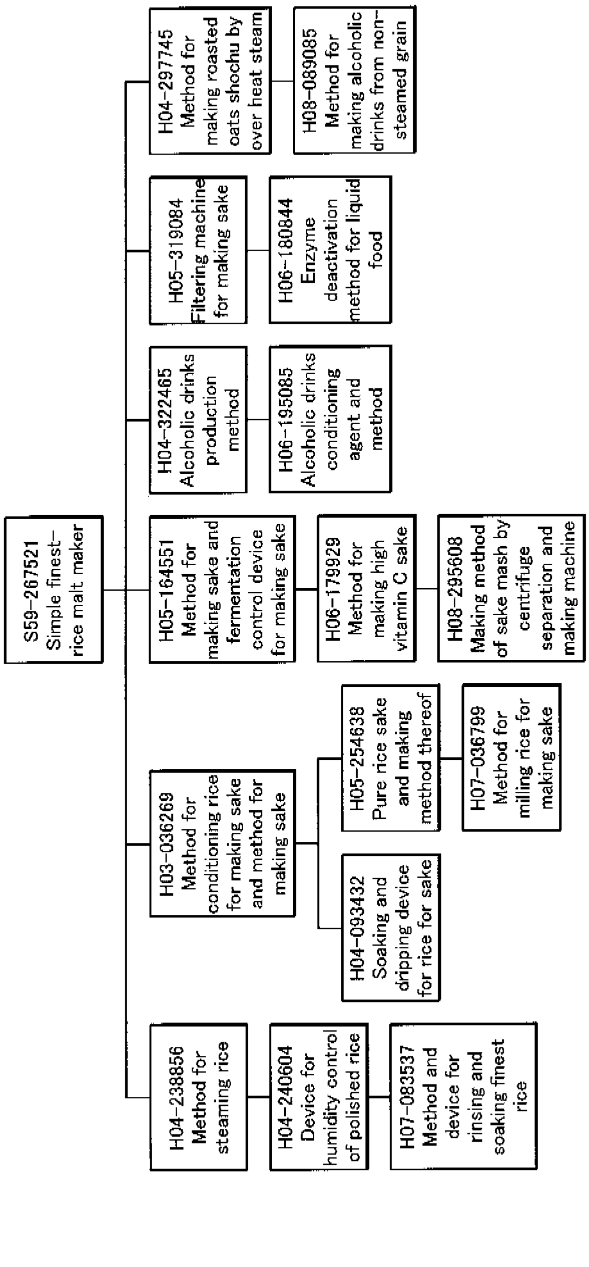
S59-267521 Simple finest-rice malt maker
H04-238856 Method for steaming rice
H04-240604 Device for humidity control of polished rice
H07-083537 Method and device for rinsing and soaking finest rice
H03-036269 Method for conditioning rice for making sake and method for making sake
H04-093432 Soaking and dripping device for rice for sake
H05-254638 Pure rice sake and making method thereof
H07-036799 Method for milling rice for making sake
H05-164551 Method for making sake and fermentation control device for making sake
H06-179929 Method for making high vitamin C sake
H08-295608 Making method of sake mash by centrifuge separation and making machine
H04-322465 Alcoholic drinks production method
H06-195085 Alcoholic drinks conditioning agent and method
H05-319084 Filtering machine for making sake
H06-180844 Enzyme deactivation method for liquid food
H04-297745 Method for making roasted oats shochu by over heat steam
H08-089085 Method for making alcoholic drinks from non-steamed grain

FIG. 14

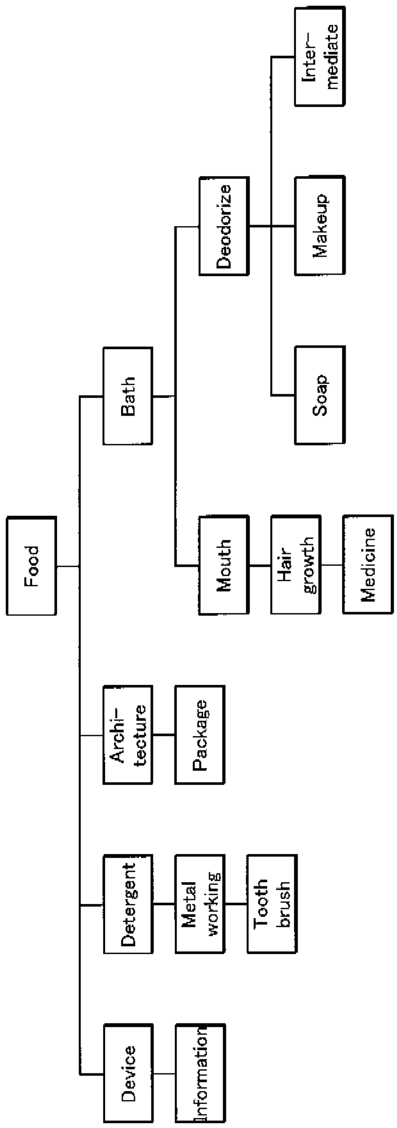
Food
Bath
Deodorize
Inter-
mediate
Makeup
Soap
Mouth
Hair
growth
Medicine
Archi-
tecture
Package
Detergent
Metal
working
Tooth
brush
Device
Information

FIG. 15

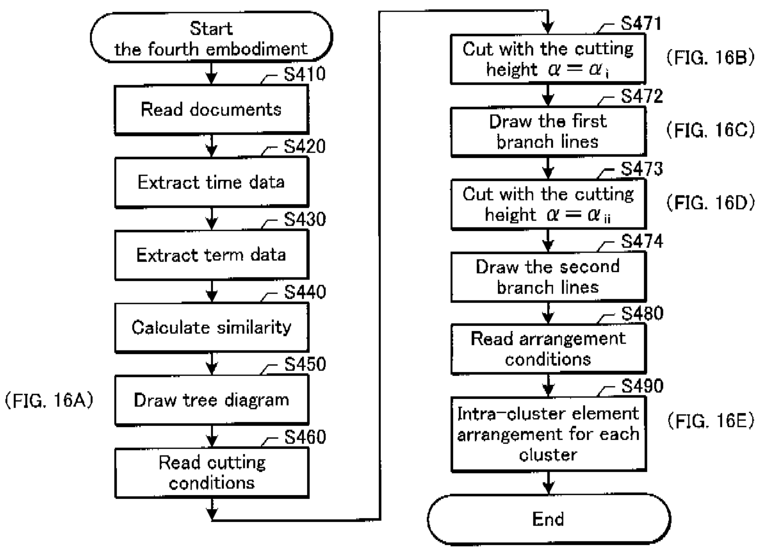
Start
the fourth embodiment
S410
Read documents
S420
Extract time data
S430
Extract term data
S440
Calculate similarity
S450
(FIG. 16A)
Draw tree diagram
S460
Read cutting conditions
S471
Cut with the cutting height $\alpha = \alpha_i$
(FIG. 16B)
S472
Draw the first branch lines
(FIG. 16C)
S473
Cut with the cutting height $\alpha = \alpha_{ii}$
(FIG. 16D)
S474
Draw the second branch lines
S480
Read arrangement conditions
S490
Intra-cluster element arrangement for each cluster
(FIG. 16E)
End

FIG. 16A

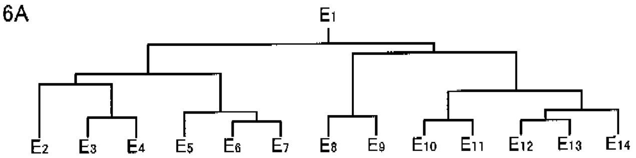


FIG. 16B

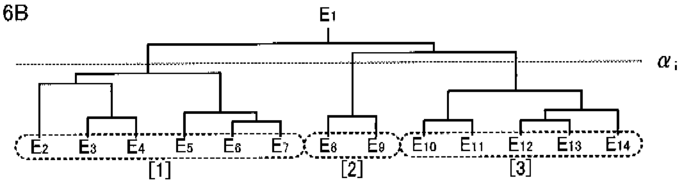


FIG. 16C

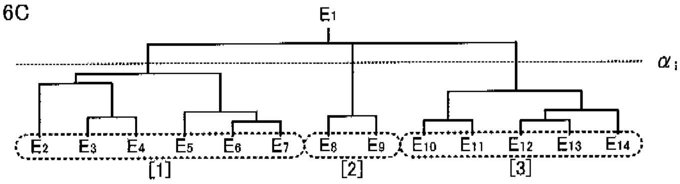


FIG. 16D

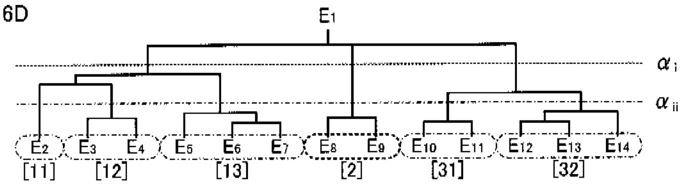


FIG. 16E

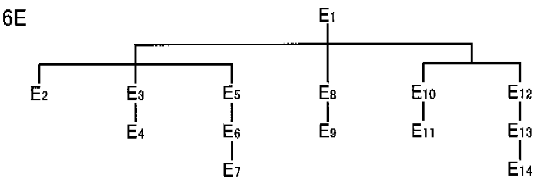

FIG. 17

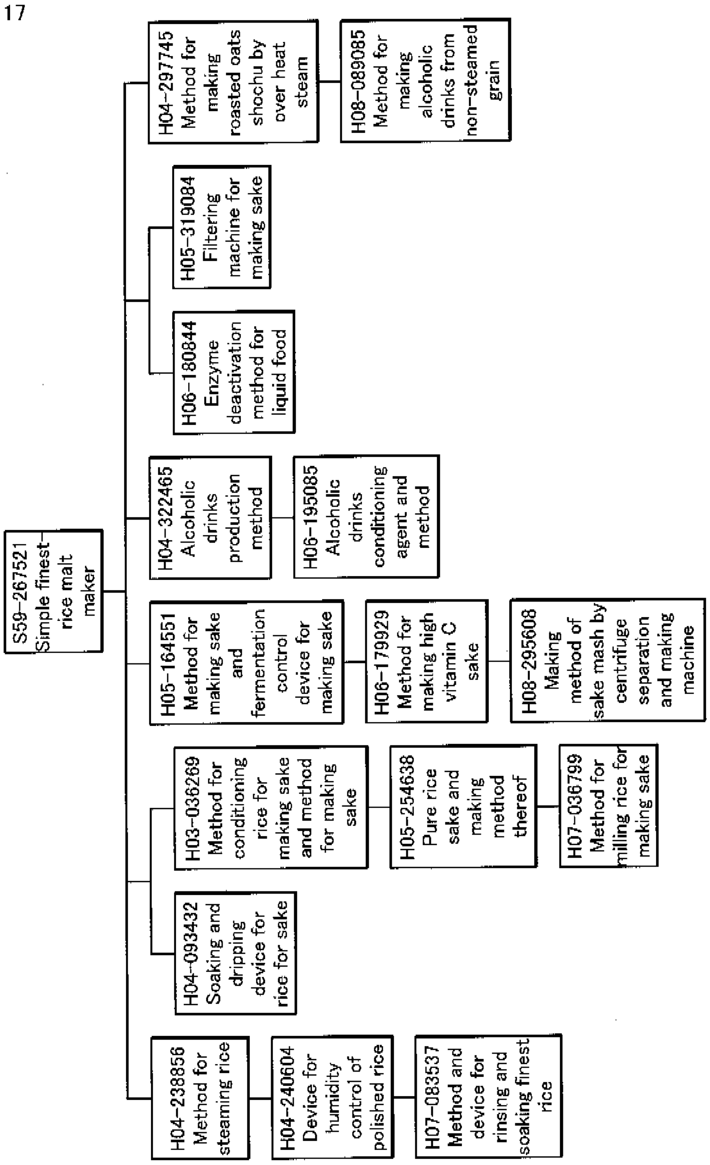
S59-267521 Simple finest-rice malt maker
H04-238856 Method for steaming rice
H04-240604 Device for humidity control of polished rice
H07-083537 Method and device for rinsing and soaking finest rice
H04-093432 Soaking and dripping device for rice for sake
H03-036269 Method for conditioning rice for making sake and method for making sake
H05-254638 Pure rice sake and making method thereof
H07-036799 Method for milling rice for making sake
H05-164551 Method for making sake and fermentation control device for making sake
H06-179929 Method for making high vitamin C sake
H08-295608 Making method of sake mash by centrifuge separation and making machine
H04-322465 Alcoholic drinks production method
H06-195085 Alcoholic drinks conditioning agent and method
H06-180844 Enzyme deactivation method for liquid food
H05-319084 Filtering machine for making sake
H04-297745 Method for making roasted oats shochu by over heat steam
H08-089085 Method for making alcoholic drinks from non-steamed grain

FIG. 18

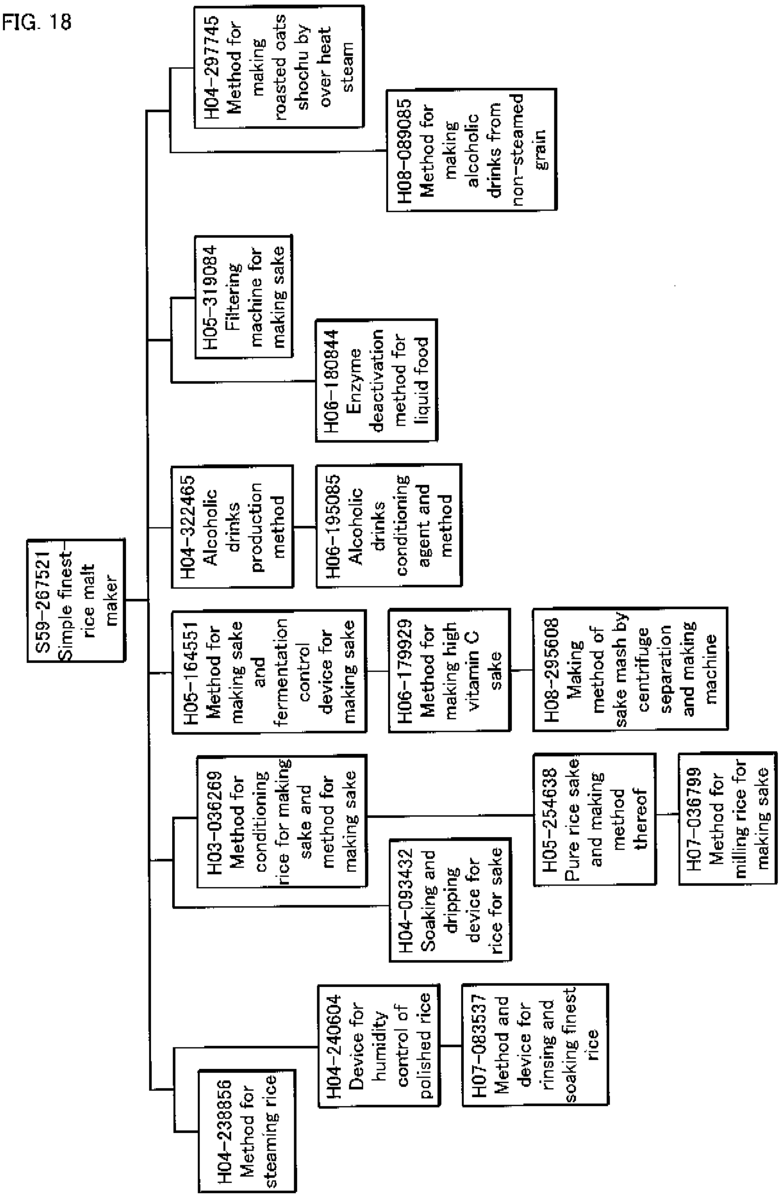
S59-267521 Simple finest-rice malt maker
H04-297745 Method for making roasted oats shochu by over heat steam
H08-089085 Method for making alcoholic drinks from non-steamed grain
H05-319084 Filtering machine for making sake
H06-180844 Enzyme deactivation method for liquid food
H04-322465 Alcoholic drinks production method
H06-195085 Alcoholic drinks conditioning agent and method
H05-164551 Method for making sake and fermentation control device for making sake
H06-179929 Method for making high vitamin C sake
H08-295608 Making method of sake mash by centrifuge separation and making machine
H03-036269 Method for conditioning rice for making sake and method for making sake
H04-093432 Soaking and dripping device for rice for sake
H05-254638 Pure rice sake and making method thereof
H07-036799 Method for milling rice for making sake
H04-238856 Method for steaming rice
H04-240604 Device for humidity control of polished rice
H07-083537 Method and device for rinsing and soaking finest rice

FIG. 19

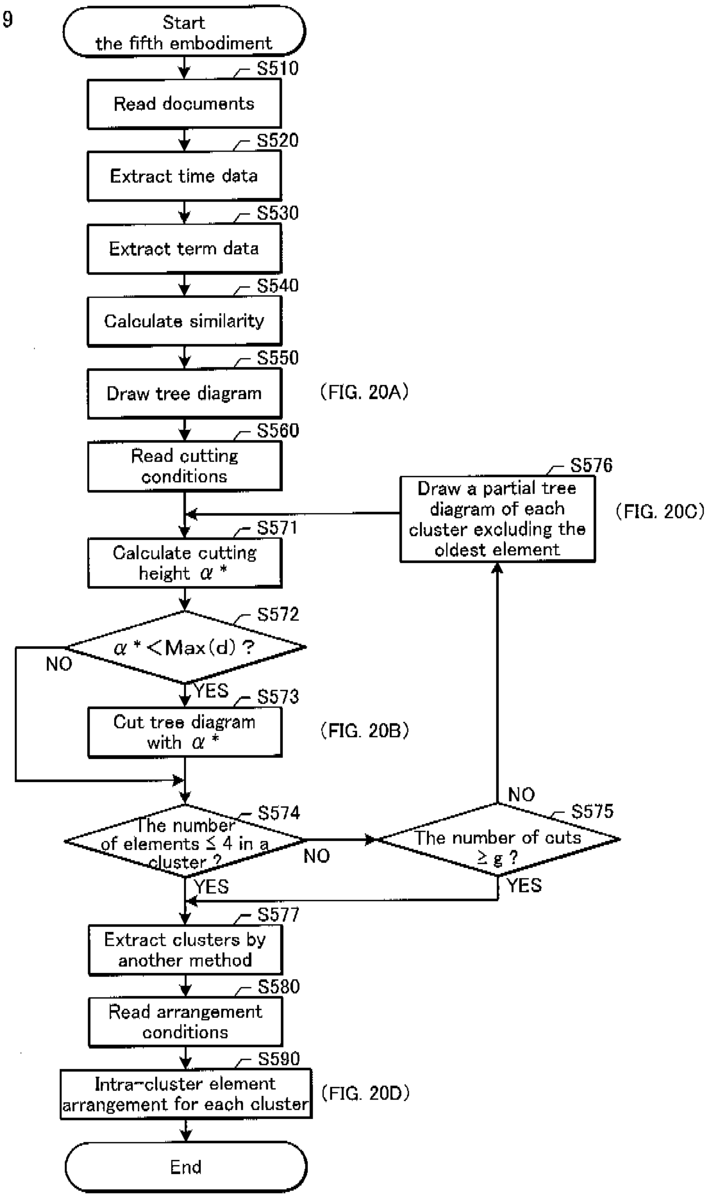
Start
the fifth embodiment
S510
Read documents
S520
Extract time data
S530
Extract term data
S540
Calculate similarity
S550
Draw tree diagram
(FIG. 20A)
S560
Read cutting conditions
S576
Draw a partial tree diagram of each cluster excluding the oldest element
(FIG. 20C)
S571
Calculate cutting height α *
S572
α * <Max(d) ?
NO
YES
S573
Cut tree diagram with α *
(FIG. 20B)
S574
The number of elements ≤ 4 in a cluster ?
NO
S575
The number of cuts ≥ g ?
NO
YES
YES
S577
Extract clusters by another method
S580
Read arrangement conditions
S590
Intra-cluster element arrangement for each cluster
(FIG. 20D)
End

FIG. 20A

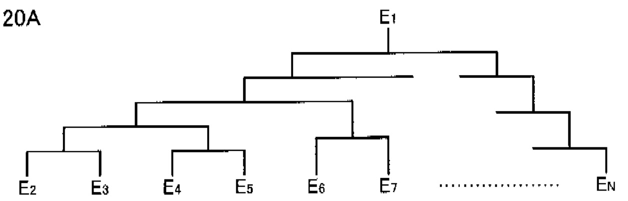


FIG. 20B

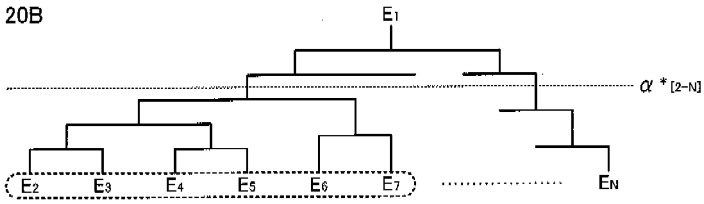


FIG. 20C

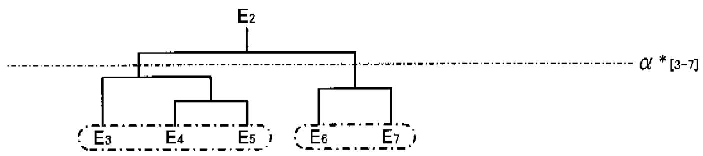


FIG. 20D

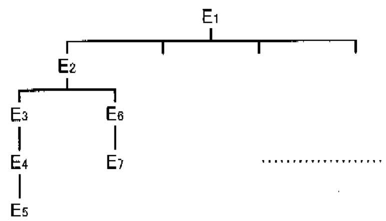

FIG. 21

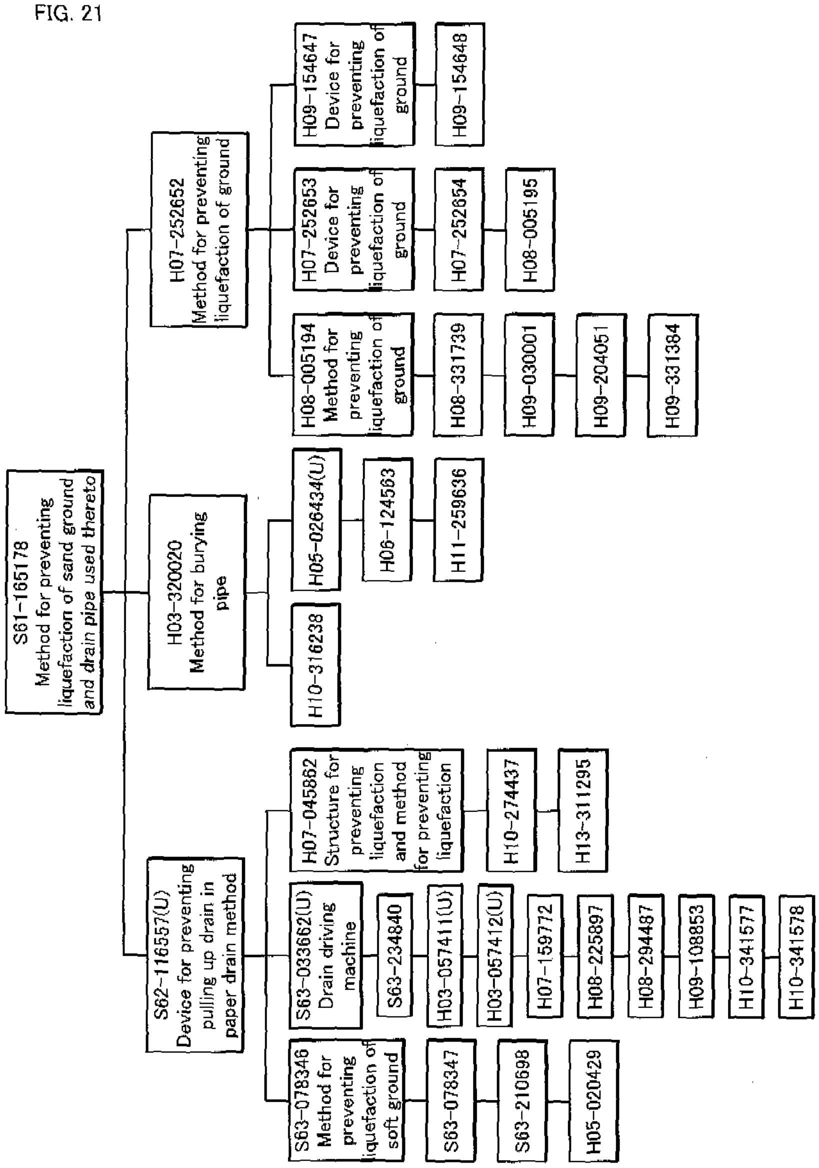
S61-165178
Method for preventing liquefaction of sand ground and drain pipe used thereto
S62-116557(U)
Device for preventing pulling up drain in paper drain method
H03-320020
Method for burying pipe
H07-252652
Method for preventing liquefaction of ground
S63-078346
Method for preventing liquefaction of soft ground
S63-078347
S63-210698
H05-020429
S63-033662(U)
Drain driving machine
S63-234840
H03-057411(U)
H03-057412(U)
H07-159772
H08-225897
H08-294487
H09-108853
H10-341577
H10-341578
H07-045862
Structure for preventing liquefaction and method for preventing liquefaction
H10-274437
H13-311295
H10-316238
H05-026434(U)
H06-124563
H11-259636
H08-005194
Method for preventing liquefaction of ground
H08-331739
H09-030001
H09-204051
H09-331384
H07-252653
Device for preventing liquefaction of ground
H07-252654
H08-005195
H09-154647
Device for preventing liquefaction of ground
H09-154648

FIG. 22

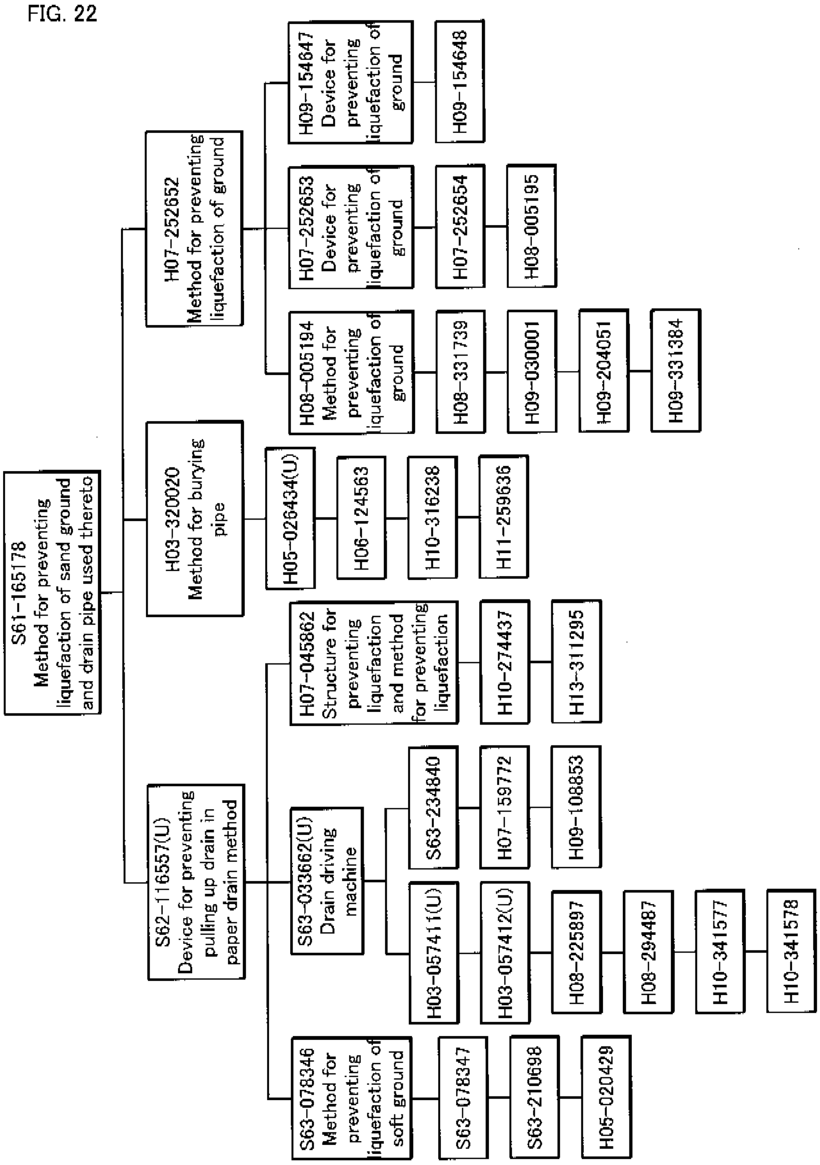
S61-165178 Method for preventing liquefaction of sand ground and drain pipe used thereto
S62-116557(U) Device for preventing pulling up drain in paper drain method
H03-320020 Method for burying pipe
H07-252652 Method for preventing liquefaction of ground
S63-078346 Method for preventing liquefaction of soft ground
S63-078347
S63-210698
H05-020429
S63-033662(U) Drain driving machine
H03-057411(U)
H03-057412(U)
H08-225897
H08-294487
H10-341577
H10-341578
S63-234840
H07-159772
H09-108853
H07-045862 Structure for preventing liquefaction and method for preventing liquefaction
H10-274437
H13-311295
H05-026434(U)
H06-124563
H10-316238
H11-259636
H08-005194 Method for preventing liquefaction of ground
H08-331739
H09-030001
H09-204051
H09-331384
H07-252653 Device for preventing liquefaction of ground
H07-252654
H08-005195
H09-154647 Device for preventing liquefaction of ground
H09-154648

FIG. 23

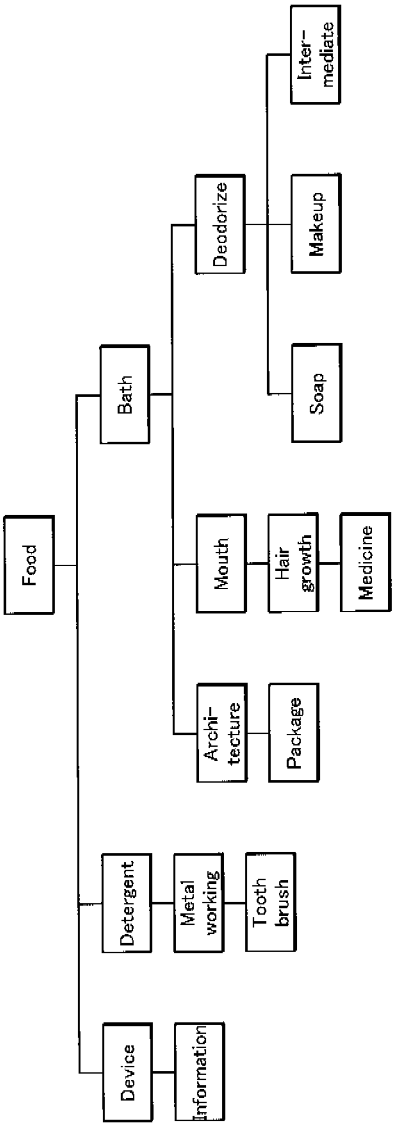
Food
Bath
Deodorize
Inter-
mediate
Makeup
Soap
Mouth
Hair
growth
Medicine
Archi-
tecture
Package
Detergent
Metal
working
Tooth
brush
Device
Information

FIG. 24

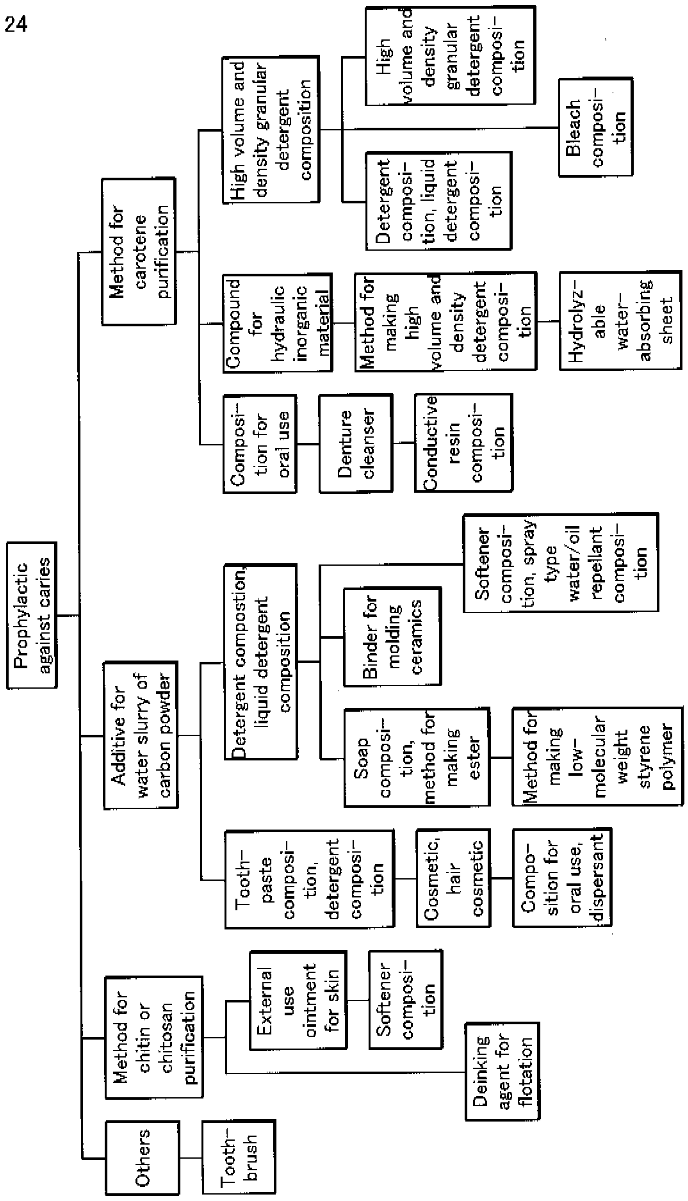
Prophylactic against caries
Method for carotene purification
High volume and density granular detergent composition
High volume and density granular detergent composition
Bleach composition
Detergent composition, liquid detergent composition
Compound for hydraulic inorganic material
Method for making high volume and density detergent composition
Hydrolyzable water-absorbing sheet
Composition for oral use
Denture cleanser
Conductive resin composition
Additive for water slurry of carbon powder
Detergent compostion, liquid detergent composition
Softener composition, spray type water/oil repellant composition
Binder for molding ceramics
Soap composition, method for making ester
Method for making low-molecular weight styrene polymer
Tooth-paste composition, detergent composition
Cosmetic, hair cosmetic
Composition for oral use, dispersant
Method for chitin or chitosan purification
External use ointment for skin
Softener composition
Deinking agent for flotation
Others
Tooth-brush

FIG. 25

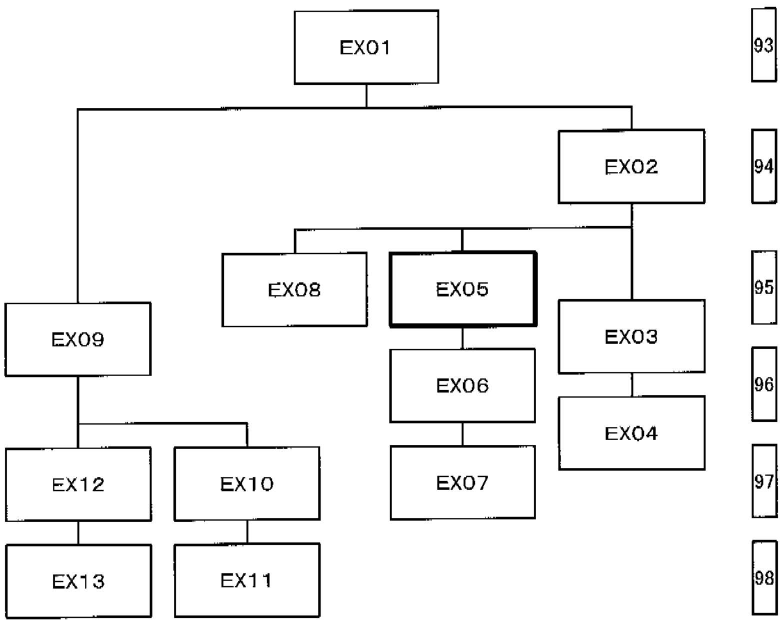
EX01
EX02
EX08
EX05
EX09
EX03
EX06
EX04
EX12
EX10
EX07
EX13
EX11
93
94
95
96
97
98

FIG. 26

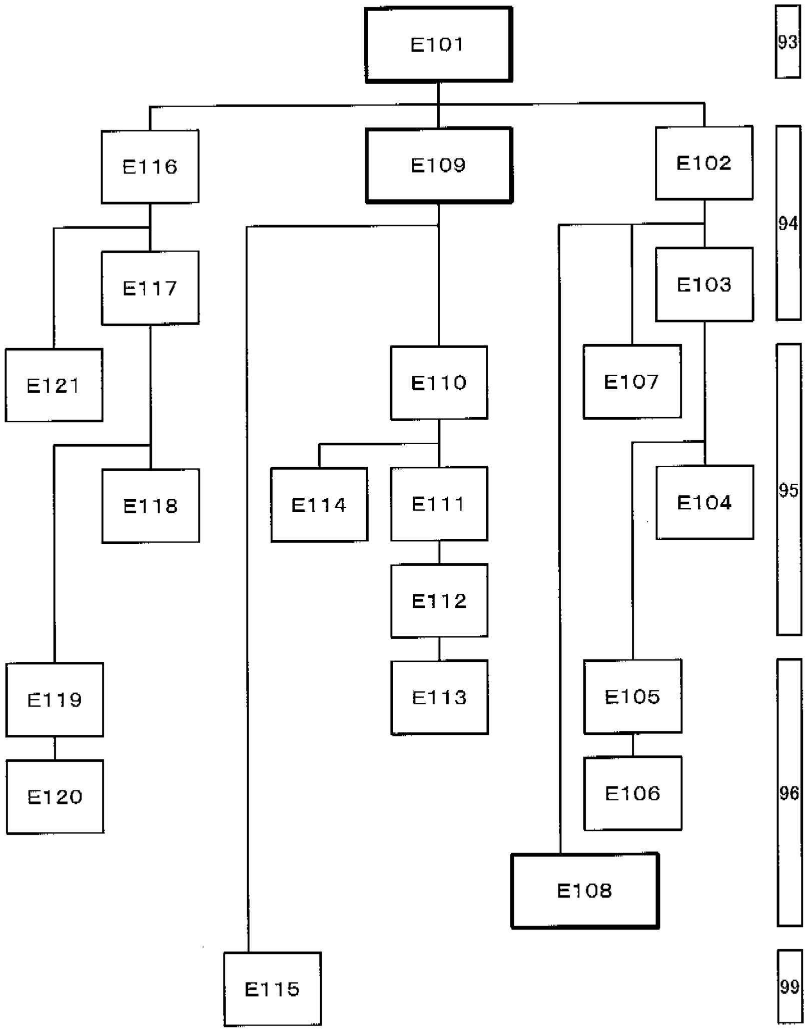
E101
E116
E109
E102
E117
E103
E121
E110
E107
E118
E114
E111
E104
E112
E119
E113
E105
E120
E106
E108
E115
93
94
95
96
99

FIG. 27

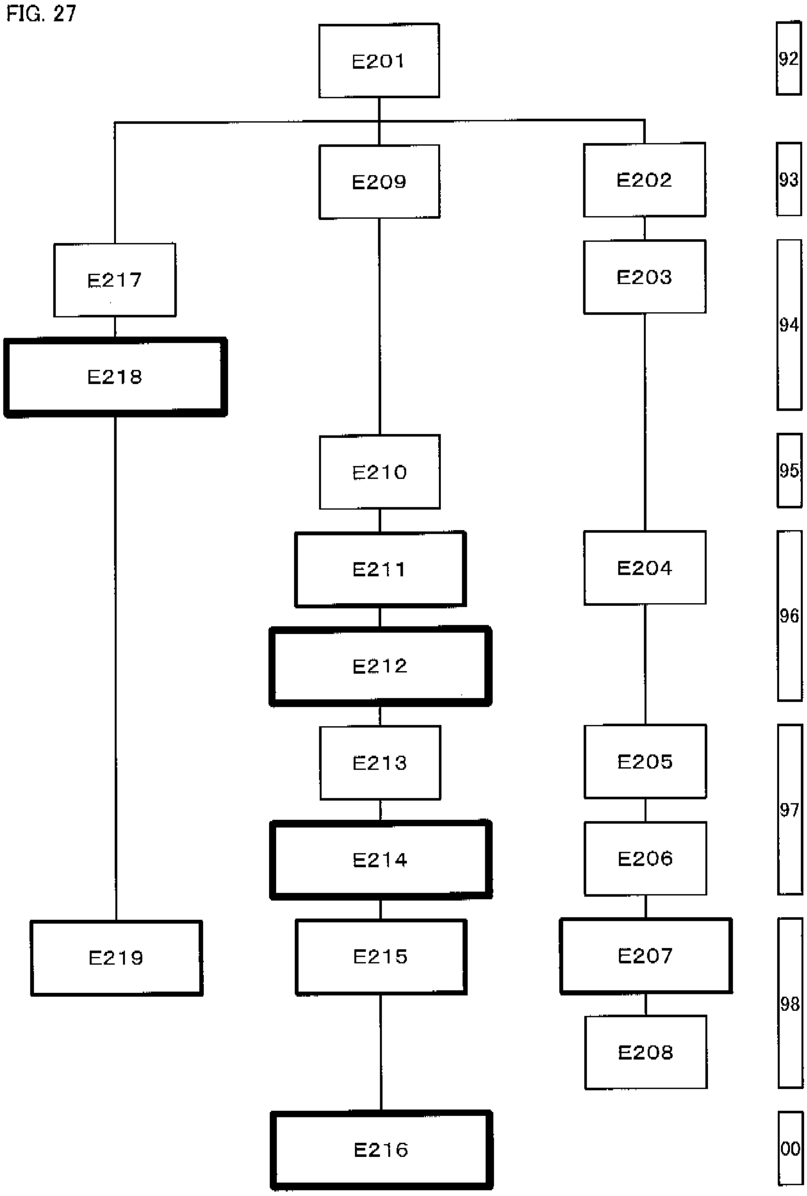
E201
E209
E202
E217
E203
E218
E210
E211
E204
E212
E213
E205
E214
E206
E219
E215
E207
E208
E216
92
93
94
95
96
97
98
00

FIG. 28

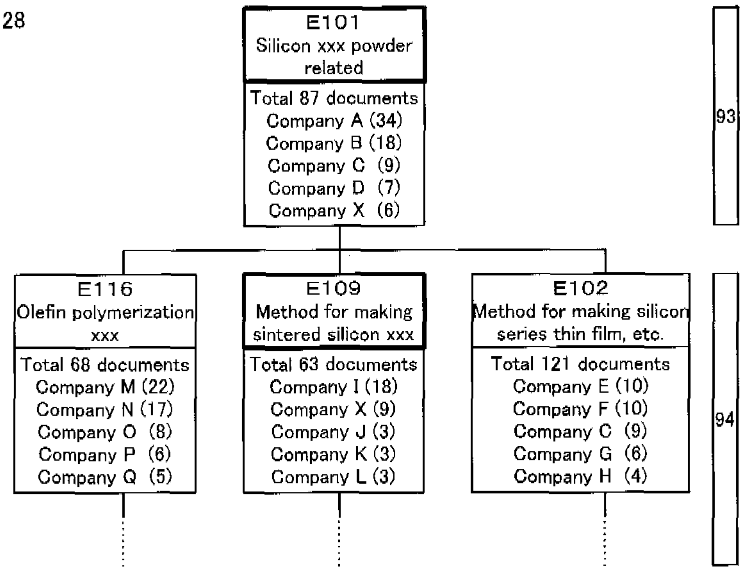
E101
Silicon xxx powder related
Total 87 documents
Company A (34)
Company B (18)
Company C (9)
Company D (7)
Company X (6)
93
E116
Olefin polymerization xxx
Total 68 documents
Company M (22)
Company N (17)
Company O (8)
Company P (6)
Company Q (5)
E109
Method for making sintered silicon xxx
Total 63 documents
Company I (18)
Company X (9)
Company J (3)
Company K (3)
Company L (3)
E102
Method for making silicon series thin film, etc.
Total 121 documents
Company E (10)
Company F (10)
Company C (9)
Company G (6)
Company H (4)
94

FIG. 29

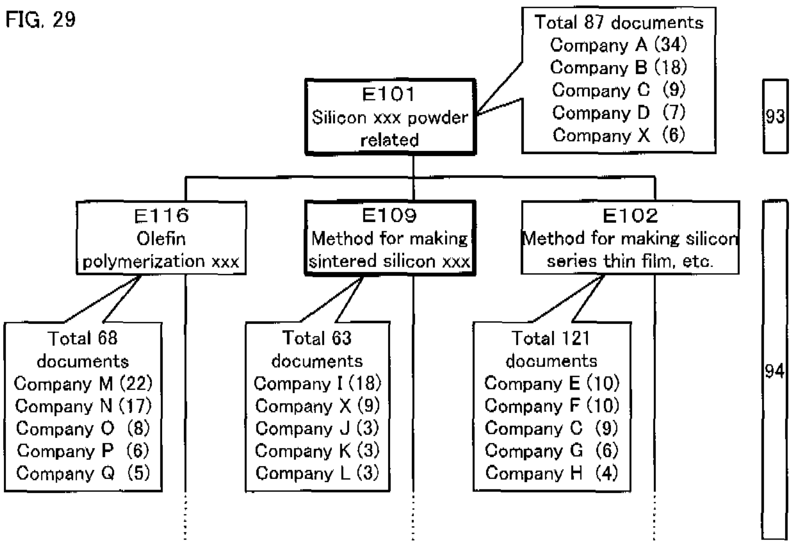
E101
Silicon xxx powder related
Total 87 documents
Company A (34)
Company B (18)
Company C (9)
Company D (7)
Company X (6)
93
E116
Olefin polymerization xxx
Total 68 documents
Company M (22)
Company N (17)
Company O (8)
Company P (6)
Company Q (5)
E109
Method for making sintered silicon xxx
Total 63 documents
Company I (18)
Company X (9)
Company J (3)
Company K (3)
Company L (3)
E102
Method for making silicon series thin film, etc.
Total 121 documents
Company E (10)
Company F (10)
Company C (9)
Company G (6)
Company H (4)
94

FIG. 30

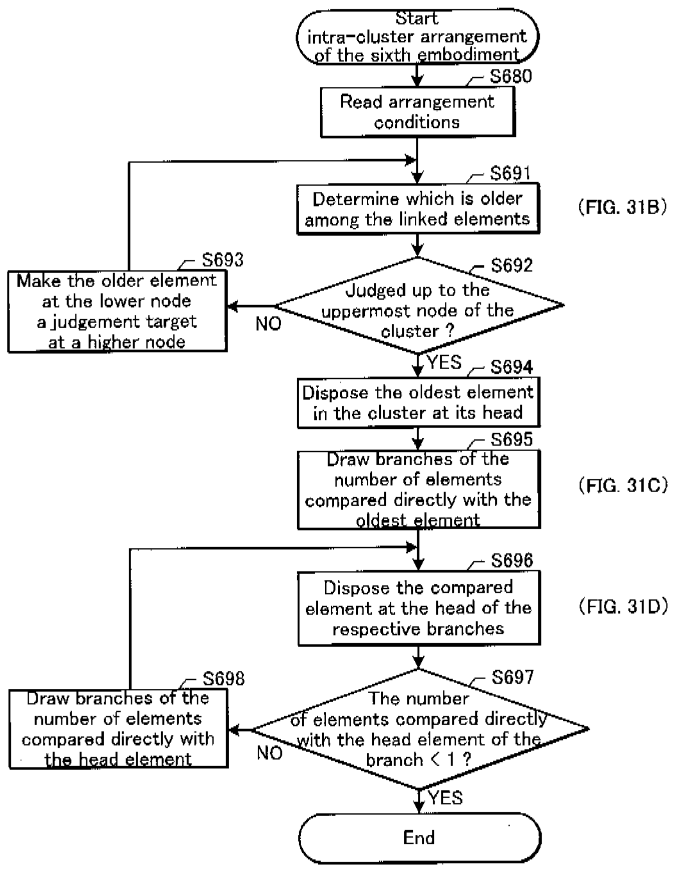
Start
intra-cluster arrangement
of the sixth embodiment
S680
Read arrangement conditions
S691
Determine which is older among the linked elements
(FIG. 31B)
S692
Judged up to the uppermost node of the cluster ?
NO
S693
Make the older element at the lower node a judgement target at a higher node
YES
S694
Dispose the oldest element in the cluster at its head
S695
Draw branches of the number of elements compared directly with the oldest element
(FIG. 31C)
S696
Dispose the compared element at the head of the respective branches
(FIG. 31D)
S697
The number of elements compared directly with the head element of the branch < 1 ?
NO
S698
Draw branches of the number of elements compared directly with the head element
YES
End

FIG. 31A

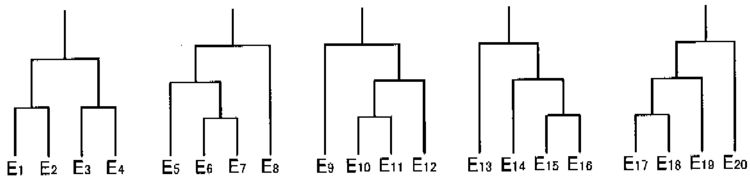


FIG. 31B

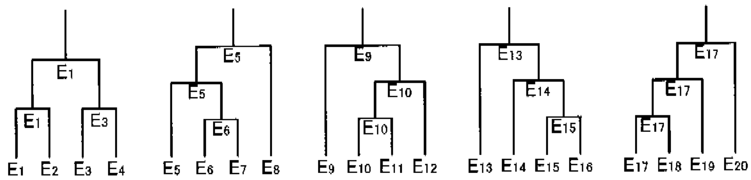


FIG. 31C

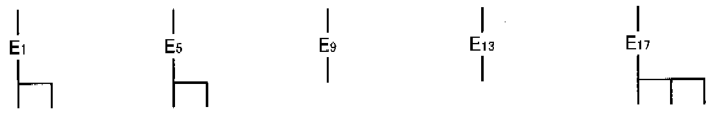


FIG. 31D

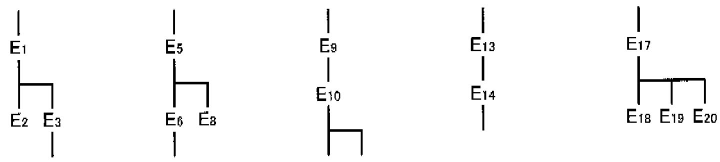


FIG. 31E

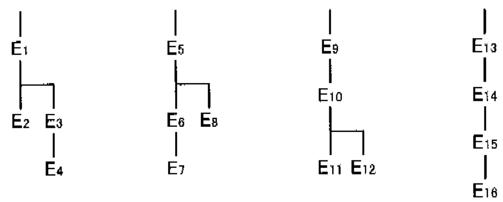

FIG. 32

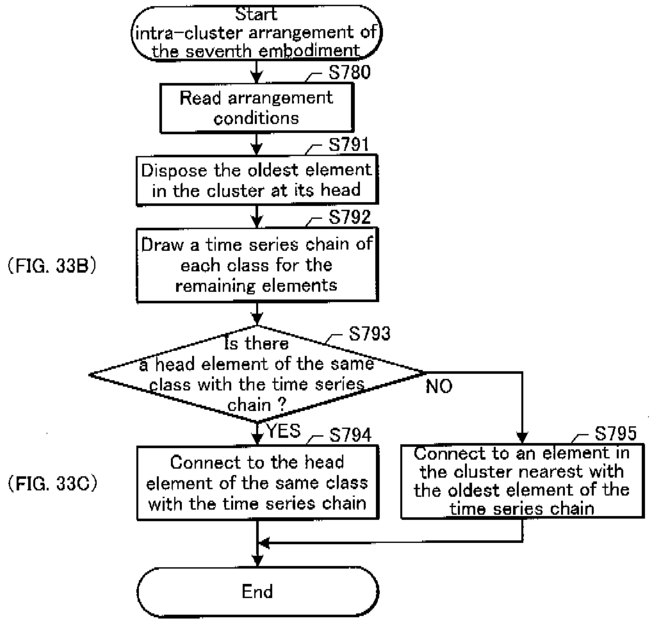


FIG. 33A

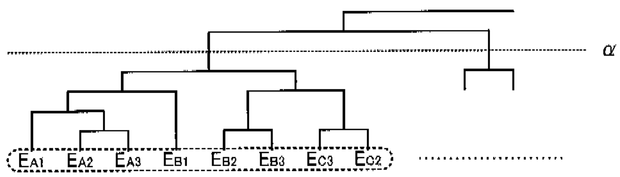


FIG. 33B

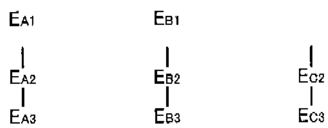


FIG. 33C

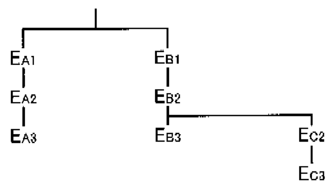

FIG. 34

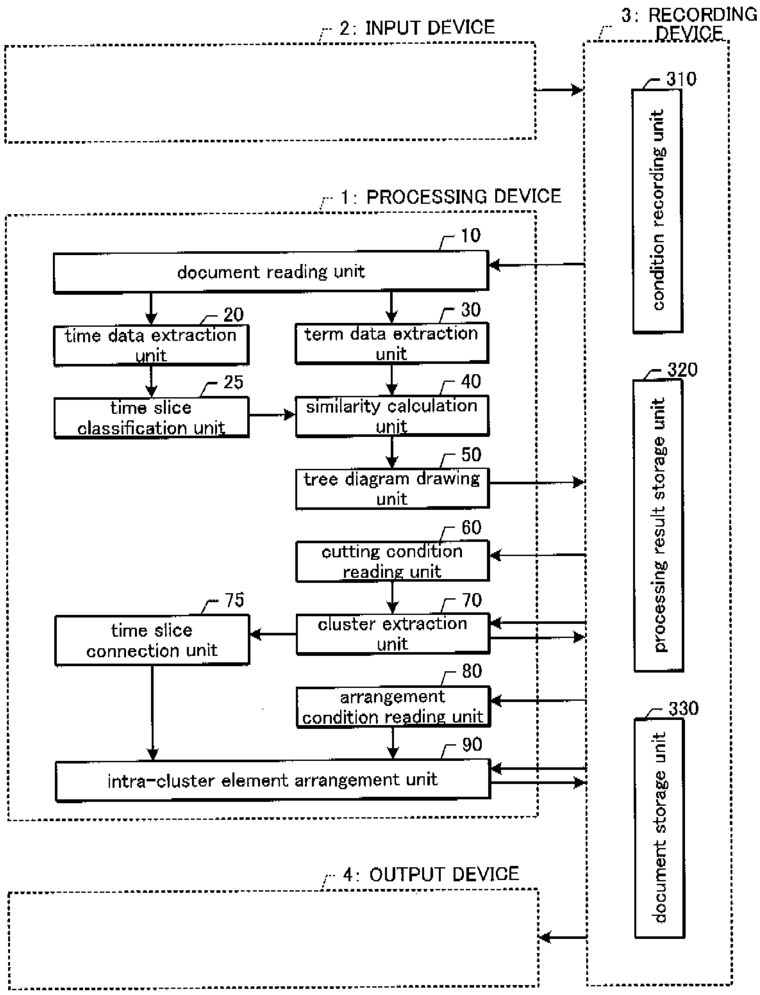
2: INPUT DEVICE
3: RECORDING DEVICE
310
condition recording unit
1: PROCESSING DEVICE
10
document reading unit
20
time data extraction unit
30
term data extraction unit
25
time slice classification unit
40
similarity calculation unit
50
tree diagram drawing unit
320
processing result storage unit
60
cutting condition reading unit
75
time slice connection unit
70
cluster extraction unit
80
arrangement condition reading unit
330
document storage unit
90
intra-cluster element arrangement unit
4: OUTPUT DEVICE

FIG. 35

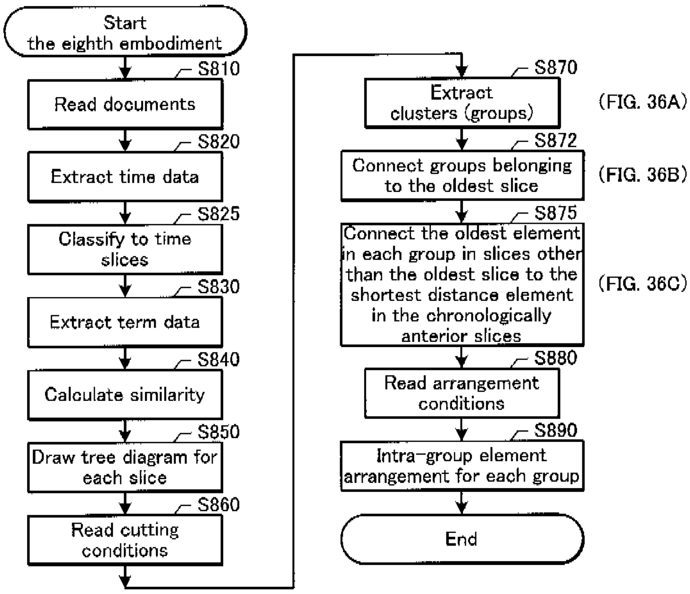
Start
the eighth embodiment
S810
Read documents
S820
Extract time data
S825
Classify to time slices
S830
Extract term data
S840
Calculate similarity
S850
Draw tree diagram for each slice
S860
Read cutting conditions
S870
Extract clusters (groups)
(FIG. 36A)
S872
Connect groups belonging to the oldest slice
(FIG. 36B)
S875
Connect the oldest element in each group in slices other than the oldest slice to the shortest distance element in the chronologically anterior slices
(FIG. 36C)
S880
Read arrangement conditions
S890
Intra-group element arrangement for each group
End

FIG. 36A

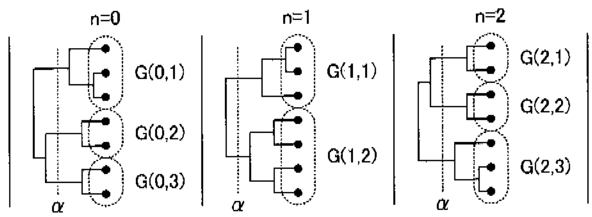


FIG. 36B

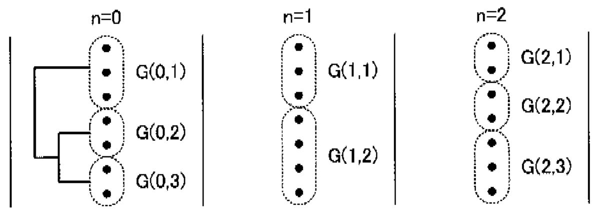


FIG. 36C

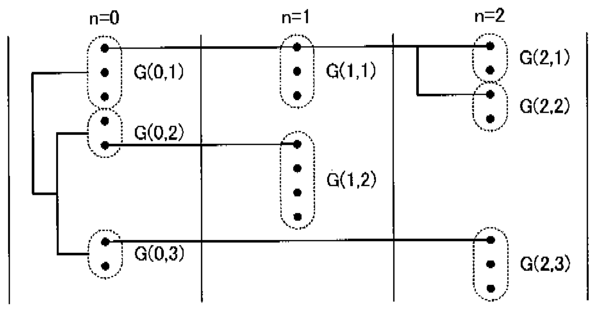

FIG. 37A

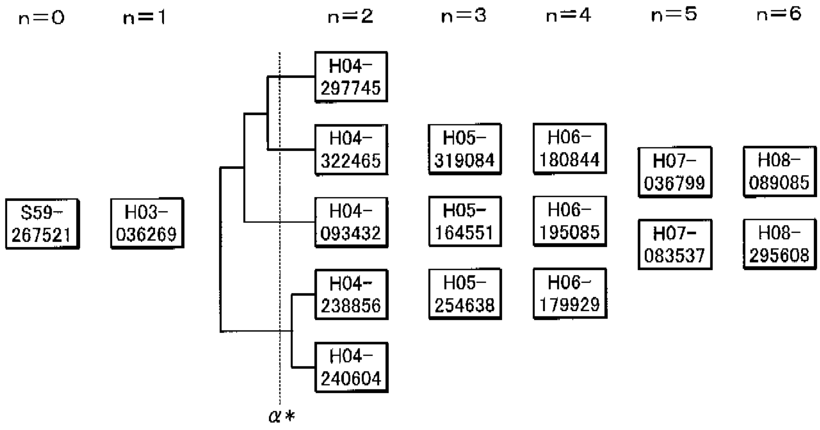


FIG. 37B

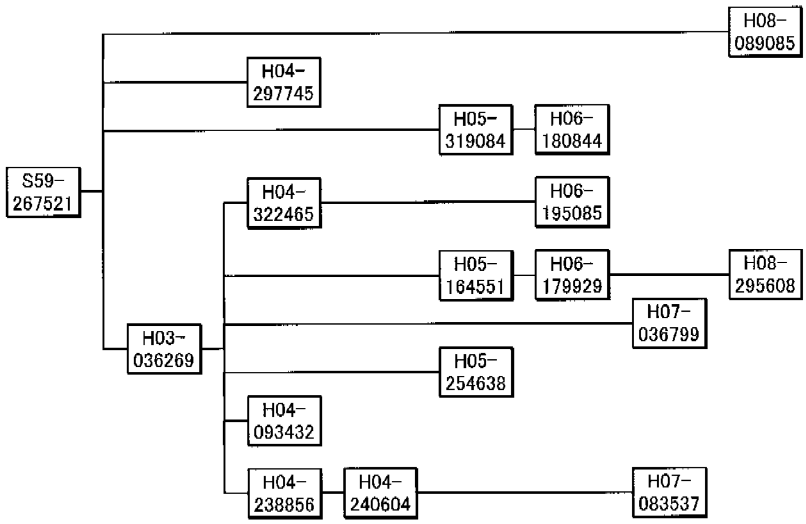

FIG. 38A

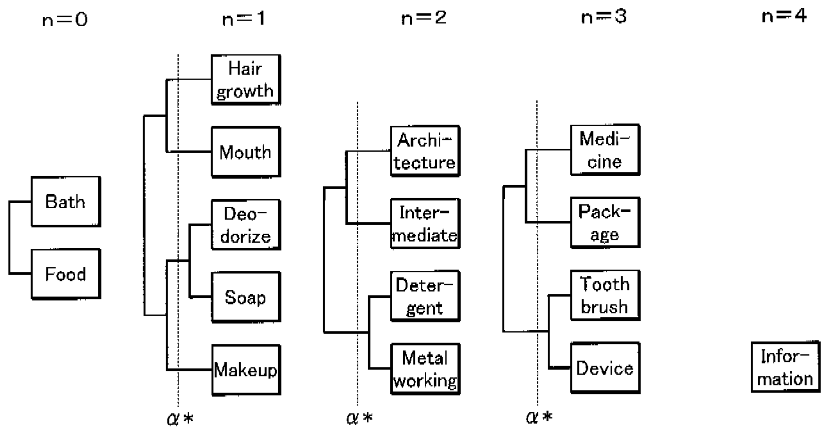


FIG. 38B

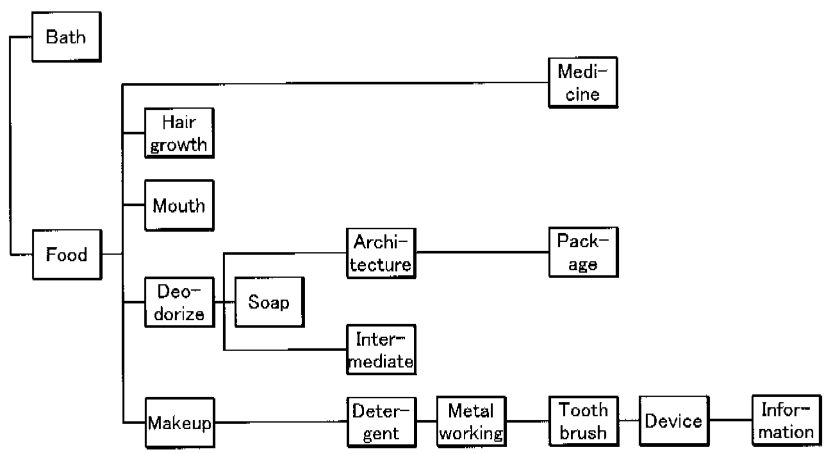

FIG. 39A

n=2

| ρ* =0.987 | H04-297745 | H04-322465 | H04-093432 | H04-238856 | H04-240604 |
|---|---|---|---|---|---|
| H04-297745 | 0 | 0 | 0 | 0 | 0 |
| H04-322465 | 0 | 0 | 0 | 0 | 0 |
| H04-093432 | 0 | 0 | 0 | 0 | 0 |
| H04-238856 | 0 | 0 | 0 | 0 | 0.844 |
| H04-240604 | 0 | 0 | 0 | 0.844 | 0 |

n=3

| ρ* =1.082 | H05-319084 | H05-164551 | H05-254638 |
|---|---|---|---|
| H05-319084 | 0 | 0 | 0 |
| H05-164551 | 0 | 0 | 1.077 |
| H05-254638 | 0 | 1.077 | 0 |

n=4

| ρ* =1.174 | H06-180844 | H06-195085 | H06-179929 |
|---|---|---|---|
| H06-180844 | 0 | 0 | 0 |
| H06-195085 | 0 | 0 | 0 |
| H06-179929 | 0 | 0 | 0 |

FIG. 39B

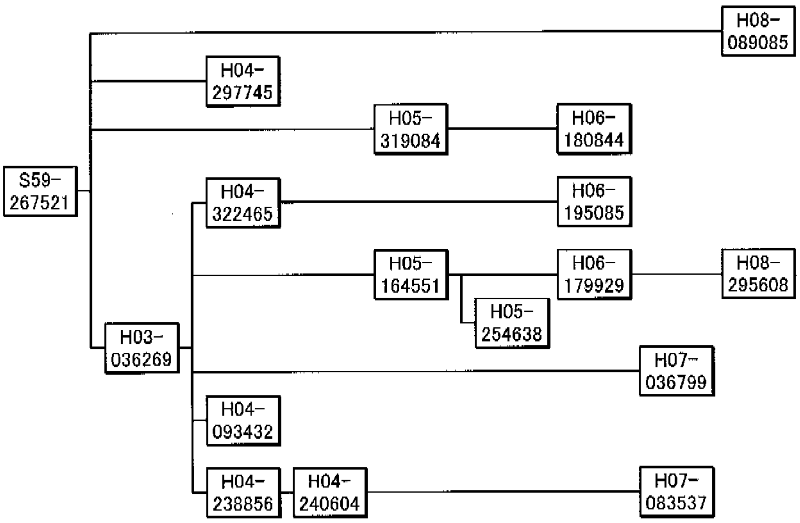

FIG. 40A

n=1

| ρ* =0.930 | Hair growth | Mouth | Deo-dorize | Soap | Makeup |
|---|---|---|---|---|---|
| Hair growth | 0 | 0 | 0 | 0 | 0 |
| Mouth | 0 | 0 | 0 | 0 | 0 |
| Deo-dorize | 0 | 0 | 0 | 0.870 | 0.890 |
| Soap | 0 | 0 | 0.870 | 0 | 0 |
| Makeup | 0 | 0 | 0.890 | 0 | 0 |

n=2

| ρ* =0.893 | Archi-tecture | Inter-mediate | Deter-gent | Metal working |
|---|---|---|---|---|
| Archi-tecture | 0 | 0 | 0 | 0 |
| Inter-mediate | 0 | 0 | 0 | 0 |
| Deter-gent | 0 | 0 | 0 | 0.810 |
| Metal working | 0 | 0 | 0.810 | 0 |

n=3

| ρ* =0.963 | Medi-cine | Pack-age | Tooth brush | Device |
|---|---|---|---|---|
| Medi-cine | 0 | 0 | 0 | 0 |
| Pack-age | 0 | 0 | 0 | 0 |
| Tooth brush | 0 | 0 | 0 | 0.915 |
| Device | 0 | 0 | 0.915 | 0 |

FIG. 40B

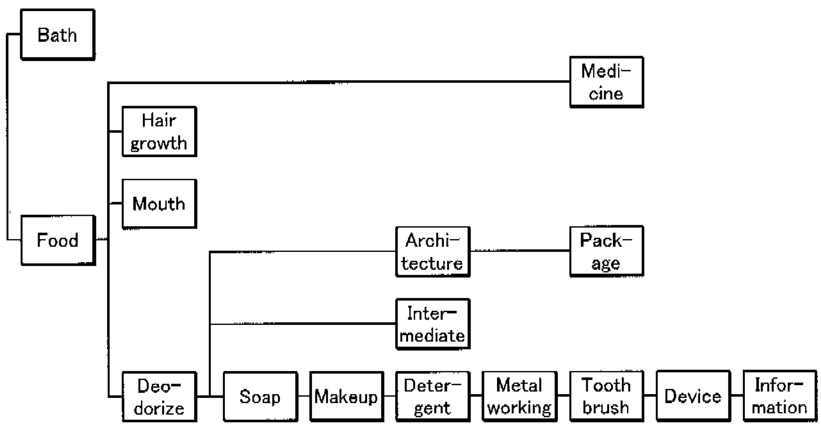

**INTERNATIONAL SEARCH REPORT**

International application No.
PCT/JP2005/016785

A. CLASSIFICATION OF SUBJECT MATTER
*G06F17/30* (2006.01)

According to International Patent Classification (IPC) or to both national classification and IPC

B. FIELDS SEARCHED

Minimum documentation searched (classification system followed by classification symbols)
*G06F17/30* (2006.01)

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2572308 B2 (Telematique Internatinal Laboratories), 24 October, 1996 (24.10.96), Full text; all drawings (Family: none) | 1-14,16-17 |
| A | JP 2002-163275 A (Matsushita Electric Industrial Co., Ltd.), 07 June, 2002 (07.06.02), Full text; all drawings (Family: none) | 1-14,16-17 |
| A | Koichi TAKEDA, Hiroshi MIYAMA, "Text Joho no Kashika o Riyo shita Joho Kensaku", Joho Shori, 15 April, 2000 (15.04.00), Vol.41, No.4, pages 343 to 350, ISSN 0447-8053 | 1-14,16-17 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 24 October, 2005 (24.10.05) | 01 November, 2005 (01.11.05) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2005/016785

C (Continuation). DOCUMENTS CONSIDERED TO BE RELEVANT

| Category* | Citation of document, with indication, where appropriate, of the relevant passages | Relevant to claim No. |
|---|---|---|
| A | JP 2000-242652 A (Nippon Telegraph And Telephone Corp.), 08 September, 2000 (08.09.00), Full text; all drawings (Family: none) | 15 |
| A | JP 7-319905 A (Fujitsu Ltd.), 08 December, 1995 (08.12.95), Full text; all drawings (Family: none) | 15 |
| A | JP 2002-163275 A (Matsushita Electric Industrial Co., Ltd.), 07 June, 2002 (07.06.02), Full text; all drawings (Family: none) | 15 |

Form PCT/ISA/210 (continuation of second sheet) (April 2005)

**INTERNATIONAL SEARCH REPORT**

International application No.
PCT/JP2005/16785

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

See extra sheet.

1. ☒ As all required additional search fees were timely paid by the applicant, this international search report covers all searchable claims.
2. ☐ As all searchable claims could be searched without effort justifying an additional fee, this Authority did not invite payment of any additional fee.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee..

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (April 2005)

**INTERNATIONAL SEARCH REPORT**

International application No.
PCT/JP2005/16785

Continuation of Box No.III of continuation of first sheet(2)

<<Continuation of Box No.III>>

The technical feature of claims 1-14, 16-17 is to comprise "dendrogram drawing means for drawing a dendrogram showing the correlation between document elements according to the content data on the document elements, clustering means for cutting the dendrogram according to a predetermined rule and extracting clusters, and intra-cluster arranging means for determining the arrangement of the document element group belonging to the clusters in the clusters according to the time data on the document elements".

The technical feature of claim 15 is to comprise "time slice classifying means for classifying document elements into time slices according to the time data on the document elements, clustering means for extracting clusters from the time slices according to the content data on the document elements belonging to the time slices, and time slice wire-interconnecting means for wire-interconnecting clusters belonging to different time slices".

Therefore, there is no technical feature common to two groups of claims. Consequently, the number of inventions defined in the claims is two.

<<End of Continuation of Box No.III>>

<<Concerning Subject Matter of International Search of Claim 15>>

The invention of claim 15 is a matter including all time slice wire-interconnecting means having a desired characteristic, that is, "time slice wire-interconnecting means for wire-interconnecting clusters belonging to different time slices". However, only time slice wire-interconnecting means for wire-interconnecting, out of the elements of the time forward groups mentioned in the description or the groups, the elements or groups having the highest similarity is disclosed within the meaning of PCT Article 5. Therefore, the support within the meaning of PCT Article 6 is lacking.

Consequently, the international search has been made on the scope supported by and disclosed in the description, that is, the document correlation diagram drawing device, which is specifically explained in the description, comprising time slice wire-interconnecting, out of the elements of the time forward groups or the groups, the elements or groups having the highest similarity.

<<End of Examination of Subject Matter of International Search of Claim 15>>

Form PCT/ISA/210 (extra sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H1153387 A
- JP H1153387 B
- JP H03320020 B
- JP S63033662 U